# EUROPEAN PATENT APPLICATION

(11) **EP 4 654 509 A1**
(43) Date of publication of application: **26.11.2025**
(21) Application number: 23916778.6
(22) Date of filing: 19.01.2023
(51) Int. Cl.: H04L 5/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); LUO, Chaoming, Dongguan, Guangdong 523860 (CN); LU, Liuming, Dongguan, Guangdong 523860 (CN)
(74) Representative: Mewburn Ellis LLP
(86) International application number: PCT/CN2023/073133
(87) International publication number: WO 2024/152297

(57) **Abstract**

A wireless communication method and a device are provided. As such, it is possible to realize multi-access point multi-link device (AP MLD) joint channel sounding, multi-AP MLD coordinated transmission, data sharing between multiple AP MLDs, and/or seamless roaming of a non-AP MLD.

## Description

### TECHNICAL FIELD

Embodiments of the disclosure relate to the field of communication, and more particularly, to a wireless communication method and a device.

### BACKGROUND

With evolution of technology, access point multi-link device (AP MLD) capability cannot meet transmission requirements. How to improve the AP MLD capability to meet transmission requirements is a problem to be solved.

### SUMMARY

Embodiments of the disclosure provide a wireless communication method and a device. As such, it is possible to realize multi-access point multi-link device (AP MLD) joint channel sounding, multi-AP MLD coordinated transmission, data sharing between multiple AP MLDs, and/or seamless roaming of a non-AP MLD.

In a first aspect, a wireless communication method is provided. The method includes the following. A first AP MLD sends or receives a multi-AP MLD sounding announce frame. The multi-AP MLD sounding announce frame indicates at least one of: a sequence in which multiple AP MLDs perform channel sounding, a time at which the multiple AP MLDs perform channel sounding, information of links used for the multiple AP MLDs to perform channel sounding, information of a frequency band used for the multiple AP MLDs to perform channel sounding, or information of a channel corresponding to the links and/or the frequency band used for the multiple AP MLDs to perform channel sounding. The first AP MLD belongs to a first virtual AP MLD, and multiple AP MLDs in the first virtual AP MLD are capable of multi-AP MLD coordinated transmission.

In a second aspect, a wireless communication method is provided. The method includes the following. A first non-AP MLD receives a first frame sent by a first AP MLD. The first frame is sent by the first AP MLD according to information indicated by a multi-AP MLD sounding announce frame, the first non-AP MLD is a non-AP MLD associated with the first AP MLD in all non-AP MLDs that participate in the multi-AP MLD channel sounding, the first AP MLD belongs to a first virtual AP MLD, multiple AP MLDs in the first virtual AP MLD are capable of multi-AP MLD coordinated transmission, and the first frame is a null data physical layer protocol data unit announcement (null data PPDU announcement, NDPA) frame or a sounding trigger frame. The multi-AP MLD sounding announce frame indicates at least one of: a sequence in which multiple AP MLDs perform channel sounding, a time at which the multiple AP MLDs perform channel sounding, information of links used for the multiple AP MLDs to perform channel sounding, information of a frequency band used for the multiple AP MLDs to perform channel sounding, or information of a channel corresponding to the links and/or the frequency band used for the multiple AP MLDs to perform channel sounding. If the first frame is an NDPA frame, the NDPA frame indicates a parameter and configuration information of an NDP frame to be sent. If the first frame is a sounding trigger frame, the sounding trigger frame is used for triggering or requesting the first non-AP MLD to feed back a sounding result.

In a third aspect, a wireless communication method is provided. The method includes the following. A first AP MLD sends first information to the first non-AP MLD. The first AP MLD belongs to a first virtual AP MLD, multiple AP MLDs in the first virtual AP MLD are capable of multi-AP MLD coordinated transmission, and the first information is used for requesting or indicating the first non-AP MLD to re-map data on *s* links to *w* links, where *s* and *w* each are a positive integer.

In a fourth aspect, a wireless communication method is provided. The method includes the following. A first non-AP MLD receives first information sent by a first AP MLD. The first AP MLD belongs to a first virtual AP MLD, multiple AP MLDs in the first virtual AP MLD are capable of multi-AP MLD coordinated transmission, and the first information is used for requesting or indicating the first non-AP MLD to re-map data on *s* links to *w* links, where *s* and *w* each are a positive integer.

In a fifth aspect, a wireless communication method is provided. The method includes the following. A first AP MLD sends a data sharing announce frame to at least one AP MLD, where the first AP MLD and the at least one AP MLD belong to a first virtual AP MLD, multiple AP MLDs in the first virtual AP MLD are capable of multi-AP MLD coordinated transmission, and the data sharing announce frame indicates information of a link for transmitting shared data and a non-AP MLD that the shared data belongs to. The first AP MLD sends the shared data the shared data on the link indicated by the data sharing announce frame.

In a sixth aspect, a wireless communication method is provided. The method includes the following. A second AP MLD receives a data sharing announce frame sent by a first AP MLD, where the first AP MLD and the second AP MLD belong to a first virtual AP MLD, multiple AP MLDs in the first virtual AP MLD are capable of multi-AP MLD coordinated transmission, and the data sharing announce frame indicates information of a link for transmitting shared data and a non-AP MLD that the shared data belongs to. The second AP MLD receives the shared data that is sent by the first AP MLD on the link indicated by the data sharing announce frame.

In a seventh aspect, a wireless communication method is provided. The method includes the following. A first AP MLD sends a multi-AP MLD transmit (TX) trigger frame to at least one AP MLD, where the first AP MLD and the at least one AP MLD belong to a first virtual AP MLD, multiple AP MLDs in the first virtual AP MLD are capable of multi-AP MLD coordinated transmission, the at least one AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

In an eighth aspect, a wireless communication method is provided. The method includes the following. A second AP MLD receives a multi-AP MLD TX trigger frame sent by a first AP MLD, where the first AP MLD and the second AP MLD belong to a first virtual AP MLD, multiple AP MLDs in the first virtual AP MLD are capable of multi-AP MLD coordinated transmission, the second AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

In a ninth aspect, a wireless communication method is provided. The method comprising. A first AP sends or receives a multi-AP sounding announce frame. The multi-AP sounding announce frame indicates at least one of: a sequence in which multiple APs perform channel sounding, a time at which the multiple APs perform channel sounding, information of links used for the multiple APs to perform channel sounding, information of a frequency band used for the multiple APs to perform channel sounding, or information of a channel corresponding to the links and/or the frequency band used for the multiple APs to perform channel sounding. The first AP belongs to a second virtual AP MLD, multiple APs in the second virtual AP MLD are capable of multi-AP coordinated transmission, and the multiple APs are affiliated APs which are non-collocated in the second virtual AP MLD.

In a tenth aspect, a wireless communication method is provided. The method includes the following. A first non-AP MLD receives a second frame sent by a first AP. The second frame is sent by the first AP according to information indicated by a multi-AP sounding announce frame, the first non-AP MLD is a non-AP MLD associated with the first AP in all non-AP MLDs participating in multi-AP channel sounding, the first AP belongs to a second virtual AP MLD, multiple APs in the second virtual AP MLD are capable of multi-AP coordinated transmission, the multiple APs are affiliated APs non-collocated in the second virtual AP MLD, and the second frame is an NDPA frame or a sounding trigger frame. The multi-AP sounding announce frame indicates at least one of: a sequence in which plurality of APs perform channel sounding, a time at which the multiple APs perform channel sounding, information of links used for the multiple APs to perform channel sounding, information of a frequency band used for the multiple APs to perform channel sounding, or information of a channel corresponding to the links and/or the frequency band used for the multiple APs to perform channel sounding. If the second frame is an NDPA frame, the NDPA frame indicates a parameter and configuration information of an NDP frame to be sent. If the second frame is a sounding trigger frame, the sounding trigger frame is used for triggering or requesting the first non-AP MLD to feed back a sounding result.

In an eleventh aspect, a wireless communication method is provided. The method includes the following. A first AP sends first information to a first non-AP MLD. The first information is used for requesting or indicating the first non-AP MLD to re-map data on *s* links to *w* link, the first AP belongs to a second virtual AP MLD, and multiple APs in the second virtual AP MLD are capable of multi-AP coordinated transmission, and the multiple APs are affiliated APs non-collocated in the second virtual AP MLD, where *s* and *w* each are a positive integer.

In a twelfth aspect, a wireless communication method is provided. The method includes the following. A first non-AP MLD receives first information sent by a first AP. The first information is used for requesting or indicating the first non-AP MLD to re-map data on *s* links to *w* link, the first AP belongs to a second virtual AP MLD, and multiple APs in the second virtual AP MLD are capable of multi-AP coordinated transmission, and the multiple APs are affiliated APs non-collocated in the second virtual AP MLD, where *s* and *w* each are a positive integer.

In a thirteenth aspect, a wireless communication method is provided. The method includes the following. A first AP sends a data sharing announce frame to at least one AP, where the first AP and the at least one AP belong to a second virtual AP MLD, multiple APs in the second virtual AP MLD are capable of multi-AP coordinated transmission, the multiple APs are affiliated APs non-collocated in the second virtual AP MLD, and the data sharing announce frame indicates information of a link for transmitting shared data and a non-AP MLD that the shared data belongs to. The first AP sends the shared data on the link indicated by the data sharing announce frame.

In a fourteenth aspect, a wireless communication method is provided. The method includes the following. A second AP receives a data sharing announce frame sent by a first AP, where the first AP and the second AP belong to a second virtual AP MLD, multiple APs in the second virtual AP MLD are capable of multi-AP coordinated transmission, the multiple APs are affiliated APs non-collocated in the second virtual AP MLD, and the data sharing announce frame indicates information of a link for transmitting shared data and a non-AP MLD that the shared data belongs to. The second AP receives the shared data that is sent by the first AP on the link indicated by the data sharing announce frame.

In a fifteenth aspect, a wireless communication method is provided. The method includes the following. A first AP sends a multi-AP TX trigger frame to at least one AP. The first AP and the at least one AP belong to a second virtual AP MLD, multiple APs in the second virtual AP MLD are capable of multi-AP coordinated transmission, the multiple APs are affiliated APs non-collocated in the second virtual AP MLD, the at least one AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

In a sixteenth aspect, a wireless communication method is provided. The method includes the following. A second AP receives a multi-AP TX trigger frame sent by a first AP. The first AP and the second AP belong to a second virtual AP MLD) multiple APs in the second virtual AP MLD are capable of multi-AP coordinated transmission, the multiple APs are affiliated APs non-collocated in the second virtual AP MLD, the second AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

In a seventeenth aspect, an AP MLD is provided. The AP MLD is configured to perform the method in the first aspect. Specifically, the AP MLD includes functional modules for performing the method in the first aspect described above.

In an eighteenth aspect, a non-AP MLD is provided. The non-AP MLD is configured to perform the method in the second aspect. Specifically, the non-AP MLD includes functional modules for performing the methods in the second aspect described above.

In a nineteenth aspect, an AP MLD is provided. The AP MLD is configured to perform the method in the third aspect. Specifically, the AP MLD includes functional modules for performing the method in the third aspect described above.

In a twentieth aspect, a non-AP MLD is provided. The non-AP MLD is configured to perform the method in the fourth aspect. Specifically, the non-AP MLD includes functional modules for performing the method in the fourth aspect described above.

In a twenty-first aspect, an AP MLD is provided. The AP MLD is configured to perform the method in the fifth aspect. Specifically, the AP MLD includes functional modules for performing the method in the fifth aspect described above.

In a twenty-second aspect, an AP MLD is provided. The AP MLD is configured to perform the method in the sixth aspect. Specifically, the AP MLD includes functional modules for performing the method in the sixth aspect described above.

In a twenty-third aspect, an AP MLD is provided. The AP MLD is configured to perform the method in the seventh aspect. Specifically, the AP MLD includes functional modules for performing the method in the seventh aspect described above.

In a twenty-fourth aspect, an AP MLD is provided. The AP MLD is configured to perform the method in the eighth aspect. Specifically, the AP MLD includes functional modules for performing the method in the eighth aspect described above.

In a twenty-fifth aspect, an AP is provided. The AP is configured to perform the method in the ninth aspect. Specifically, the AP includes functional modules for performing the method in the ninth aspect described above.

In a twenty-sixth aspect, a non-AP MLD is provided. The non-AP MLD is configured to perform the method in the tenth aspect. Specifically, the non-AP MLD includes functional modules for performing the method in the tenth aspect described above.

In a twenty-seventh aspect, an AP is provided. The AP is configured to perform the method in the eleventh aspect. Specifically, the AP includes functional modules for performing the method in the eleventh aspect described above.

In a twenty-eighth aspect, a non-AP MLD is provided. The non-AP MLD is configured to perform the method in the twelfth aspect. Specifically, the non-AP MLD includes functional modules for performing the method in the twelfth aspect described above.

In a twenty-ninth aspect, an AP is provided. The AP is configured to perform the method in the thirteenth aspect. Specifically, the AP includes functional modules for performing the method in the thirteenth aspect described above.

In a thirtieth aspect, an AP is provided. The AP is configured to perform the method in the fourteenth aspect. Specifically, the AP includes functional modules for performing the method in the fourteenth aspect described above.

In a thirty-first aspect, an AP is provided. The AP is configured to perform the method in the fifteenth aspect. Specifically, the AP includes functional modules for performing the method in the fifteenth aspect described above.

In a thirty-second aspect, an AP is provided. The AP is configured to perform the method in the sixteenth aspect. Specifically, the AP includes functional modules for performing the method in the sixteenth aspect described above.

In a thirty-third aspect, an AP MLD is provided. The AP MLD includes a processor and a memory. The memory is configured to store computer programs. The processor is configured to invoke and execute the computer programs stored in the memory, to cause the AP MLD to perform the method in the first aspect described above.

In a thirty-fourth aspect, a non-AP MLD is provided. The non-AP MLD includes a processor and a memory. The memory is configured to store computer programs. The processor is configured to invoke and execute the computer programs stored in the memory, to cause the non-AP MLD to perform the method in the second aspect described above.

In a thirty-fifth aspect, an AP MLD is provided. The AP MLD includes a processor and a memory. The memory is configured to store computer programs. The processor is configured to invoke and execute the computer programs stored in the memory, to cause the AP MLD to perform the method in the third aspect described above.

In a thirty-sixth aspect, a non-AP MLD is provided. The non-AP MLD includes a processor and a memory. The memory is configured to store computer programs. The processor is configured to invoke and execute the computer programs stored in the memory, to cause the non-AP MLD to perform the method in the fourth aspect described above.

In a thirty-seventh aspect, an AP MLD is provided. The AP MLD includes a processor and a memory. The memory is configured to store computer programs. The processor is configured to invoke and execute the computer programs stored in the memory, to cause the AP MLD to perform the method in the fifth aspect described above.

In a thirty-eighth aspect, an AP MLD is provided. The AP MLD includes a processor and a memory. The memory is configured to store computer programs. The processor is configured to invoke and execute the computer programs stored in the memory, to cause the AP MLD to perform the method in the sixth aspect described above.

In a thirty-ninth aspect, an AP MLD is provided. The AP MLD includes a processor and a memory. The memory is configured to store computer programs. The processor is configured to invoke and execute the computer programs stored in the memory, to cause the AP MLD to perform the method in the seventh aspect described above.

In a fortieth aspect, an AP MLD is provided. The AP MLD includes a processor and a memory. The memory is configured to store computer programs. The processor is configured to invoke and execute the computer programs stored in the memory, to cause the AP MLD to perform the method in the eighth aspect described above.

In a forty-first aspect, an AP is provided. The AP includes a processor and a memory. The memory is configured to store computer programs. The processor is configured to invoke and execute the computer programs stored in the memory, to cause the AP to perform the method in the ninth aspect described above.

In a forty-second aspect, a non-AP MLD is provided. The non-AP MLD includes a processor and a memory. The memory is configured to store computer programs. The processor is configured to invoke and execute the computer programs stored in the memory, to cause the non-AP MLD to perform the method in the tenth aspect described above.

In a forty-third aspect, an AP is provided. The AP includes a processor and a memory. The memory is configured to store computer programs. The processor is configured to invoke and execute the computer programs stored in the memory, to cause the AP to perform the method in the eleventh aspect described above.

In a forty-fourth aspect, a non-AP MLD is provided. The non-AP MLD includes a processor and a memory. The memory is configured to store computer programs. The processor is configured to invoke and execute the computer programs stored in the memory, to cause the non-AP MLD to perform the method in the twelfth aspect described above.

In a forty-fifth aspect, an AP is provided. The AP includes a processor and a memory. The memory is configured to store computer programs. The processor is configured to invoke and execute the computer programs stored in the memory, to cause the AP to perform the method in the thirteenth aspect described above.

In a forty-sixth aspect, an AP is provided. The AP includes a processor and a memory. The memory is configured to store computer programs. The processor is configured to invoke and execute the computer programs stored in the memory, to cause the AP to perform the method in the fourteenth aspect described above.

In a forty-seventh aspect, an AP is provided. The AP includes a processor and a memory. The memory is configured to store computer programs. The processor is configured to invoke and execute the computer programs stored in the memory, to cause the AP to perform the method in the fifteenth aspect described above.

In a forty-eighth aspect, an AP is provided. The AP includes a processor and a memory. The memory is configured to store computer programs. The processor is configured to invoke and execute the computer programs stored in the memory, to cause the AP to perform the method in the sixteenth aspect described above.

In a forty-ninth aspect, an apparatus is provided. The apparatus is configured to perform the method in any one of the first aspect to the sixteenth aspect. Specifically, the apparatus includes a processor. The processor is configured to invoke and execute computer programs from a memory, to cause a device equipped with the apparatus to perform the method in any one of the first aspect to the sixteenth aspect described above.

In a fiftieth aspect, a computer-readable storage medium is provided. The computer-readable storage medium is configured to store computer programs which are operable with a computer to perform the method in any one of the first aspect to the sixteenth aspect described above.

In a fifty-first aspect, a computer program product is provided. The computer program product includes computer program instructions which are operable with a computer to perform the method in any one of the first aspect to the sixteenth aspect described above.

In a fifty-second aspect, a computer program is provided. The computer program, when executed by a computer, is operable with the computer to perform the method in any one of the first aspect to the sixteenth aspect described above.

By means of the technical solutions in the first aspect and the second aspect, it is possible to realize multi-AP MLD joint channel sounding with the first virtual AP MLD.

By means of the technical solutions in the third aspect and the fourth aspect, it is possible to realize seamless roaming of a non-AP MLD with the first virtual AP MLD.

By means of the technical solutions in the fifth aspect and the sixth aspect, it is possible to realize data sharing between multiple AP MLDs with the first virtual AP MLD.

By means of the technical solutions in the seventh aspect and the eighth aspect, it is possible to realize multi-AP MLD coordinated transmission with the first virtual AP MLD.

By means of the technical solutions in the ninth aspect and the tenth aspect, it is possible to realize multi-AP joint channel sounding with the second virtual AP MLD.

By means of the technical solutions in the eleventh aspect and the twelfth aspect, it is possible to realize seamless roaming of a non-AP MLD with the second virtual AP MLD.

By means of the technical solutions in the thirteenth aspect and the fourteenth aspect, it is possible to realize data sharing between multiple APs with the second virtual AP MLD.

By means of the technical solutions in the fifteenth aspect and the sixteenth aspect, it is possible to realize multi-AP coordinated transmission with the second virtual AP MLD.

### BRIEF DESCRIPTION OF THE DRAWINGS

FIG. 1 is a schematic architectural diagram of a communication system to which embodiments of the disclosure are applied.
FIG. 2 is a schematic diagram illustrating multi-link setup between an access point multi-link device (AP MLD) and a non-AP MLD provided in the disclosure.
FIG. 3 is a schematic diagram illustrating multi-AP coordinated transmission provided in the disclosure.
FIG. 4 is a schematic diagram illustrating joint transmission (J-TX) provided in the disclosure.
FIG. 5 is a schematic diagram illustrating an AP MLD consisting of multiple non-collocated APs provided in the disclosure.
FIG. 6 is a schematic flowchart of a wireless communication method provided in embodiments of the disclosure.
FIG. 7 is a schematic diagram illustrating multi-AP MLD multi-link coordination provided in embodiments of the disclosure.
FIG. 8 is a schematic diagram illustrating a multi-AP MLD (or denoted as multi-AP-MLD, multi AP-MLD, multi AP MLD, and so on) sounding announce frame provided in embodiments of the disclosure.
FIG. 9 is a schematic diagram illustrating a null data physical layer protocol data unit announcement (NDPA) frame provided in embodiments of the disclosure.
FIG. 10 is a schematic diagram illustrating a station (STA) information field of an NDPA frame provided in embodiments of the disclosure.
FIG. 11 is a schematic diagram illustrating an NDP feedback frame provided in embodiments of the disclosure.
FIG. 12 is a schematic flowchart illustrating sequential channel sounding (explicit) provided in embodiments of the disclosure.
FIG. 13 is a schematic flowchart illustrating joint channel sounding (explicit) provided in embodiments of the disclosure.
FIG. 14 is a schematic diagram illustrating a sounding trigger frame provided in embodiments of the disclosure.
FIG. 15 is a schematic diagram illustrating a user information field of a sounding trigger frame provided in embodiments of the disclosure.
FIG. 16 is a schematic flowchart illustrating sequential channel sounding (implicit) provided in embodiments of the disclosure.
FIG. 17 is a schematic flowchart illustrating joint channel sounding (implicit) provided in embodiments of the disclosure.
FIG. 18 is a schematic diagram illustrating a first virtual AP MLD provided in embodiments of the disclosure.
FIG. 19 is a schematic diagram illustrating another first virtual AP MLD provided in embodiments of the disclosure.
FIG. 20 is a schematic flowchart of another wireless communication method provided in embodiments of the disclosure.
FIG. 21 is a schematic diagram illustrating a traffic identifier (TID)-to-link mapping element provided in embodiments of the disclosure.
FIG. 22 is a schematic diagram illustrating a TID-to-link mapping control field provided in embodiments of the disclosure.
FIG. 23 is a schematic diagram illustrating a multi-link element provided in embodiments of the disclosure.
FIG. 24 is a schematic diagram illustrating a multi-link control field provided in embodiments of the disclosure.
FIG. 25 is a schematic diagram illustrating a per-STA profile subelement of a reconfiguration multi-link element provided in embodiments of the disclosure.
FIG. 26 is a schematic diagram illustrating an STA control field of a reconfiguration multi-link element provided in embodiments of the disclosure.
FIG. 27 is a schematic diagram illustrating a beacon frame provided in embodiments of the disclosure.
FIG. 28 is a schematic diagram illustrating a probe response frame provided in embodiments of the disclosure.
FIG. 29 is a diagram illustrating an action field of a TID-to-link mapping request frame provided in embodiments of the disclosure
FIG. 30 is a diagram illustrating an action field of a TID-to-link mapping response frame provided in embodiments of the disclosure.
FIG. 31 is a schematic diagram illustrating signaling exchange during seamless roaming provided in embodiments of the disclosure.
FIG. 32 is a schematic flowchart of another wireless communication method provided in embodiments of the disclosure.
FIG. 33 is a schematic diagram illustrating a data sharing announce frame provided in embodiments of the disclosure.
FIG. 34 is a schematic diagram illustrating signaling exchange during data sharing provided in embodiments of the disclosure.
FIG. 35 is a schematic flowchart of another wireless communication method provided in embodiments of the disclosure.
FIG. 36 is a schematic diagram illustrating signaling exchange during multi-AP MLD coordinated transmission provided in embodiments of the disclosure.
FIG. 37 is a schematic diagram illustrating a multi-AP MLD transmit (TX) trigger frame provided in embodiments of the disclosure.
FIG. 38 is a schematic diagram illustrating a common information field of a multi-AP MLD TX trigger frame provided in embodiments of the disclosure.
FIG. 39 is a schematic flowchart of another wireless communication method provided in embodiments of the disclosure.
FIG. 40 is a schematic diagram illustrating a multi-AP sounding announce frame provided in embodiments of the disclosure.
FIG. 41 is a schematic diagram illustrating a second virtual AP MLD provided in embodiments of the disclosure.
FIG. 42 is a schematic diagram illustrating another second virtual AP MLD provided in embodiments of the disclosure.
FIG. 43 is a schematic diagram illustrating another second virtual AP MLD provided in embodiments of the disclosure.
FIG. 44 is a schematic flowchart of another wireless communication method provided in embodiments of the disclosure.
FIG. 45 is a schematic flowchart of another wireless communication method provided in embodiments of the disclosure.
FIG. 46 is a schematic flowchart of another wireless communication method provided in embodiments of the disclosure.
FIG. 47 is a schematic block diagram of an AP MLD provided in embodiments of the disclosure.
FIG. 48 is a schematic block diagram of a non-AP MLD provided in embodiments of the disclosure.
FIG. 49 is a schematic block diagram of another AP MLD provided in embodiments of the disclosure.
FIG. 50 is a schematic block diagram of another non-AP MLD provided in embodiments of the disclosure.
FIG. 51 is a schematic block diagram of another AP MLD provided in embodiments of the disclosure.
FIG. 52 is a schematic block diagram of another AP MLD provided in embodiments of the disclosure.
FIG. 53 is a schematic block diagram of another AP MLD provided in embodiments of the disclosure.
FIG. 54 is a schematic block diagram of another AP MLD provided in embodiments of the disclosure.
FIG. 55 is a schematic block diagram of an AP provided in embodiments of the disclosure.
FIG. 56 is a schematic block diagram of another non-AP MLD provided in embodiments of the disclosure.
FIG. 57 is a schematic block diagram of another AP provided in embodiments of the disclosure.
FIG. 58 is a schematic block diagram of another non-AP MLD provided in embodiments of the disclosure.
FIG. 59 is a schematic block diagram of another AP provided in embodiments of the disclosure.
FIG. 60 is a schematic block diagram of another AP provided in embodiments of the disclosure.
FIG. 61 is a schematic block diagram of another AP provided in embodiments of the disclosure.
FIG. 62 is a schematic block diagram of another AP provided in embodiments of the disclosure.
FIG. 63 is a schematic block diagram of a communication device provided in embodiments of the disclosure.
FIG. 64 is a schematic block diagram of an apparatus provided in embodiments of the disclosure.
FIG. 65 is a schematic block diagram of a communication system provided in embodiments of the disclosure.

### DETAILED DESCRIPTION

The following will describe technical solutions of embodiments of the disclosure with reference to the accompanying drawings of embodiments of the disclosure. Apparently, embodiments described herein are merely some embodiments, rather than all embodiments, of the disclosure. Based on embodiments of the disclosure, all other embodiments obtained by those of ordinary skill in the art without creative effort shall fall within the protection scope of the disclosure.

The technical solutions of embodiments of the disclosure can be applied to various communication systems, for example, wireless local area network (WLAN), wireless fidelity (Wi-Fi), or other communication systems.

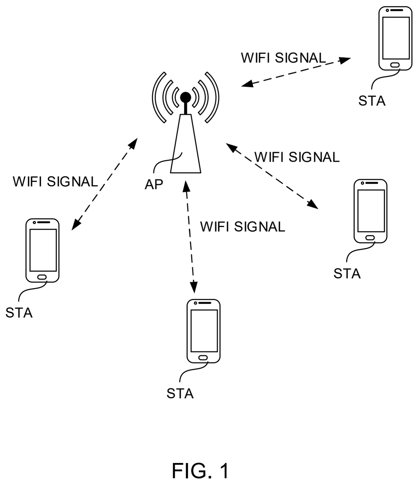

Referring to FIG. 1, FIG. 1 a schematic diagram of a wireless communication system provided in an embodiment of the disclosure. As illustrated in FIG. 1, the wireless communication system can include an access point (AP) and a station (STA).

In some scenarios, the AP can also be referred to as an AP STA, that is, the AP is also a type of STA in some sense. In some scenarios, the STA is also referred to as a non-AP STA.

In some embodiments, the STA can include an AP STA and a non-AP STA. Communication in a communication system can be communication between an AP and a non-AP STA, or can be communication between non-AP STAs, or can be communication between an STA and a peer STA, where the peer STA can refer to a device for communicating with a peer of the STA, for example, the peer STA can be an AP or a non-AP STA.

The AP can be used as a bridge for connecting a wired network and a wireless network. The AP is mainly used for connecting various wireless network clients together and then connecting the wireless network to an Ethernet. The AP can be a terminal device (for example, a mobile phone) having a Wi-Fi chip or a network device (for example, a router).

It should be noted that, a role of the STA in the communication system is not absolute. For example, in some scenarios, if a mobile phone is connected to a router, the mobile phone is a non-AP STA. If the mobile phone is a hotspot for another mobile phone, the mobile phone serves as an AP.

The AP and the non-AP STA can be devices applied to vehicle to everything (V2X), internet of things (IoT) nodes, sensors, etc. in IoT; smart cameras, smart remote controls, smart water meters and electricity meters, etc. in smart home; sensors in smart city, etc.

In some embodiments, the non-AP STA can support 802.11be standards. The non-AP STA can also support various current and future 802.11 WLAN standards, such as 802.11ax, 802.11ac, 802.11n, 802.11g, 802.11b, 802.11a, etc.

In some embodiments, the AP can support 802.11be standards. The AP can also support various current and future 802.11 WLAN standards, such as 802.11ax, 802.11ac, 802.11n, 802.11g, 802.11b, 802.11a, etc.

In embodiments of the disclosure, the STA can be a device supporting WLAN/Wi-Fi technology, such as a mobile phone, a tablet (pad), a computer with wireless transceiver functions, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, an in-vehicle communication device, a wireless communication chip/application specific integrated circuit (ASIC)/system-on-chip (SOC), etc.

A frequency band supported by the WLAN technology can include, but is not limited to, a low frequency band (2.4 Giga Hertz (GHz), 5 GHz, 6 GHz) and a high frequency band (45 GHz, 60 GHz).

There can be one or more links between the STA and the AP. In some embodiments, the STA and the AP support multi-band communication. For example, communication is performed at the same time on frequency bands of 2.4GHz, 5GHz, 6GHz, 45GHz, and 60GHz, or communication is performed at the same time on different channels of the same frequency band (or different frequency bands), thereby improving communication throughput and/or reliability between devices. Such a device is generally referred to as a multi-band device, or referred to as a multi-link device (MLD), and is sometimes referred to as a multi-link entity or a multi-band entity. The MLD can be an AP or an STA. If the MLD is an AP, the MLD includes one or more APs. If the MLD is an STA, the MLD includes one or more non-AP STAs.

An MLD having one or more APs can be referred to as an AP MLD, and an MLD having one or more non-AP STAs can be referred to as a non-AP MLD.

In embodiments of the disclosure, an AP can have multiple APs, a non-AP has multiple STAs, multiple links can be set up between APs in the AP and STAs in the non-AP, and data communication can be performed between the APs in the AP and corresponding STAs in the non-AP over corresponding links.

An AP is a device deployed in a WLAN to provide wireless communication functions for an STA. An STA can include: a user equipment (UE), an access terminal, a subscriber unit, a subscriber station, a mobile station, a remote station, a remote terminal, a mobile device, a user terminal, a terminal, a wireless communication device, a user agent, or a user device. Optionally, the STA can be a cellular radio telephone, a cordless telephone, a session initiation protocol (SIP) telephone, a wireless local loop (WLL) station, a personal digital assistant (PDA), a device with wireless communication functions such as a handheld device, a computing device, other processing devices coupled with a wireless modem, an in-vehicle device, and a wearable device, which is not limited in embodiments of the disclosure.

Optionally, both the STA and the AP support the institute of electrical and electronics engineers (IEEE) 802.11 standard.

It should be understood that, the terms "system" and "network" herein are usually used interchangeably throughout this disclosure. The term "and/or" herein only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be understood that, "indication" referred to in embodiments of the disclosure can be a direct indication, or can be an indirect indication, or can mean that there is an association. For example, *A* indicates *B* can mean that *A* directly indicates *B*, for instance, *B* can be obtained according to *A*; can mean that *A* indirectly indicates *B*, for instance, *A* indicates *C*, and *B* can be obtained according to *C*; or can mean that that there is an association between *A* and *B*.

Terms used in the implementations of the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

In the elaborations of embodiments of the disclosure, the term "correspondence" referred to in embodiments of the disclosure can mean that there is a direct or indirect correspondence between the two, or can mean that there is an association between the two, or can mean a relationship of indicating and indicated or configuring and configured, etc.

In embodiments of the disclosure, the "pre-defined" or "pre-configured" referred to in embodiments of the disclosure can be implemented by pre-storing a corresponding code or table in a device (for example, including the STA and the network device) or in other manners that can be used for indicating related information, and the disclosure is not limited in this regard. For example, the "pre-defined" can mean defined in a protocol.

In embodiments of the disclosure, the "protocol" can refer to a communication standard protocol, and can include, for example, a WiFi protocol, and a related protocol applied to a future WiFi communication system, which is not limited in the disclosure.

In order to facilitate understanding of embodiments of the disclosure, multi-link operation (MLO) related to the disclosure is described.

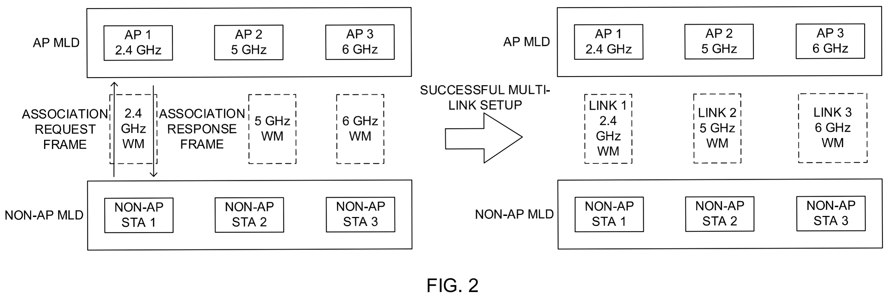

Multiple links can be set up between an AP MLD and a non-AP MLD on multiple different frequency bands/channels. As illustrated in FIG. 2, three links are set up between the AP MLD and the non-AP MLD on 2.4GHz, 5GHz, and 6GHz, which are referred to as link 1, link 2, and link 3 respectively, and the three links can work at the same time. AP 1 operating on link 1 (2.4GHz), AP 2 operating on link 2 (5GHz), and AP 3 operating on link 3 (6GHz) are referred to as affiliated APs of the AP MLD. Likewise, non-AP STA 1 operating on link 1 (2.4GHz), non-AP STA 2 operating on link 2 (5GHz), and non-AP STA 3 operating on link 3 (6GHz) are referred to as affiliated STAs of the non-AP MLD.

In order to facilitate understanding of embodiments of the disclosure, multi-AP coordination related to the disclosure is described.

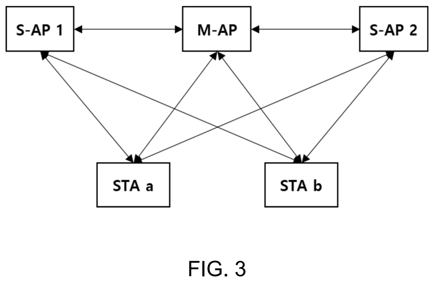

As illustrated in FIG. 3, multiple APs can form a multi-AP candidate set, where one AP acts as a master AP (MAP or M-AP) and manages and controls other slave APs (SAPs or S-APs) in the multi-AP candidate set over a wired or wireless link (also referred to as backhaul link). Further, the APs in the multi-AP candidate set can serve STAs (e. g., STA a and STA b) through coordination.

Multi-AP coordination can be implemented in various manners, for example, coordinated orthogonal frequency division multiple access (C-OFDMA), coordinated time division multiple access (C-TDMA), coordinated beamforming (C-BF), joint transmission (J-TX), coordinated spatial reuse (C-SR), and coordinated uplink multi-user multiple-input multiple-output (C-UL MU-MIMO), etc.

In order to facilitate understanding of embodiments of the disclosure, J-TX in multi-AP coordination related to the disclosure is described.

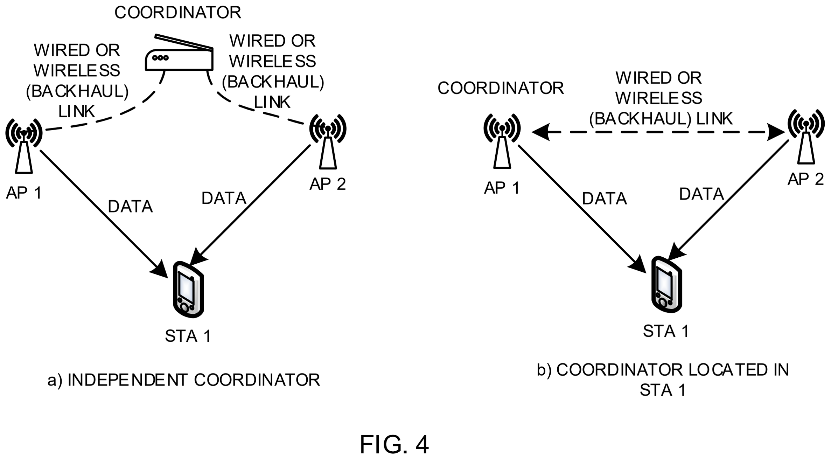

As illustrated in FIG. 4, in a multi-AP architecture, a coordinator of multiple APs can be an independent device, and the APs are connected to the coordinator in a wired or wireless manner. Alternatively, the coordinator of the multiple APs can be any AP (the AP can be referred to as a master AP), and then other APs (slave APs) are connected to the master AP (i. e. the AP acting as or having the coordinator) in a wired or wireless manner. FIG. 4 is a schematic diagram illustrating multiple APs serving an STA through J-TX. AP 1 and AP 2 transmit data to STA 1 at the same time on the same frequency band by using a steering matrix calculated based on channel sounding.

In order to facilitate understanding of embodiments of the disclosure, logical multi-AP multi-link related to the disclosure is described.

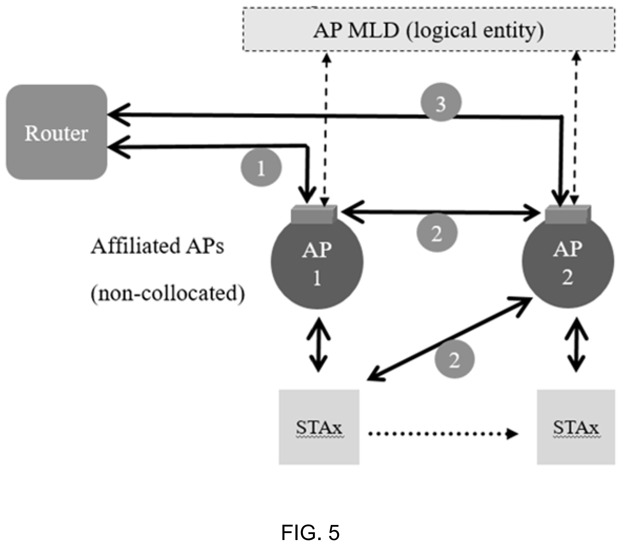

As illustrated in FIG. 5, multiple non-collocated APs are taken as one logical AP MLD entity. When an STA is connected to the AP MLD, the multiple non-collocated APs can be regarded as different affiliated APs of the AP MLD, and as such, in the MLO architecture, the AP MLD can serve the STA via different affiliated APs over different links, thereby realizing seamless roaming of the STA. As illustrated in FIG. 5, STA x is connected to AP 1 and AP 2 over multiple links respectively. If STA x moves, a link connection with AP 1 is disconnected without affecting a link connection with AP 2, which enhances mobility support for an STA.

In order to facilitate understanding of embodiments of the disclosure, a problem to be solved in the disclosure is described.

With popularization of mobile communication devices and rapid development of mobile internet, people have increasingly strong demands for connecting to the internet anytime and anywhere. At present, in offices, shopping centers, and stadiums, AP deployment becomes increasingly intensive, and as a result, signal interference between devices becomes very serious, which brings huge challenges to people's demands for high-reliability, high-rate, and low-latency communication. Therefore, a multi-AP coordination technology is of critical importance. In general, an STA participating in multi-AP coordination needs to be located within an overlapping area of multiple APs, and thus is far away from each of multiple APs, and therefore, signal quality and link stability are both weak. In order to improve communication rate of such STA, improve reliability of communication, and provide low-latency communication, the disclosure provides a communication scheme for multi-AP MLD coordination, in which high-reliability, high-rate, and low-latency service is provided for a non-AP MLD with aid of multiple AP MLDs.

In order to facilitate understanding of technical solutions of embodiments of the disclosure, the technical solutions of the disclosure are described in detail below with reference to embodiments. The following related art as an optional scheme can be arbitrarily combined with the technical solutions of embodiments of the disclosure, which shall all belong to the protection scope of embodiments of the disclosure. Embodiments of the disclosure include at least some of the following.

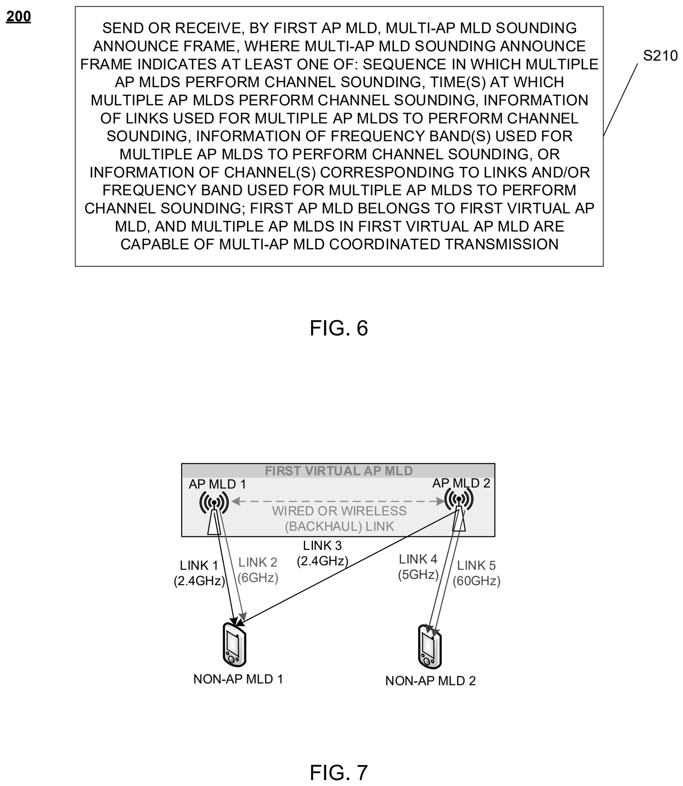

FIG. 6 is a schematic flowchart of a wireless communication method 200 according to embodiments of the disclosure. As illustrated in FIG. 6, the wireless communication method 200 can include at least some of the following.

S210, a first AP MLD sends or receives a multi-AP MLD sounding announce frame.

The multi-AP MLD sounding announce frame indicates at least one of: a sequence in which multiple AP MLDs perform channel sounding, a time(s) at which the multiple AP MLDs perform channel sounding, information of links used for the multiple AP MLDs to perform channel sounding, information of a frequency band(s) used for the multiple AP MLDs to perform channel sounding, or information of a channel(s) corresponding to the links and/or the frequency band used for the multiple AP MLDs to perform channel sounding.

The first AP MLD belongs to a first virtual AP MLD, and multiple AP MLDs in the first virtual AP MLD are capable of multi-AP MLD coordinated transmission.

In embodiments of the disclosure, multi-AP MLD joint channel sounding can be realized.

In embodiments of the disclosure, in S210, if the first AP MLD sends the multi-AP MLD sounding announce frame, the first AP MLD can be a master AP MLD. If the first AP MLD receives the multi-AP MLD sounding announce frame, the first AP MLD can be a slave AP MLD.

In some embodiments, one AP MLD may belong to one or more virtual AP MLDs.

In some embodiments, each virtual AP MLD shall have only one master AP MLD, while the remaining AP MLD(s) is a slave AP MLD.

In some embodiments, each virtual AP MLD may support one or more multi-AP MLD coordination modes.

In embodiments of the disclosure, "field" can also be referred to as "sub-field". One field can occupy one or more bytes/octets, or can occupy one or more bits.

In some embodiments, the first AP MLD is a master AP MLD. Alternatively, in some embodiments, the first AP MLD can be a slave AP MLD. Embodiments of the disclosure are not limited in this regard.

In embodiments of the disclosure, if two or more AP MLDs transmit data to one or more non-AP MLDs at the same time by using links of the same frequency band (the same channel), joint channel sounding needs to be performed on the links of the same frequency band (the same channel), but channel sounding does not need to be performed on other links. Alternatively, if two or more non-AP MLDs transmit data to one or more AP MLDs at the same time by using links of the same frequency band (the same channel), joint channel sounding needs to be performed on the links of the same frequency band (the same channel), but channel sounding does not need to be performed on other links.

In some embodiments, a schematic diagram illustrating coordinated transmission with multiple links by multiple AP MLDs is illustrated in FIG. 7. For a cooperation mode such as C-BF and J-TX, an AP MLD and a non-AP MLD participating in coordinated transmission need to perform channel sounding in advance to obtain accurate channel state information (CSI), and then obtain a higher gain of coordinated transmission through a beamforming technology. With regard to a sounding sequence, channel sounding can be classified into sequential channel sounding and joint channel sounding. With regard to whether a channel sounding result (null data physical layer protocol data unit (PPDU) (null data PPDU, NDP) feedback/CSI reporting) needs to be fed back/sent after sounding, channel sounding can be classified into explicit feedback requiring CSI feedback and implicit feedback not requiring CSI feedback.

In embodiments of the disclosure, as illustrated in FIG. 7, AP MLD 1 transmits data to non-AP MLD 1 on link 1 and link 2, AP MLD 2 transmits data to non-AP MLD 1 on link 3, and AP MLD 2 transmits data to non-AP MLD 2 on link 4 and link 5. Since link 1 for AP MLD 1 and link 3 for AP MLD 2 may work on the same channel in the same frequency band (for example, 2.4GHz), in the mode in which AP MLD 1 and AP MLD 2 perform J-TX for non-AP MLD 1, AP MLD 1 and AP MLD 2 need to perform joint channel sounding on their respective link 1 and link 3, but do not need to perform channel sounding on link 2, link 4, and link 5.

In some embodiments, a multi-AP MLD sounding announce field of the multi-AP MLD sounding announce frame includes at least one of: a virtual basic service set identifier (VBSSID) field, a candidate set ID field, a sounding method field, or a sounding configuration field. The VBSSID field indicates a VBSSID of the first virtual AP MLD. The candidate set ID field indicates an ID of a multi-AP MLD candidate set corresponding to the first virtual AP MLD. The sounding method field indicates a method for performing channel sounding by the multiple AP MLDs. The sounding configuration field indicates configuration information for performing channel sounding by the multiple AP MLDs.

Optionally, the candidate set ID field can also be replaced by a VBSS color field, where the VBSS color field can indicate the multi-AP MLD candidate set corresponding to the first virtual AP MLD.

In some embodiments, the sounding method field includes at least one of: a sequential or joint field, or an explicit or implicit field. If the sequential or joint field has a first value, the sequential or joint field indicates that the multiple AP MLDs are to perform channel sounding in sequence, and if the sequential or joint field has a second value, the sequential or joint field indicates that the multiple AP MLDs are to perform channel sounding synchronously at the same time. If the explicit or implicit field has a first value, the explicit or implicit field indicates that the multiple AP MLDs are to perform explicit channel sounding, and if the explicit or implicit field has a second value, the explicit or implicit field indicates that the multiple AP MLDs are to perform implicit channel sounding.

Specifically, for example, sequential or joint field = 1 indicates that the multiple AP MLDs are to perform channel sounding in sequence, and sequential or joint field = 0 indicates that multiple AP MLDs are to perform channel sounding synchronously at the same time. Alternatively, sequential or joint field = 0 indicates that the multiple AP MLDs are to perform channel sounding in sequence, and sequential or joint field = 1 indicates that the multiple AP MLDs are to perform channel sounding synchronously at the same time.

Specifically, for example, explicit or implicit field = 1 indicates that multiple AP MLDs are to perform explicit channel sounding, and explicit or implicit field = 0 indicates that multiple AP MLDs are to perform implicit channel sounding. Alternatively, explicit or implicit field = 0 indicates that multiple AP MLDs are to perform explicit channel sounding, and explicit or implicit field = 1 indicates that multiple AP MLDs are to perform implicit channel sounding.

In some embodiments, if the sequential or joint field indicates that the multiple AP MLDs are to perform channel sounding in sequence, times at which the multiple AP MLDs perform channel sounding and/or a sequence in which the multiple AP MLDs perform channel sounding is indicated by the sounding configuration field. Alternatively, if the sequential or joint field indicates that the multiple AP MLDs are to perform channel sounding synchronously at the same time, a time at which the multiple AP MLDs perform channel sounding is indicated by the sounding configuration field.

In some embodiments, explicit or implicit subfield = 0 indicates that the multiple AP MLDs are to perform explicit channel sounding, that is, the AP MLD sends an NDP announcement (NDPA) + NDP frame, and a non-AP MLD needs to feed back a channel sounding result. Explicit or implicit subfield = 1 indicates that the multiple AP MLDs are to perform implicit channel sounding, that is, a non-AP MLD sends an NDP frame, and the AP MLD directly obtains a channel sounding result.

In some embodiments, the sounding configuration field includes, but is not limited to, at least one of: an AP MLD number field (also referred to as "number of AP MLDs field") or multiple AP MLD sounding configuration fields. The AP MLD number field indicates the number of AP MLDs participating in multi-AP MLD channel sounding. An *m*^{th} AP MLD sounding configuration field in the multiple AP MLD sounding configuration fields indicates configuration information for an *m*^{th} AP MLD participating in multi-AP MLD channel sounding.

In some embodiments, if the multiple AP MLDs are to perform channel sounding in sequence, an order of an AP MLD sounding configuration field in the multiple AP MLD sounding configuration fields indicates an order in which a corresponding AP MLD performs multi-AP MLD channel sounding.

In some embodiments, an AP MLD sounding configuration field in the multiple AP MLD sounding configuration fields includes at least one of: a BSSID field, an AP MLD ID field, a start time field, or a basic multi-link element. The BSSID field indicates a BSSID of an AP MLD corresponding to a current AP MLD sounding configuration field, and the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the basic multi-link element indicates information of a link used for the AP MLD corresponding to the current AP MLD sounding configuration field to perform multi-AP MLD channel sounding.

In some embodiments, an AP MLD sounding configuration field in the multiple AP MLD sounding configuration fields includes at least one of: a BSSID field, an AP MLD ID field, a start time field, or a link ID information field. The BSSID field indicates a BSSID of an AP MLD corresponding to a current AP MLD sounding configuration field, the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the link ID information field indicates information of a link used for the AP MLD corresponding to the current AP MLD sounding configuration field to perform multi-AP MLD channel sounding.

In some embodiments, the link ID information field includes a link ID field and/or a link ID extension field. If the link ID information field includes only the link ID field, the link ID field indicates the ID of the link used for the AP MLD corresponding to the current AP MLD sounding configuration field to perform multi-AP MLD channel sounding. Alternatively, if the link ID information field includes only the link ID extension field, the link ID extension field indicates the ID of the link used for the AP MLD corresponding to the current AP MLD sounding configuration field to perform multi-AP MLD channel sounding. Alternatively, if the link ID information field includes both the link ID field and the link ID extension field, the link ID field and the link ID extension field jointly indicate the ID of the link used for the AP MLD corresponding to the current AP MLD sounding configuration field to perform multi-AP MLD channel sounding.

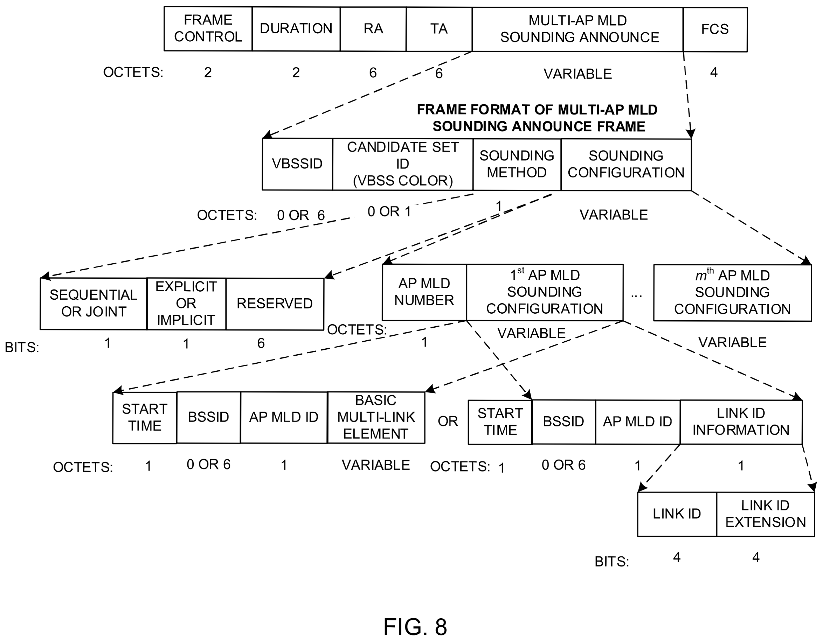

In some embodiments, a frame format of the multi-AP MLD sounding announce frame is illustrated in FIG. 8. The multi-AP MLD sounding announce frame includes a frame control field (occupying 2 octets), a duration field (occupying 2 octets), a receiving address (RA) (occupying 6 octets), a transmission address (TA) (occupying 6 octets), a multi-AP MLD sounding announce field (occupying variable number of octets), and a frame check sequence (FCS) field (occupying 4 octets). Specifically, the multi-AP MLD sounding announce field includes a VBSSID field (occupying 0 or 6 octets), a candidate set ID or VBSS color field (occupying 0 or 1 octet), a sounding method field (occupying 1 octet), and a sounding configuration field (occupying variable number of octets). The sounding method field includes a sequential or joint field (occupying 1 bit) and an explicit or implicit field (occupying 1 bit). The sounding configuration field includes: an AP MLD number field (occupying 1 octet), a 1^{st} AP MLD sounding configuration field, a 2^{nd} AP MLD sounding configuration field, ..., an *m*^{th} AP MLD sounding configuration field. The AP MLD sounding configuration field includes: a BSSID field (occupying 6 octets), an AP MLD ID field (occupying 1 octet), a start time field (occupying 1 octet), and a basic multi-link element (occupying variable number of octets). Alternatively, the AP MLD sounding configuration field includes: a BSSID field (occupying 6 octets), an AP MLD ID field (occupying 1 octet), a start time field (occupying 1 octet), and a link ID information field (occupying 1 octet), where the link ID information field includes a link ID field (occupying 4 bits) and a link ID extension field (occupying 4 bits).

It should be noted that, in FIG. 8, the basic multi-link element indicates information of a link used by a current AP MLD to perform multi-AP MLD channel sounding. The basic multi-link element contains lots of unnecessary information, or can be replaced by a link ID information subfield. In FIG. 8, the link ID information field indicates the information of the link used for the current AP MLD to perform multi-AP MLD channel sounding, or can be replaced by a basic multi-link element.

In some embodiments, a first non-AP MLD receives a first frame sent by the first AP MLD. The first frame is sent by the first AP MLD according to information indicated by the multi-AP MLD sounding announce frame, the first non-AP MLD is a non-AP MLD associated with the first AP MLD in all non-AP MLDs participating in multi-AP MLD channel sounding, the first AP MLD belongs to the first virtual AP MLD, multiple AP MLDs in the first virtual AP MLD are capable of multi-AP MLD coordinated transmission, and the first frame is an NDPA frame or a sounding trigger frame. The multi-AP MLD sounding announce frame indicates at least one of: a sequence in which multiple AP MLDs perform channel sounding, a time(s) at which the multiple AP MLDs perform channel sounding, information of links used for the multiple AP MLDs to perform channel sounding, information of a frequency band(s) used for the multiple AP MLDs to perform channel sounding, or information of a channel(s) corresponding to the links and/or the frequency band used for the multiple AP MLDs to perform channel sounding. If the first frame is an NDPA frame, the NDPA frame indicates a parameter and configuration information of an NDP frame to be sent. If the first frame is a sounding trigger frame, the sounding trigger frame is used for triggering or requesting the first non-AP MLD to feed back a sounding result.

In some embodiments, if the multiple AP MLDs include the first AP MLD (i. e., the first AP MLD participates in joint channel sounding), and the multiple AP MLDs perform explicit channel sounding, then the first AP MLD sends an NDPA frame to the first non-AP MLD according to the information indicated by the multi-AP MLD sounding announce frame, where the NDPA frame indicates a parameter and configuration information of an NDP frame to be sent, and the first non-AP MLD is a non-AP MLD associated with the first AP MLD in all non-AP MLDs participating in multi-AP MLD channel sounding. The first AP MLD sends an NDP frame to the first non-AP MLD on a channel for sending the NDPA frame, where a time interval between the NDP frame and the NDPA frame is not less than one short interframe space (SIFS).

In some embodiments, if the first frame is an NDPA frame and the multiple AP MLDs perform explicit channel sounding, the first non-AP MLD receives an NDP frame sent by the first AP MLD on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. If the non-AP MLD information list field includes only the link ID field, the link ID field indicates an ID of a link used for the first AP MLD to perform multi-AP MLD channel sounding. Alternatively, if the non-AP MLD information list field includes only the link ID extension field, the link ID extension field indicates the ID of the link used for the first AP MLD to perform multi-AP MLD channel sounding. Alternatively, if the non-AP MLD information list field includes both the link ID field and the link ID extension field, the link ID field and the link ID extension field jointly indicate the ID of the link used for the first AP MLD to perform multi-AP MLD channel sounding.

In some embodiments, if the first AP MLD sends the multi-AP MLD sounding announce frame and the first AP MLD covers all the non-AP MLDs participating in multi-AP MLD channel sounding, the first AP MLD sends a beamforming report poll (BFRP) trigger frame to all the non-AP MLDs participating in multi-AP MLD channel sounding on the channel for sending the NDPA frame, where the BFRP trigger frame is used for triggering or requesting all the non-AP MLDs participating in multi-AP MLD channel sounding to feed back channel sounding results to AP MLDs associated with the non-AP MLDs. The first AP MLD receives an NDP feedback frame sent by the first non-AP MLD, where the NDP feedback frame contains a channel sounding result for the first AP MLD.

In some embodiments, if the first AP MLD sends the multi-AP MLD sounding announce frame and the first AP MLD covers all the non-AP MLDs participating in multi-AP MLD channel sounding, the first non-AP MLD receives a BFRP trigger frame sent by the first AP MLD on the channel for sending the NDPA frame, where the BFRP trigger frame is used for triggering or requesting all the non-AP MLDs participating in multi-AP MLD channel sounding to feed back channel sounding results to AP MLDs associated with the non-AP MLDs. The first non-AP MLD sends an NDP feedback frame to the first AP MLD, where the NDP feedback frame contains a channel sounding result for the first AP MLD.

In some embodiments, if the first AP MLD sends the multi-AP MLD sounding announce frame and the first AP MLD is unable to cover all the non-AP MLDs participating in multi-AP MLD channel sounding, the first AP MLD sends a BFRP trigger frame to the first non-AP MLD on a channel for sending the NDPA frame, where the BFRP trigger frame is used for triggering or requesting the first non-AP MLD to feed back a channel sounding result. The first AP MLD receives an NDP feedback frame sent by the first non-AP MLD, where the NDP feedback frame contains a channel sounding result for the first AP MLD.

In some embodiments, if the first AP MLD sends the multi-AP MLD sounding announce frame and the first AP MLD is unable to cover all non-AP the MLDs participating in multi-AP MLD channel sounding, the first non-AP MLD receives a BFRP trigger frame sent by the first AP MLD on a channel for sending the NDPA frame, where the BFRP trigger frame is used for triggering or requesting the first non-AP MLD to feed back a channel sounding result. The first non-AP MLD sends an NDP feedback frame to the first AP MLD, where the NDP feedback frame contains a channel sounding result for the first AP MLD.

In some embodiments, a user information field of the BFRP trigger frame includes a link ID field and/or a link ID extension field. If the user information field of the BFRP trigger frame includes only the link ID field, the link ID field indicates an ID of a link(s) used for the first AP MLD to perform multi-AP MLD channel sounding. Alternatively, if the user information field of the BFRP trigger frame includes only the link ID extension field, the link ID extension field indicates the ID of the link(s) used for the first AP MLD to perform multi-AP MLD channel sounding. Alternatively, if the user information field of the BFRP trigger frame includes both the link ID field and the link ID extension field, the link ID field and the link ID extension field jointly indicate the ID of the link(s) used for the first AP MLD to perform multi-AP MLD channel sounding.

In some embodiments, the NDP feedback frame includes a link ID information field, where the link ID information field includes a link ID field and/or a link ID extension field. If the link ID information field includes only the link ID field, the link ID field indicates an ID of a link that a channel sounding result carried in the NDP feedback frame corresponds to. Alternatively, if the link ID information field includes only the link ID extension field, the link ID extension field indicates the ID of the link that the channel sounding result carried in the NDP feedback frame corresponds to. Alternatively, if the link ID information field includes both the link ID field and the link ID extension field, the link ID field and the link ID extension field jointly indicate the ID of the link that the channel sounding result carried in the NDP feedback frame corresponds to.

In some embodiments, the NDP feedback frame includes a multi-link element or a basic multi-link element, where a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

In some embodiments, if the multiple AP MLDs perform channel sounding in sequence, the multiple AP MLDs send the NDPA frames and/or the NDP frames in a sequence indicated by the multi-AP MLD sounding announce frame.

In some embodiments, if the multiple AP MLDs perform channel sounding synchronously at the same time, the multiple AP MLDs send the NDPA frames and/or the NDP frames synchronously at a start time indicated by the multi-AP MLD sounding announce frame.

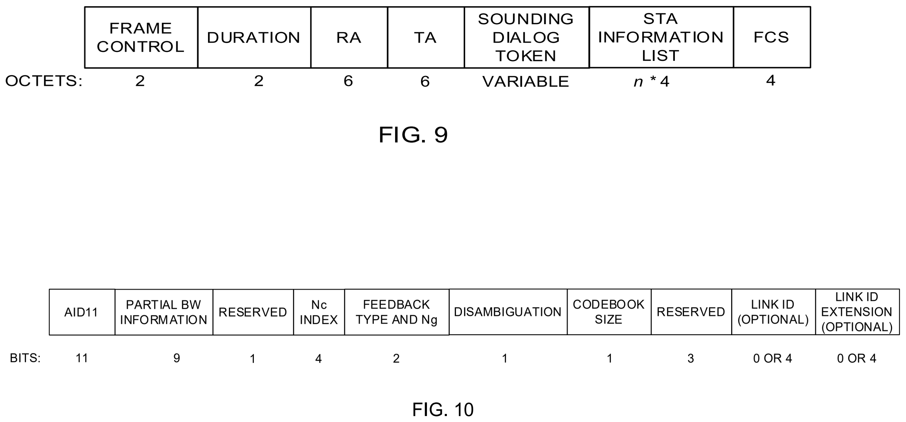

In some embodiments, a frame format of the NDPA frame is illustrated in FIG. 9. A (master) AP MLD indicates, via the NDPA frame, a parameter, configuration, and the like of an NDP frame to be sent by the AP MLD, where an STA information list field includes one or more STA information fields, and the STA information field is illustrated in FIG. 10. For an STA information field of an extremely high throughput (EHT) NDPA frame, no modification may be made on the STA information field, or a link ID field and a link ID extension field can be added to the STA information field to indicate on which link/links a current AP MLD is to send an NDP frame. Specifically, the STA information field includes an association identifier (AID) 11 field (occupying 11 bits), a partial bandwidth (BW) information field (occupying 9 bits), an Nc index field (occupying 4 bits), a feedback type and Ng field (occupying 2 bits), a disambiguation field (occupying 1 bit), a codebook size (occupying 1 bit), a link ID (optional) (occupying 0 or 4 bits), and a link ID extension (optional) (occupying 0 or 4 bits).

In some embodiments, in the BFRP trigger frame, 8 bits (B25, B32, ..., B38) can be used as the link ID and the link ID extension to indicate on which link a non-AP MLD is to send an NDP feedback frame to report a channel sounding result. Alternatively, the last trigger dependent user information field of a user information field is used to carry a (basic) multi-link element to indicate on which link/links the non-AP MLD is to send the NDP feedback frame to report the channel sounding result. However, the BFRP trigger frame is different from the sounding trigger frame in that a trigger type subfield of a common information field of the BFRP trigger frame is set to 1.

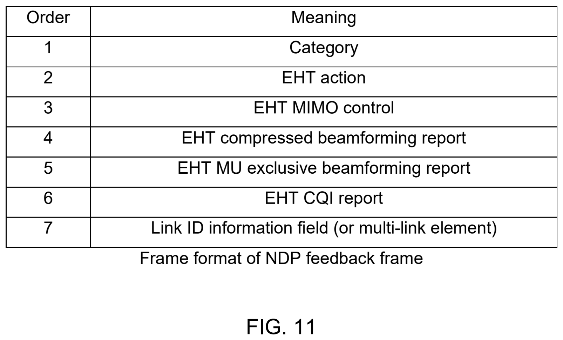

In some embodiments, the NDP feedback frame is illustrated in FIG. 11. The NDP feedback frame can have a format similar to that of an EHT compressed beamforming/channel quality indicator (CQI) frame, and is used for carrying a channel sounding result. In the embodiments, a link ID information field (including a link ID and a link ID extension) or a (basic) multi-link element (including a link ID information field) is added to indicate which link the channel sounding result corresponds to.

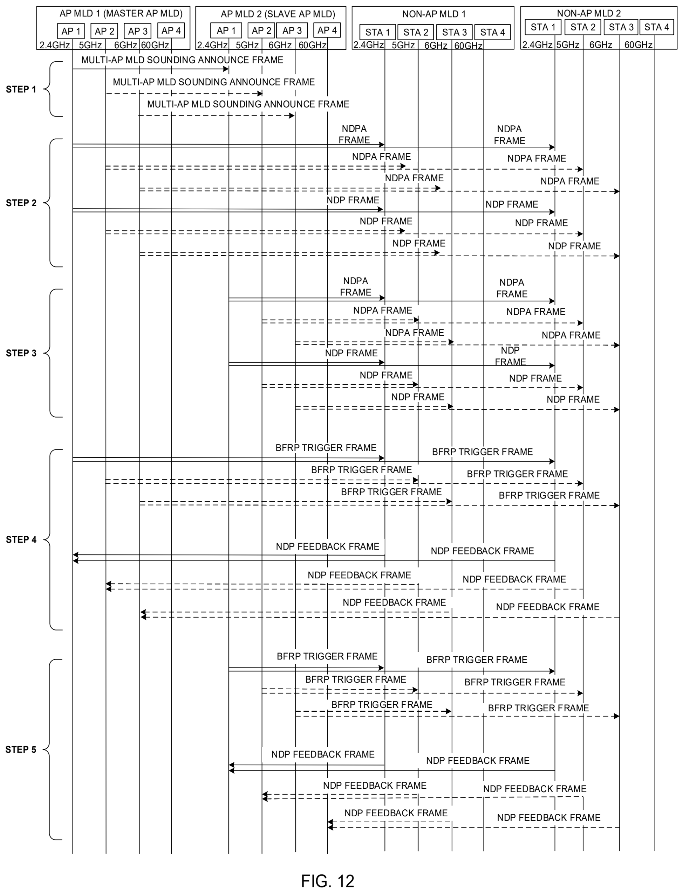

In some embodiments, the two AP MLDs and the two non-AP MLDs illustrated in FIG. 7 are taken as an example. Non-AP MLD 1 is associated with AP MLD 1, and non-AP MLD 2 is associated with AP MLD 2 (or AP MLD 2 is an anchor AP of non-AP MLD 2). AP MLD 1 is a master AP MLD, and AP MLD 2 is a slave AP MLD and is managed and controlled by AP MLD 1. AP MLD 1 and AP MLD 2 perform J-TX for non-AP MLD 1 by using link 1 and link 3 of 2.4GHz respectively. Specifically, a procedure of sequential channel sounding with explicit feedback is illustrated in FIG. 12, in which AP MLDs participating in channel sounding send NDPA frames and/or NDP frames to non-AP MLDs in sequence (at different times). The detailed elaboration is as follows.

Step 1, a master AP MLD sends a multi-AP MLD sounding announce frame to slave AP MLDs, to notify the slave AP MLDs to start channel sounding. The multi-AP MLD sounding announce frame indicates a sequence in which the slave AP MLDs perform channel sounding/times at which the slave AP MLDs perform channel sounding, and information of links/frequency band(s) and a corresponding channel(s) used for the slave AP MLDs and the master AP MLD (if the master AP MLD participates in channel sounding) to perform channel sounding.

Step 2, if the master AP MLD participates in channel sounding, then after an SIFS following transmission of the multi-AP MLD sounding announce frame, the master AP MLD sends an NDPA frame to non-AP MLDs on an associated link/frequency band and a corresponding channel according to an indication in the multi-AP MLD sounding announce frame. Then, after an SIFS, the master AP MLD sends an NDP frame to the non-AP MLDs on a channel for sending the NDPA frame. If the master AP MLD does not participate in channel sounding, then after an SIFS following transmission of the multi-AP MLD sounding announce frame, a slave AP MLD firstly performing channel sounding sends an NDPA frame (i. e. step 3).

Step 3, for each slave AP MLD, the slave AP MLD sends an NDPA frame to a non-AP MLD on an associated link/frequency band and the corresponding channel according to the indication in the multi-AP MLD sounding announce frame. Then after an SIFS, the slave AP MLD sends an NDP frame to the non-AP MLD on a channel for sending the NDPA frame.

Step 4, if the master AP MLD can cover all non-AP MLDs (participating in channel sounding), the master AP MLD sends a BFRP trigger frame to all the non-AP MLDs on the channel previously sending the NDPA/NDP frame, to trigger/request all the non-AP MLDs to feed back NDP feedback frames carrying channel sounding results for the master AP MLD and the slave AP MLDs.

Step 5, if the master AP MLD is unable to cover all the non-AP MLDs (participating in channel sounding), each slave AP MLD sends, on the channel previously sending the NDPA/NDP frame, a BFRP trigger frame to a non-AP MLD in an order indicated by the multi-AP MLD sounding announce frame, to trigger/request the non-AP MLD to feed back an NDP feedback frame carrying a channel sounding result for the slave AP MLD.

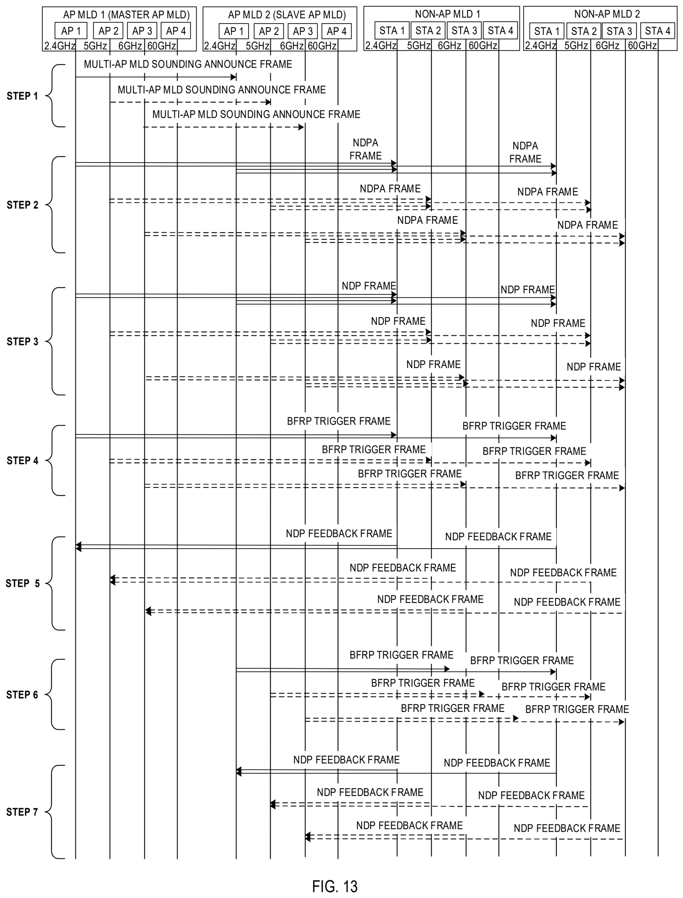

In some embodiments, the two AP MLDs and the two non-AP MLDs illustrated in FIG. 7 are taken as an example. Non-AP MLD 1 is associated with AP MLD 1, and non-AP MLD 2 is associated with AP MLD 2 (or AP MLD 2 is an anchor AP of non-AP MLD 2). AP MLD 1 is a master AP MLD, and AP MLD 2 is a slave AP MLD and is managed and controlled by AP MLD 1. AP MLD 1 and AP MLD 2 perform J-TX for non-AP MLD 1 by using link 1 and link 3 of 2.4GHz respectively. Specifically, a procedure of joint channel sounding with explicit feedback is illustrated in FIG. 13, in which AP MLDs participating in channel sounding send NDPA frames and/or NDP frames to non-AP MLDs at the same time. The detailed elaboration is as follows.

Step 1, a master AP MLD sends a multi-AP MLD sounding announce frame to slave AP MLDs, to notify the slave AP MLDs to start channel sounding. The multi-AP MLD sounding announce frame indicates information of links/frequency band(s) and a corresponding channel(s) used for the slave AP MLDs and the master AP MLD (if the master AP MLD participates in channel sounding) to perform channel sounding.

Step 2, after an SIFS following transmission of the multi-AP MLD sounding announce frame by the master AP MLD, AP MLDs (for example, AP MLD 1 and AP MLD 2) participating in joint channel sounding send NDPA frames to non-AP MLDs on associated links/frequency band(s) and a corresponding channel(s) according to an indication in the multi-AP MLD sounding announce frame.

Step 3, after an SIFS, the AP MLDs (for example, AP MLD 1 and AP MLD 2) participating in joint channel sounding send NDP frames to the non-AP MLDs on the associated link/frequency band and the corresponding channel according to the indication in the multi-AP MLD sounding announce frame/NDPA frames.

Step 4, if the master AP MLD is unable to cover all non-AP MLDs (participating in channel sounding), the master AP MLD (e. g., AP MLD 1) sends a BFRP trigger frame to an associated non-AP MLD, to trigger/request the non-AP MLD to feed back an NDP feedback frame carrying a channel sounding result for the AP MLD (e. g., AP MLD 1). If the master AP MLD can cover all the non-AP MLDs participating in channel sounding, the master AP MLD sends a BFRP trigger frame to the non-AP MLDs after an SIFS following transmission of the NDP frame, to trigger/request the non-AP MLDs to feed back NDP feedback frames carrying channel sounding results for the master AP MLD (e. g. AP MLD 1) and the slave AP MLDs (e. g. AP MLD 2). In this case, step 6 and step 7 are skipped.

Step 5, in response to the BFRP trigger frame from the master AP MLD (for example, AP MLD 1), the non-AP MLDs participating in joint channel sounding send the channel sounding results to the master AP MLD (for example, AP MLD 1) and the slave AP MLDs (for example, AP MLD 2) via the NDP feedback frames.

Step 6 (optional), if the master AP MLD is unable to cover all the non-AP MLDs (participating in channel sounding), each slave AP MLD sends a BFRP trigger frame to a non-AP MLD associated with the slave AP MLD in an order indicated by the multi-AP MLD sounding announce frame, to trigger/request the non-AP MLD to feed back an NDP feedback frame carrying a channel sounding result for the slave AP MLD (e. g., AP MLD 2).

Step 7 (optional), in response to the BFRP trigger frames from the slave AP MLDs (e. g. AP MLD 2), each non-AP MLD participating in joint channel sounding sends, via an NDP feedback frame, a channel sounding result to a slave AP MLD associated with the non-AP MLD (e. g. AP MLD 2).

In some embodiments, if the multiple AP MLDs include the first AP MLD and the multiple AP MLDs perform implicit channel sounding, the first AP MLD sends a sounding trigger frame to a first non-AP MLD according to information indicated by the multi-AP MLD sounding announce frame, where the sounding trigger frame is used for triggering or requesting the first non-AP MLD to feed back a sounding result, and the first non-AP MLD is a non-AP MLD associated with the first AP MLD in all non-AP MLDs participating in multi-AP MLD channel sounding. The first AP MLD receives an NDP frame sent by the first non-AP MLD, where the NDP frame contains a channel sounding result for the first AP MLD.

In some embodiments, if the first frame is a sounding trigger frame and the multiple AP MLDs perform implicit channel sounding, the first non-AP MLD sends the NDP frame to the first AP MLD, where the NDP frame contains the channel sounding result for the first AP MLD.

In some embodiments, the user information field of the sounding trigger frame includes a link ID field and a link ID extension field, and the link ID field and the link ID extension field jointly indicate an ID of a link used by the first AP MLD to perform multi-AP MLD channel sounding.

In some embodiments, the NDP frame includes a link ID information field, where the link ID information field includes a link ID field and/or a link ID extension field. If the link ID information field includes only the link ID field, the link ID field indicates an ID of a link that a channel sounding result carried in the NDP feedback frame corresponds to. Alternatively, if the link ID information field includes only the link ID extension field, the link ID extension field indicates the ID of the link that the channel sounding result carried in the NDP feedback frame corresponds to. Alternatively, the link ID information field includes both the link ID field and the link ID extension field, the link ID field and the link ID extension field jointly indicate the ID of the link that the channel sounding result carried in the NDP frame corresponds to.

In some embodiments, the NDP frame includes a multi-link element or a basic multi-link element. A link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

In some embodiments, if the multiple AP MLDs perform channel sounding in sequence, the multiple AP MLDs trigger, in a sequence indicated by the multi-AP MLD sounding announce frame, all the non-AP MLDs participating in multi-AP MLD channel sounding to send the NDP frames.

In some embodiments, if the multiple AP MLDs perform channel sounding synchronously at the same time, the multiple AP MLDs trigger, according to a start time indicated by the multi-AP MLD sounding announce frame, all the non-AP MLDs participating in multi-AP MLD channel sounding to send the NDP frames synchronously at the same time.

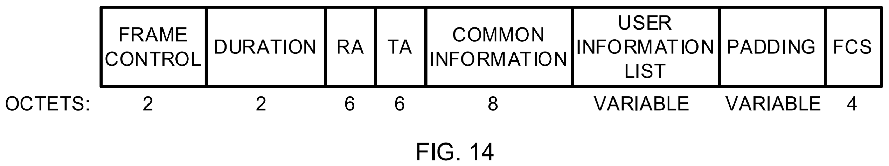

In some embodiments, a frame format of the sounding trigger frame is illustrated in FIG. 14. The sounding trigger frame is a variant of a trigger frame. For example, a trigger type of a common information field is set to any value within 8~15, to indicate that the trigger frame is a sounding trigger frame. The AP MLD sends the frame to trigger non-AP MLDs indicated by a user information list field to send, according to parameters and configurations indicated by the sounding trigger frame, NDP frames to perform channel sounding.

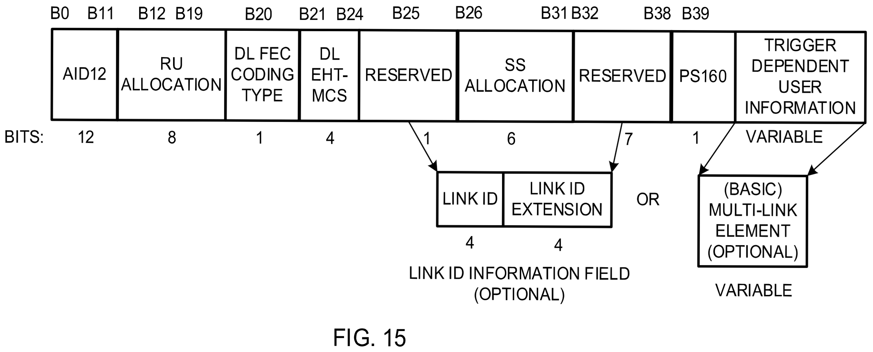

Specifically, the user information list field of the sounding trigger frame can include one or more user information fields. The user information field is illustrated in FIG. 15, in which eight bits (B25, B32, ..., B38) are used as a link ID field and a link ID extension, to indicate on which link a non-AP MLD corresponding to an AID12 is to send an NDP frame for channel sounding. It should be noted that, in this case, the user information field can only indicate an ID of one link, which means that the master AP MLD can only trigger, via the sounding trigger frame, the AP MLD to use one link to perform channel sounding.

In addition to the above scheme, a (basic) multi-link element can be carried in the last trigger dependent user information field of the user information field, to indicate on which link/links the non-AP MLD corresponding to the AID12 is to send the NDP frame for channel sounding. It should be noted that, in this case, the (basic) multi-link element carried in the trigger dependent user information field of the user information field can indicate IDs of multiple links, which means that the master AP MLD can trigger, via the sounding trigger frame, the AP MLD to perform channel sounding by using one or more links. Alternatively, the trigger frame may not indicate link ID-related information, because sending the trigger frame on a link indicates that channel sounding is to be performed on the link for sending the trigger frame.

Specifically, as illustrated in FIG. 15, the user information field includes the following fields: an AID12 field (occupying 12 bits), a resource unit (RU) allocation field (occupying 8 bits), a downlink (DL) forward error correction (FEC) coding type field (occupying 1 bit), a DL EHT modulation and coding scheme (EHT-MCS) field (occupying 4 bits), a spatial streams (SS) allocation field (occupying 6 bits), a link ID information field (occupying 8 bits), a primary secondary (PS) 160 field (occupying 1 bit), and a trigger dependent user information field (occupying variable number of bits). The link ID information field includes a link ID field (occupying 4 bits) and a link ID extension field (occupying 4 bits). The trigger dependent user information field includes a (basic) multi-link element (occupying variable number of bits).

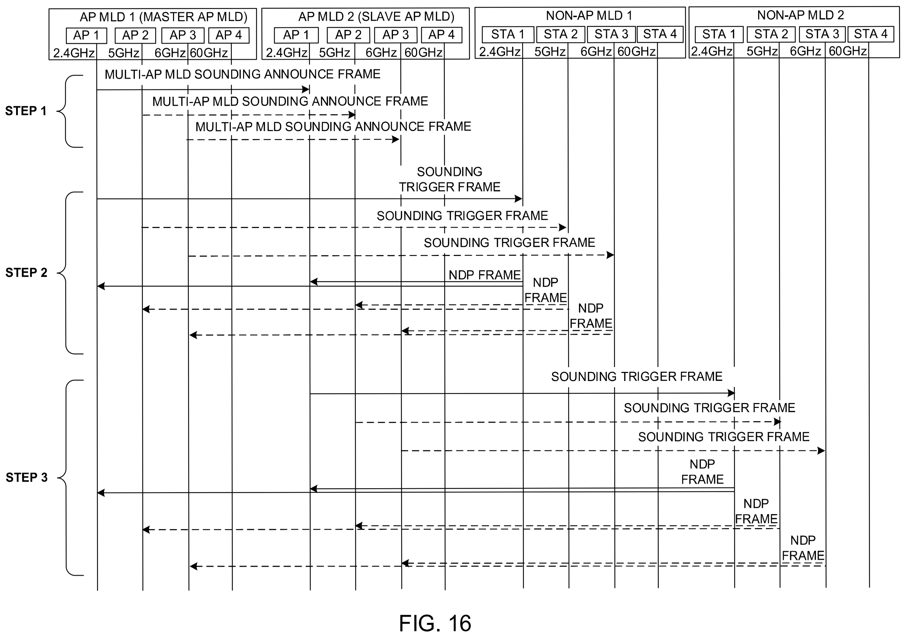

In some embodiments, the two AP MLDs and the two non-AP MLDs illustrated in FIG. 7 are taken as an example. Non-AP MLD 1 is associated with AP MLD 1, and non-AP MLD 2 is associated with AP MLD 2 (or AP MLD 2 is an anchor AP of non-AP MLD 2). AP MLD 1 is a master AP MLD, and AP MLD 2 is a slave AP MLD and is managed and controlled by AP MLD 1. AP MLD 1 and AP MLD 2 perform J-TX for non-AP MLD 1 by using link 1 and link 3 of 2.4GHz respectively. Specifically, a procedure of sequential channel sounding with implicit feedback is illustrated in FIG. 16, in which AP MLDs participating in channel sounding trigger, in sequence (at different times), non-AP MLDs to send NDP frames, and each of the AP MLDs directly obtains a channel sounding result. The detailed elaboration is as follows.

Step 1, a master AP MLD sends a multi-AP MLD sounding announce frame to slave AP MLDs, to notify the slave AP MLDs to start channel sounding. The multi-AP MLD sounding announce frame indicates a sequence in which the slave AP MLDs trigger non-AP MLDs to perform channel sounding/times at which the slave AP MLDs trigger the non-AP MLDs to perform channel sounding. In addition, the multi-AP MLD sounding announce frame further indicates information of links/frequency band(s) and a corresponding channel(s) used for the slave AP MLDs and the master AP MLD (if the master AP MLD participates in channel sounding) to trigger the non-AP MLDs to perform channel sounding.

Step 2, if the master AP MLD participates in channel sounding, then after an SIFS following transmission of the multi-AP MLD sounding announce frame, the master AP MLD sends a sounding trigger frame to a target non-AP MLD (i. e. non-AP MLD 1) associated with the master AP MLD on an associated link/frequency band and a corresponding channel according to an indication in the multi-AP MLD sounding announce frame. Then after an SIFS, in response to the sounding trigger frame, the non-AP MLD sends an NDP frame to the AP MLD on an associated link/frequency band and a corresponding channel indicated by the multi-AP MLD sounding announce frame. If the master AP MLD does not participate in channel sounding, then after an SIFS following transmission of the multi-AP MLD sounding announce frame, a slave AP MLD firstly performing channel sounding sends a sounding trigger frame (i. e. step 3).

Step 3, for each slave AP MLD, the slave AP MLD sends a sounding trigger frame to a target non-AP MLD associated with the slave AP MLD on an associated link/frequency band and a corresponding channel according to the indication in the multi-AP MLD sounding announce frame. Then after an SIFS, the non-AP MLD sends an NDP frame to the AP MLD on the link/frequency band and the corresponding channel indicated by the multi-AP MLD sounding announce frame, thereby completing channel sounding.

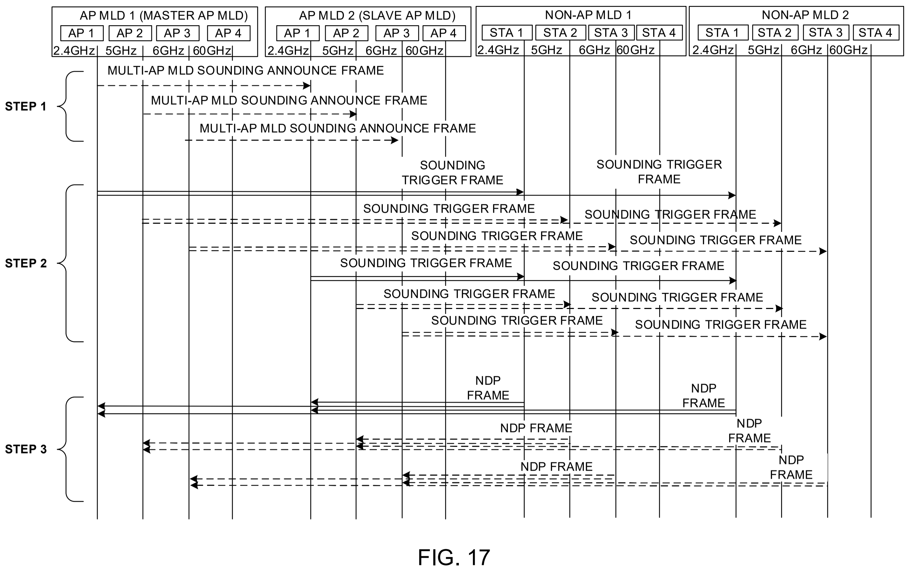

In some embodiments, the two AP MLDs and the two non-AP MLDs illustrated in FIG. 7 are taken as an example. Non-AP MLD 1 is associated with AP MLD 1, and non-AP MLD 2 is associated with AP MLD 2 (or AP MLD 2 is an anchor AP of non-AP MLD 2). AP MLD 1 is a master AP MLD, and AP MLD 2 is a slave AP MLD and is managed and controlled by AP MLD 1. AP MLD 1 and AP MLD 2 perform J-TX for non-AP MLD 1 by using link 1 and link 3 of 2.4GHz respectively. Specifically, a procedure of joint channel sounding with implicit feedback is illustrated in FIG. 17, in which AP MLDs participating in channel sounding trigger non-AP MLDs to send NDP frames at the same time, and each of the AP MLDs directly obtains a channel sounding result. The detailed elaboration is as follows.

Step 1, a master AP MLD sends a multi-AP MLD sounding announce frame to slave AP MLDs, to notify the slave AP MLDs to start channel sounding. The multi-AP MLD sounding announce frame indicates information of links/frequency band(s) and a corresponding channel(s) used for the slave AP MLDs and the master AP MLD (if the master AP MLD participates in channel sounding) to trigger non-AP MLDs to perform channel sounding.

Step 2, after an SIFS, each of the master AP MLD (if the master AP MLD participates in the joint sounding) and the slave AP MLDs participating in channel sounding send a sounding trigger frame to an associated target non-AP MLD on an associated link/frequency band and a corresponding channel in an order indicated by the multi-AP MLD sounding announce frame.

Step 3, after an SIFS, for each non-AP MLD, the non-AP MLD sends an NDP frame to a target AP MLD associated with the non-AP MLD on an associated link/frequency band and a corresponding channel according to an indication in the sounding trigger frame, thereby completing channel sounding.

In some embodiments, the first virtual AP MLD can consist of some or all of AP MLDs in a multi-AP MLD candidate set. Optionally, the first virtual AP MLD can be a logical AP MLD, that is, the first AP MLD and one or more AP MLDs form the first virtual AP MLD.

In some embodiments, the first virtual AP MLD has a virtual MLD medium access control (MAC), where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a physical (PHY) layer.

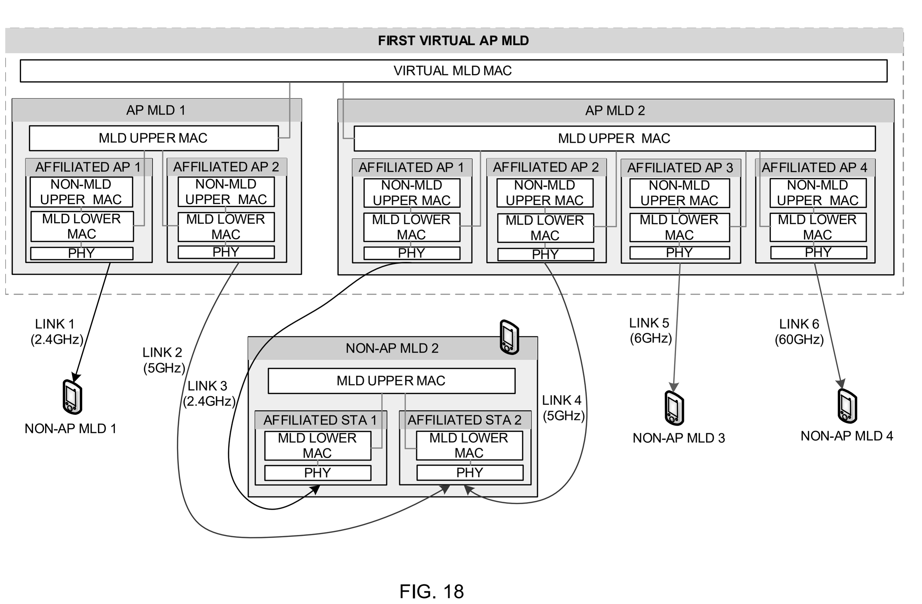

In some embodiments, the first virtual AP MLD is illustrated in FIG. 18. The first virtual AP MLD includes AP MLD 1 and AP MLD 2, where AP MLD 1 and AP MLD 2 are two AP MLDs each having all of an MLD upper MAC, a non-MLD upper MAC, an MLD lower MAC, and a PHY. The virtual MLD MAC of the first virtual AP MLD is located in an independent controller device. The virtual MLD MAC is connected to the MLD upper MAC of AP MLD 1, the MLD upper MAC of AP MLD 1 is connected to the MLD lower MAC of AP MLD 1. The virtual MLD MAC is connected to the MLD upper MAC of AP MLD 2, the MLD upper MAC of the AP MLD 2 is connected to the MLD lower MAC of AP MLD 2. The virtual MLD MAC manages and controls AP MLD 1 and AP MLD 2.

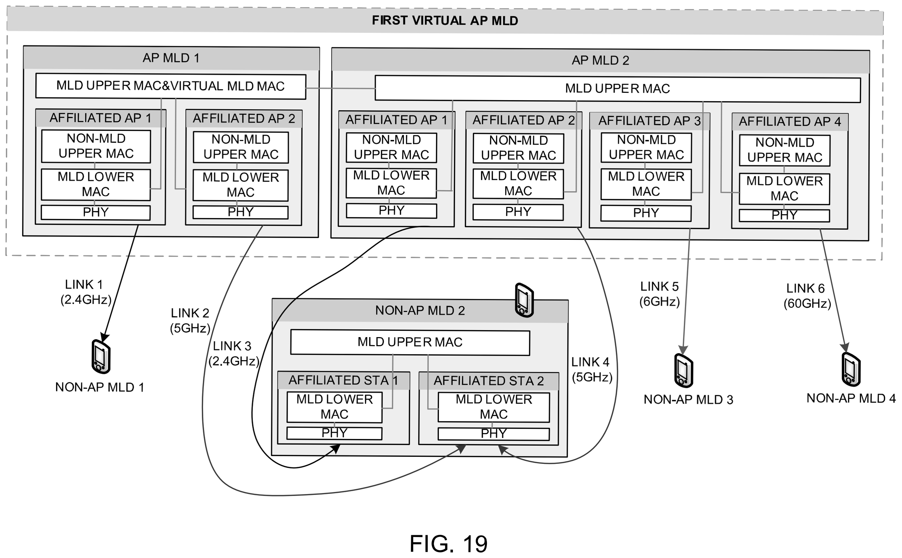

In some embodiments, the first virtual AP MLD is illustrated in FIG. 19. The first virtual AP MLD includes AP MLD 1 and AP MLD 2, where AP MLD 1 and AP MLD 2 are two AP MLDs each having all of an MLD upper MAC, a non-MLD upper MAC, an MLD lower MAC, and a PHY. The virtual MLD MAC of the first virtual AP MLD is located in AP MLD 1 (master AP MLD). The virtual MLD MAC is connected to the MLD upper MAC of AP MLD 1, and the MLD upper MAC of AP MLD 1 is connected to the MLD lower MAC of AP MLD 1. The virtual MLD MAC is connected to the MLD upper MAC of AP MLD 2, and the MLD upper MAC of AP MLD 2 is connected to the MLD lower MAC of AP MLD 2. The virtual MLD MAC manages and controls AP MLD 1 and AP MLD 2. That is, AP MLD 1 has a virtual MLD MAC for managing and controlling all the AP MLDs in the virtual AP MLD. The MLD upper MACs of the AP MLDs in the virtual AP MLD are connected to the virtual MLD MAC of AP MLD 1.

Specifically, as illustrated in FIG. 18 and FIG. 19, AP MLD 1 can set up multiple links (link 1 and link 2) with non-AP MLD 1 and non-AP MLD 2, and AP MLD 2 can set up multiple links (link 3, link 4, link 5, and link 6) with non-AP MLD 2, non-AP MLD 3, and non-AP MLD 4.

Optionally, as illustrated in FIG. 18 and FIG. 19, AP MLD 1 and AP MLD 2 provide data transmission service at the same time for non-AP MLD 2 on link 2 and link 4 of 5GHz respectively, which can improve communication rate and reduce communication delay of non-AP MLD 2 to some extent. Since pathloss of a 5GHz signal is more serious than pathloss of 2.4GHz of lower frequency band and thus non-AP MLD 2 may have poor communication stability, AP MLD 2 can also provide service for non-AP MLD 2 by using link 3 of 2.4GHz.

Optionally, as illustrated in FIG. 18 and FIG. 19, since non-AP MLD 2 has set up multiple links with AP MLD 1 and AP MLD 2, even if non-AP MLD 2 moves away from AP MLD 1 and thus causes disconnection with link 2, non-AP MLD 2 is still connected with AP MLD 2 over link 3 and link 4, which can realize seamless roaming/seamless transition of the non-AP MLD.

Specifically, as illustrated in FIG. 18 and FIG. 19, the first virtual AP MLD can also be regarded as a three-layer network architecture.

In some embodiments, the virtual MLD MAC of the first virtual AP MLD manages link assignment for an entire VBSS corresponding to the first virtual AP MLD. For example, a non-AP MLD sends an association request frame to an anchor AP in the virtual AP MLD, so as to associate with and perform multi-link setup with all affiliated AP MLDs in the virtual AP MLD. The controller of the virtual AP MLD manages link ID assignment for the entire VBSS, and therefore, a link ID that is different from a link ID assigned previously can be assigned to the non-AP MLD for multi-link communication between the non-AP MLD and each AP MLD in the virtual AP MLD. That is, during multi-AP MLD coordination, the controller of the virtual AP MLD is required to assign different link IDs to the non-AP MLD and the virtual AP MLD, which prevents the non-AP MLD from setting up links having the same link ID with different AP MLDs, in which case mapping error may occur during TID-to-link mapping.

In some embodiments, after the first non-AP MLD is successfully associated with a target multi-AP MLD candidate set, for links set up between the first non-AP MLD and the first AP MLD, some of them are used only for transmitting control plane information and the rest of them are used only for transmitting data plane information. Alternatively, some or all of the links set up between the first non-AP MLD and the first AP MLD are used for transmitting control plane information and data plane information.

For example, as illustrated in FIG. 18 and FIG. 19, link 3 between AP MLD 2 and non-AP MLD 2 can be used only as a control plane, that is, used only for transmitting a control frame and/or a management frame, and then link 2 between AP MLD 1 and non-AP MLD 2 and link 4 between AP MLD 2 and non-AP MLD 2 are used as data planes, that is, used for transmitting data frames. Alternatively, link 3 between AP MLD 2 and non-AP MLD 2 can be used for transmitting a control frame and a management frame, and can also be used for transmitting a data frame. The disclosure is not limited in this regard.

In some embodiments, after the first non-AP MLD is successfully associated with the target multi-AP MLD candidate set, one affiliated STA of the first non-AP MLD is allowed for setting up links with affiliated APs of multiple AP MLDs in the first virtual AP MLD. Specifically, one affiliated STA of a non-AP MLD can set up links with affiliated APs of multiple AP MLDs. Specifically, after one affiliated non-AP STA (or affiliated AP) of a non-AP MLD (or AP MLD) has set up a link(s) with an affiliated AP (or affiliated non-AP STA) of one AP MLD (or non-AP MLD), the affiliated non-AP STA (or affiliated AP) of the non-AP MLD (or AP MLD) is allowed for setting up a link(s) with an affiliated AP (or affiliated non-AP STA) of another one AP MLD (or non-AP MLD).

In some embodiments, after the first non-AP MLD is successfully associated with the target multi-AP MLD candidate set, multiple links corresponding to one affiliated STA of the first non-AP MLD are used for transmitting the same PPDU. Alternatively, multiple links corresponding one affiliated STA of the first non-AP MLD are used for transmitting different PPDUs.

For example, as illustrated in FIG. 18 and FIG. 19, link 2 between AP MLD 1 and non-AP MLD 2 and link 4 between AP MLD 2 and non-AP MLD 2 can be used for transmitting the same PPDU (i. e. identical data) to improve communication reliability/stability. Alternatively, link 2 between AP MLD 1 and non-AP MLD 2 and link 4 between AP MLD 2 and non-AP MLD 2 can be used for transmitting different PPDUs (i. e., different data) to improve communication rate/throughput. The disclosure is not limited in this regard.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD. That is, an EHT non-AP MLD supporting only 802.11be is associated with and performs multi-link setup with only one AP MLD. During multi-link setup, a link ID assigned to the EHT non-AP MLD by the AP MLD is assigned centrally by the virtual MLD MAC, instead of assigning a link ID to the EHT non-AP MLD separately, thereby avoiding link ID conflict.

In some embodiments, a virtual MLD MAC sublayer of the first virtual AP MLD can have the following functions:
authentication, association, and reassociation between an AP MLD and a non-AP MLD;
management of AP MLD's sequence number (SN)/packet number (PN) assignment for frames to be encrypted by pairwise transient key (PTK) for unicast frames;
management of AP MLD's power save buffering of individually addressed frames (only on AP MLD);
selection of the MLD upper MAC sublayer for transmission;
merging reception of MAC protocol data units (MPDU) from two or more links from different AP MLDs;
reordering of packets of AP MLDs to ensure in-order delivery per each block ack session;
management of AP MLD's block ack scoreboarding for individually addressed frames (in collaboration with the MLD upper MAC sublayer and the MLD lower MAC sublayer). Optionally, the Virtual MLD MAC delivers the block ack record on one link to the MLD upper MAC sublayer and the MLD lower MAC sublayer of other links;
MLD level management information exchange/indication via the MLD upper MAC sublayer;
coordination of distribution and management of enhanced distributed channel access (EDCA) parameters across the MLD upper sublayers of the links.

In some embodiments, an MLD upper MAC sublayer of the first virtual AP MLD can have the following functions:
authentication, association, and reassociation (between an AP MLD and a non-AP MLD);
security association (e. g., pairwise master key security association, pairwise transient key security association); distribution of group temporal key (GTK)/integrity group temporal key (IGTK)/beacon integrity group temporal key (BIGTK));
SN/PN assignment for frames to be encrypted by PTK for unicast frames;
SN assignment for group addressed MAC service data units (MSDUs)
power save buffering of individually addressed frames (only on AP MLD);
encryption/decryption using PTK for unicast frames;
selection of the MLD lower MAC sublayer for transmission;
merging reception of MPDUs from two or more links;
reordering of packets to ensure in-order delivery per each block ack session
block ack scoreboarding for individually addressed frames (in collaboration with the MLD lower MAC sublayer). Optionally, the MLD upper MAC sublayer delivers the block ack record on one link to the MLD lower MAC sublayer of other links;
MLD level management information exchange/indication via the MLD lower MAC sublayer;
coordination of distribution and management of EDCA parameters across the MLD lower MAC sublayers of the links.

In some embodiments, an affiliated (non-MLO) upper MAC sublayer of the first virtual AP MLD can have the following functions:
non-MLO peer operations, above the MLD lower MAC sublayer;
maintenance of link specific GTK/IGTK/BIGTK (between an AP affiliated with the AP MLD and a non-AP STA affiliated with the non-AP MLD);
link specific encryption/decryption/integrity protection and PN assignment using GTK/IGTK/BIGTK (between an AP affiliated with the AP MLD and a non-AP STA affiliated with the non-AP MLD);
link-specific management information exchange/indication (e.g., beacon);
power save buffering of group addressed frames.

In some embodiments, an MLD lower MAC sublayer of the first virtual AP MLD can have the following functions:
link specific control information exchange/indication (e.g., request to send (RTS)/clear to send (CTS), acknowledgements (ACKs), NDP, etc.);
power save state and mode;
MAC address filtering for frame reception;
block ACK scoreboarding for individually addressed frames (in collaboration with the MLD upper MAC sublayer). Optionally, the MLD lower MAC sublayer receives the block ack record on the other links from the MLD upper MAC sublayer).

It should be noted that, the virtual MLD MAC and the MLD upper MAC are connected with each other via a MAC service access point (SAP) over a distribution system (DS). When the DS delivers the MAC service tuples to an AP MLD through distribution system access function (DSAF), the (coordinator of) virtual AP MLD then determines when and how to deliver the MAC service tuples to the AP MLD's MLD upper MAC sublayer (via the MAC SAP).

Therefore, in embodiments of the disclosure, it is possible to realize multi-AP MLD joint channel sounding with the first virtual AP MLD.

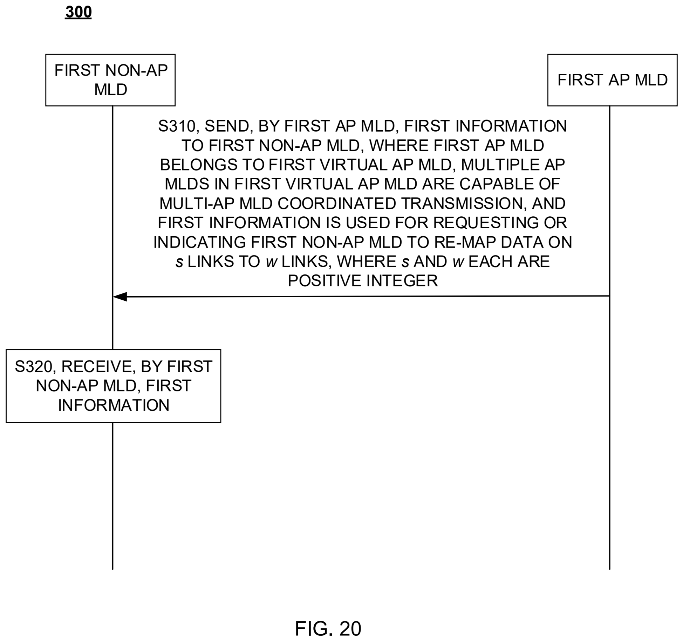

FIG. 20 is a schematic flowchart of a wireless communication method 300 according to embodiments of the disclosure. As illustrated in FIG. 20, the wireless communication method 300 can include at least some of the following.

S310, a first AP MLD sends first information to a first non-AP MLD, where the first AP MLD belongs to a first virtual AP MLD, multiple AP MLDs in the first virtual AP MLD are capable of multi-AP MLD coordinated transmission, and the first information is used for requesting or indicating the first non-AP MLD to re-map data on *s* links to *w* links, where *s* and *w* each are a positive integer.

S320, the first non-AP MLD receives the first information sent by the first AP MLD.

In some embodiments, one AP MLD may belong to one or more virtual AP MLDs.

In some embodiments, each virtual AP MLD shall have only one master AP MLD, while the remaining AP MLD(s) is a slave AP MLD.

In some embodiments, each virtual AP MLD may support one or more multi-AP MLD coordination modes.

In embodiments of the disclosure, "field" can also be referred to as "sub-field". One field can occupy one or more bytes/octets, or can occupy one or more bits.

In some embodiments, the first AP MLD is a master AP MLD. Alternatively, in some embodiments, the first AP MLD can be a slave AP MLD. Embodiments of the disclosure are not limited in this regard.

In embodiments of the disclosure, a schematic diagram illustrating coordinated transmission by multiple AP MLDs using multiple links is illustrated in FIG. 7. By means of multi-AP MLD coordination, it is possible to realize seamless roaming/transition of a non-AP MLD. Link 1 and link 2 are set up between non-AP MLD 1 and AP MLD 1, and link 3 is set up between non-AP MLD 1 and AP MLD 2. If non-AP MLD 1 moves away from AP MLD 1 and approaches AP MLD 2, signal quality of link 1 and link 2 may be degraded due to long distance, or it is detected by non-AP MLD 1 that a received signal strength indicator (RSSI) of AP MLD 1 is lower than a preset threshold and thus outage occurs. In this case, AP MLD 1 and/or AP MLD 2 can carry a reconfiguration multi-link element in a beacon frame and/or a probe response frame, to announce removal of affiliated APs corresponding to link 1 and link 2 by the AP MLD. However, non-AP MLD 1 is still connected to AP MLD 2 over link 3. With a TID-to-link mapping mechanism, AP MLD 2 can re-map data on link 1 and link 2 to link 3. As such, AP MLD 2 can continue to serve non-AP MLD 1 over link 3, which can realize seamless roaming of non-AP MLD 1, thereby ensuring reliability of communication.

In some embodiments, the s links are links that correspond to the first non-AP MLD and have outages, and the *w* links are links that correspond to the first non-AP MLD and do not have outages.

In some embodiments, the *w* links are links set up between the first non-AP MLD and the first AP MLD, and the s links are links set up between the first non-AP MLD and a second AP MLD in the first virtual AP MLD.

In some embodiments, the *s* links are links set up between the first non-AP MLD and the first AP MLD, and the *w* links are links set up between the first non-AP MLD and a second AP MLD in the first virtual AP MLD.

In some embodiments, the first information is a TID-to-link mapping element. The TID-to-link mapping element includes a link mapping field of at least one TID, and a link mapping of TID *n* field (that is, link mapping field of TID *n*) in the link mapping field of the at least one TID indicates a link to which TID *n* is mapped, where *n* is a non-negative integer.

In some embodiments, a link mapping field of a TID in the link mapping field of the at least one TID occupies *k* bytes, where *k* is a positive integer and *k*>2. Optionally, *k*=32.

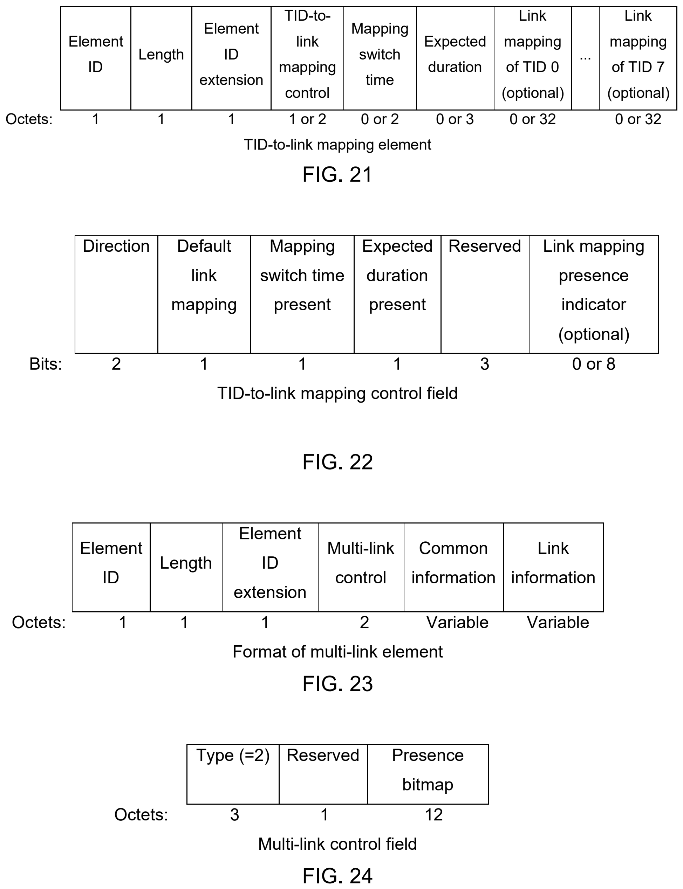

In some embodiments, the TID-to-link mapping element is illustrated in FIG. 21. The TID-to-link mapping element can include the following fields: an element ID field (occupying 1 octet), a length field (occupying 1 octet), an element ID extension field (occupying 1 octet), a TID-to-link mapping control field (occupying 1 or 2 octets), a mapping switch time field (occupying 0 or 2 octets), an expected duration (occupying 0 or 3 octets), a link mapping of TID 0 field (occupying 0 or 32 octets), a link mapping of TID 1 field (occupying 0 or 32 octets), ..., and a link mapping of TID 7 field (occupying 0 or 32 octets). The TID-to-link mapping control field is illustrated in FIG. 22. The TID-to-link mapping control field includes the following fields: a direction field (occupying 2 bits), a default link mapping field (occupying 1 bit), a mapping switch time present field (occupying 1 bit), an expected duration present field (occupying 1 bit), and a link mapping presence indicator (occupying 0 or 8 bits). Specifically, a value of 1 in bit position *i* (where *i* = 0, 1,...,254) of the link mapping of TID *n* field indicates that TID *n* is mapped to the link associated with the link ID *i* for the direction as specified in the direction subfield. A value of 0 in bit position *i* indicates that the TID *n* is not mapped to the link associated with the link ID *i*. When the default link mapping subfield is set to 1, this field is not present.

In some embodiments, the first information is carried in a beacon frame or a probe response frame, i. e., the TID-to-link mapping element is carried in a beacon frame or a probe response frame.

In some embodiments, if the first information is carried in a beacon frame, the beacon frame further includes a reconfiguration multi-link element. Alternatively, if the first information is carried in a probe response frame, the probe response frame further includes a reconfiguration multi-link element. The reconfiguration multi-link element is used for announcing release or disconnection of connections with affiliated APs corresponding to the s links.

In some embodiments, a link information field of the reconfiguration multi-link element includes at least one per-STA profile field. A link ID field of a per-STA profile field in the at least one per-STA profile field indicates an ID of a link for a reported STA during multi-AP MLD coordination. Alternatively, a link ID extension field of the per-STA profile field in the at least one per-STA profile field indicates the ID of the link for the reported STA during multi-AP MLD coordination. Alternatively, the link ID field and the link ID extension field of the per-STA profile field in the at least one per-STA profile field jointly indicate the ID of the link for the reported STA during multi-AP MLD coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer. For example, *Q*₁=4, and *Q*₂=4.

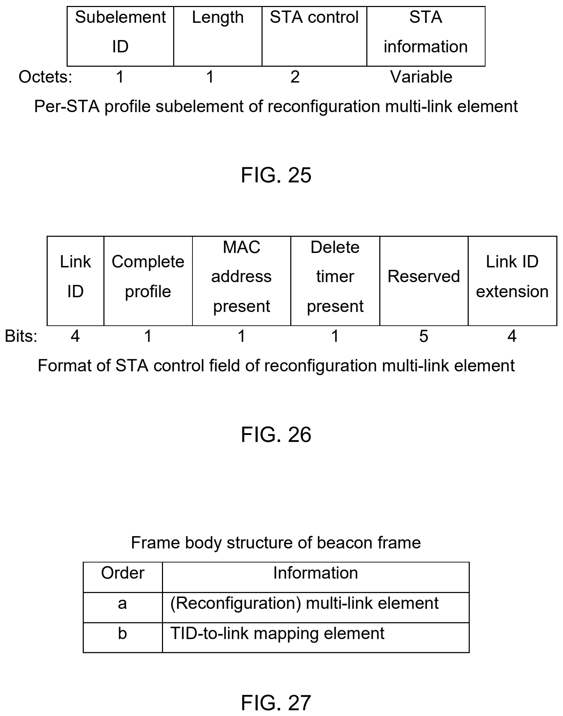

In some embodiments, a format of a multi-link element is illustrated in FIG. 23. Element ID = 255, and the element ID field and an element ID extension field jointly indicate an ID corresponding to the multi-link element. If element ID = 107, the element ID field is used for uniquely determining that a current element is a multi-link element. A length field indicates a length of the current element. A multi-link control field is illustrated in FIG. 24, where a type field indicates a sub-type of the current multi-link element, and a presence bitmap field indicates which fields are present in a common information field of the multi-link element. A link information field carries link-related information for an MLD, where the length and content of the link information field are variable and the link information field includes one or more subelements. Specifically, the meanings of the values of the type field of the multi-link control field is illustrated in Table 2. If the "type" of the multi-link control field is equal to 2, it indicates that the multi-link element is a reconfiguration multi-link element. Optionally, a link information field of the reconfiguration multi-link element includes one or more per-STA profile subelements. A format of the per-STA profile subelement is illustrated in FIG. 25. A format of an STA control field is illustrated in FIG. 26, where the first 4 bits (link ID) is defined as link ID, and 4 bits of the last 9 reserved bits are defined as link ID extension and indicate a link ID jointly with the first four bits (link ID).

**Table 2**

| Type field value | Multi-Link element variant name |
|---|---|
| 0 | Basic |
| 1 | Probe request |
| 2 | Reconfiguration |
| 3 | Tunneled direct link setup (TDLS) |
| 4 | Priority access |
| 5-7 | Reserved |

In some embodiments, a frame body structure of the beacon frame is illustrated in FIG. 27. A (reconfiguration) multi-link element carried in the beacon frame sent by the first AP MLD is used for announcing removal of a certain affiliated AP(s), and/or a TID-to-link mapping element carried in the beacon frame sent by the first AP MLD is used for data/TID re-mapping.

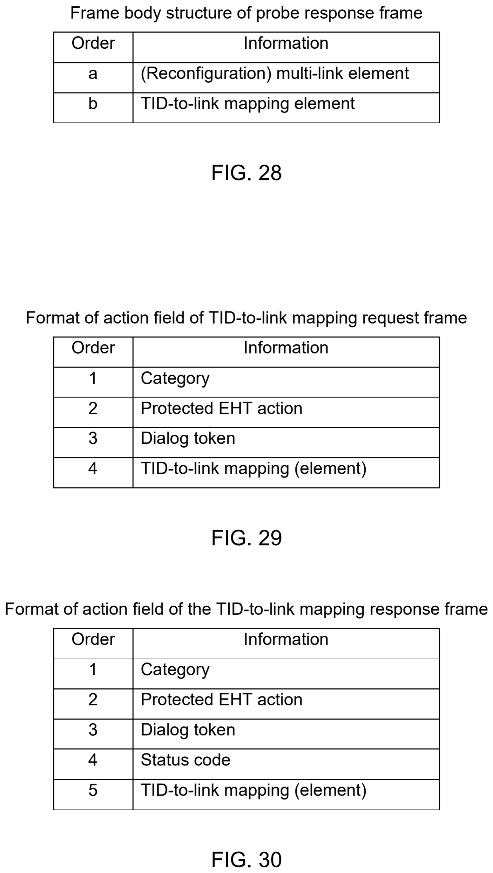

In some embodiments, a frame body structure of the probe response frame is illustrated in FIG. 28. A (reconfiguration) multi-link element carried in the probe response frame sent by the first AP MLD is used for announcing removal of a certain affiliated AP(s), and/or a TID-to-link mapping element carried in the probe response frame sent by the first AP MLD is used for data/TID re-mapping.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

For example, the action field of the TID-to-link mapping request frame is illustrated in FIG. 29. The action field includes the TID-to-link mapping element that indicates a mapping from TIDs to links.

In some embodiments, the first AP MLD receives a TID-to-link mapping response frame sent by the first non-AP MLD. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

For example, the action field of the TID-to-link mapping response frame is illustrated in FIG. 30. The action field includes the TID-to-link mapping element that indicates a mapping from TIDs to links.

In some embodiments, the first AP MLD sends a beacon frame or a probe response frame to the first non-AP MLD. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, a link information field of the reconfiguration multi-link element includes at least one per-STA profile field. A link ID field of a per-STA profile field in the at least one per-STA profile field indicates an ID of a link for a reported STA during multi-AP MLD coordination. Alternatively, a link ID extension field of the per-STA profile field in the at least one per-STA profile field indicates the ID of the link for the reported STA during multi-AP MLD coordination. Alternatively, the link ID field and the link ID extension field of the per-STA profile field in the at least one per-STA profile field jointly indicate the ID of the link for the reported STA during multi-AP MLD coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer. For example, *Q*₁=4, and *Q*₂=4.

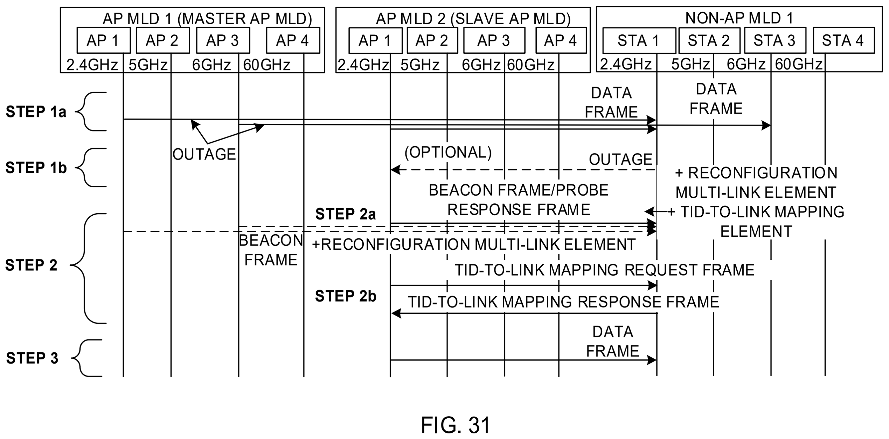

In some embodiments, for a scenario where multiple AP MLDs perform coordinated transmission using multiple links illustrated in FIG. 7, by means of multi-AP MLD coordination, it is possible to implement a procedure of seamless roaming/transition of non-AP MLD 1. As illustrated in FIG. 31, the procedure mainly includes the following steps.

Step 1a, since link 1 and link 2 are set up between non-AP MLD 1 and AP MLD 1 and link 3 is set up between non-AP MLD 1 and AP MLD 2, AP MLD 1 sends data to non-AP MLD 1 over link 1 and link 2, and AP MLD 2 sends data to non-AP MLD 1 over link 3. If non-AP MLD 1 moves away from AP MLD 1 and approaches AP MLD 2, link 1 and link 2 may have outages due to degraded signal quality caused by long distance.

Step 1b, an STA sends an outage frame (or other frames carrying a MAC address and/or a link ID of an AP MLD experiencing outage) to AP MLD 2, to notify that link 1 and link 2 set up between AP MLD 1 and non-AP MLD 1 have outages (this step is optional).

Step 2, AP MLD 1 disconnects link 1 and link 2 with non-AP MLD 1, and AP MLD 1 and/or AP MLD 2 re-maps data on link 1 and link 2 to link 3, which can be implemented through step 2a and/or step 2b.

Step 2a, AP MLD 1 and/or AP MLD 2 sends a beacon frame/probe response frame to non-AP MLD 1. The beacon frame/probe response frame can carry a reconfiguration multi-link element to announce removal of affiliated APs corresponding to link 1 and link 2 by AP MLD 1. The beacon frame/probe response can also carry a TID-to-link mapping element for re-mapping data on link 1 and link 2 to link 3. It should be noted that, step 2a can be skipped if the beacon frame/probe response frame carries the TID-to-link mapping element for re-mapping data on link 1 and link 2 to link 3.

Step 2b, AP MLD 2 sends a TID-to-link mapping request frame to non-AP MLD 1 to request to re-map data on link 1 and link 2 to link 3. Non-AP MLD 1 feeds back a TID-to-link mapping response frame in response to the request from AP MLD 2. It should be noted that, step 2b can also be performed without performing step 2a.

Step 3, AP MLD 2 continues to send data to non-AP MLD 1 over link 3.

In some embodiments, the first AP MLD determines, according to link quality of the s links, that outage has occurred to the s links. Alternatively, the first AP MLD determines, according to location information or displacement information of the first non-AP MLD, that outage has occurred to the s links.

In some embodiments, the first AP MLD receives second information sent by the first non-AP MLD, where the second information indicates that outage has occurred to the s links. Optionally, the second information is carried in an outage frame.

In some embodiments, the first AP MLD receives third information sent by another AP MLD, where the third information indicates that outage has occurred to the s links.

In some embodiments, the second information or the third information includes at least one of: IDs of the s links, MAC addresses of AP MLDs corresponding to the s links, or MAC addresses of APs corresponding to the s links.

In some embodiments, the first AP MLD and one or more AP MLDs form the first virtual AP MLD.

In some embodiments, the first virtual AP MLD has a virtual MLD MAC. The virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the first virtual AP MLD is illustrated in FIG. 18 or FIG. 19. For details thereof, reference can be made to the related elaborations in the foregoing wireless communication method 200, which will not be described again herein.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

Therefore, in embodiments of the disclosure, it is possible to realize seamless roaming of a non-AP MLD with the first virtual AP MLD.

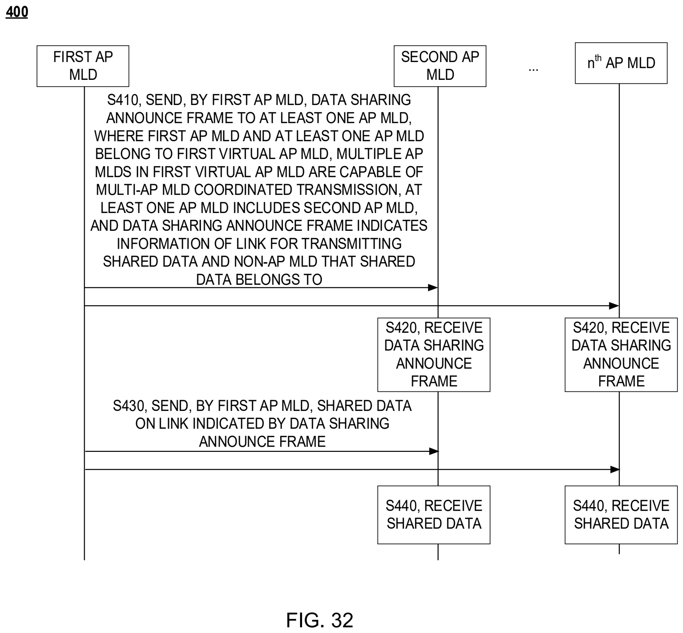

FIG. 32 is a schematic flowchart of a wireless communication method 400 according to embodiments of the disclosure. As illustrated in FIG. 32, the wireless communication method 400 can include at least some of the following.

S410, a first AP MLD sends a data sharing announce frame to at least one AP MLD, where the first AP MLD and the at least one AP MLD belong to a first virtual AP MLD, multiple AP MLDs in the first virtual AP MLD are capable of multi-AP MLD coordinated transmission, the at least one AP MLD includes a second AP MLD, and the data sharing announce frame indicates information of a link for transmitting shared data and a non-AP MLD that the shared data belongs to.

S420, the second AP MLD receives the data sharing announce frame sent by the first AP MLD.

S430, the first AP MLD sends the shared data on the link indicated by the data sharing announce frame.

S440, the second AP MLD receives the shared data that is sent by the first AP MLD on the link indicated by the data sharing announce frame.

In embodiments of the disclosure, an operation of an AP MLD in the at least one AP MLD is consistent with that of the second AP MLD. For details thereof, reference can be made to the second AP MLD, which will not be described again herein.

In some embodiments, one AP MLD may belong to one or more virtual AP MLDs.

In some embodiments, each virtual AP MLD shall have only one master AP MLD, while the remaining AP MLD(s) is a slave AP MLD.

In some embodiments, each virtual AP MLD may support one or more multi-AP MLD coordination modes.

In embodiments of the disclosure, "field" can also be referred to as "sub-field". One field can occupy one or more bytes/octets, or can occupy one or more bits.

In some embodiments, the first AP MLD is a master AP MLD. Alternatively, in some embodiments, the first AP MLD can be a slave AP MLD. Embodiments of the disclosure are not limited in this regard.

In embodiments of the disclosure, a schematic diagram of coordinated transmission by multiple AP MLDs using multiple links is illustrated in FIG. 7. If both AP MLD 1 and AP MLD 2 are going to transmit data (joint data transmission) to non-AP MLD 1 and non-AP MLD 2, AP MLD 1 acting as a master AP MLD needs to share data of non-AP MLD 1 and/or non-AP MLD 2 with AP MLD 2 acting as a slave AP MLD in advance over a backhaul link. If a wireless link is employed for data sharing between multiple AP MLDs, data sharing can be performed between AP MLDs over any one or more of links supported by all the AP MLDs. Specifically, data sharing can be performed between AP MLD 1 and AP MLD 2 over any one or more of links supported by both AP MLD 1 and AP MLD 2. For example, AP MLD 1 has set up link 1 of 2.4GHz and link 2 of 6GHz with non-AP MLD 1, and AP MLD 2 has set up link 3 of 2.4GHz with non-AP MLD 1 and set up link 4 of 5GHz and link 5 of 60GHz with non-AP MLD 2. In this case, a 6GHz link with less spectrum interference and larger available channel bandwidth can be used as a wireless (backhaul) link between AP MLD 1 and AP MLD 2, thereby ensuring stable and high-speed backhaul between AP MLDs.

In some embodiments, a data sharing announcement field of the data sharing announce frame includes a link ID information field and an MLD MAC address field, where the link ID information field indicates the information of the link for transmitting the shared data, and the MLD MAC address field indicates a MAC address of the non-AP MLD that the shared data belongs to.

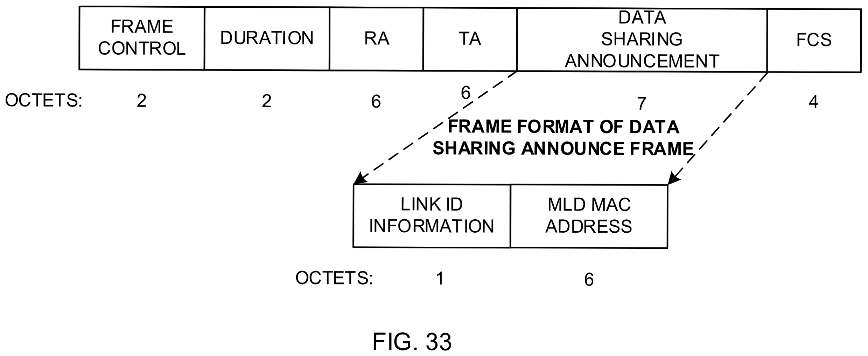

Specifically, a frame format of the data sharing announce frame is illustrated in FIG. 33. The link information field can indicate which link is to be used for data sharing between AP MLDs. The MLD MAC address indicates a MAC address of a non-AP MLD, that is, which non-AP MLD the shared data comes from.

In some embodiments, the first AP MLD receives an ACK frame fed back by some or all of the at least one AP MLD, where the ACK frame indicates that a corresponding AP MLD has successfully received the shared data.

In some embodiments, the first AP MLD shares data of at least one non-AP MLD with the at least one AP MLD over a backhaul link.

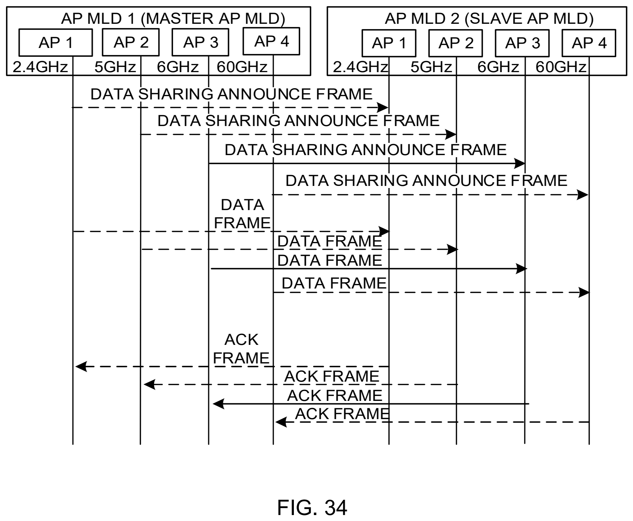

In some embodiments, if multiple AP MLDs are to perform J-TX, all the AP MLDs participating in J-TX shall have data of a target non-AP MLD. In this case, a master AP MLD (or a slave AP MLD) is required to transfer the data of the target non-AP MLD to all the AP MLDs participating in J-TX over a backhaul link. For a scenario in which multiple AP MLDs perform coordinated transmission using multiple links illustrated in FIG. 7, AP MLD 1 acting as a master AP MLD has data of a target non-AP MLD in order for J-TX. In order to transfer the data of the non-AP MLD to AP MLD 2 participating in J-TX, as illustrated in FIG. 34, the following steps are performed.

Step 1, AP MLD 1 sends a data sharing announce frame to AP MLD 2, to notify to AP MLD 2 which link is to be used for receiving data and which non-AP MLD the data comes from.

Step 2, AP MLD 1 sends data of a target non-AP MLD to AP MLD 2 on a link indicated by the data sharing announce frame.

Step 3, after receiving the data, AP MLD 2 sends an ACK to AP MLD 1 for acknowledgement.

In some embodiments, the first AP MLD and one or more AP MLDs form the first virtual AP MLD.

In some embodiments, the first virtual AP MLD has a virtual MLD MAC. The virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the first virtual AP MLD is illustrated in FIG. 18 or FIG. 19. For details thereof, reference can be made to the related elaborations in the foregoing wireless communication method 200, which will not be described again herein.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

Therefore, in embodiments of the disclosure, it is possible to realize data sharing between multiple AP MLDs with the first virtual AP MLD.

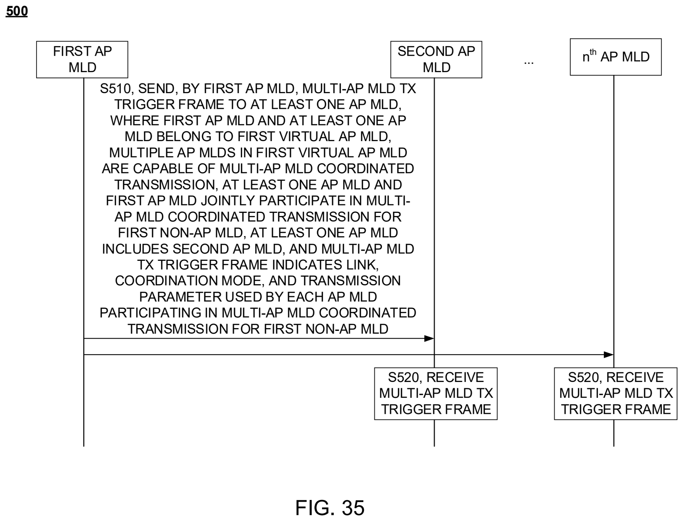

FIG. 35 is a schematic flowchart of a wireless communication method 500 according to embodiments of the disclosure. As illustrated in FIG. 35, the wireless communication method 500 can include at least some of the following.

S510, a first AP MLD sends a multi-AP MLD TX trigger frame to at least one AP MLD, where the first AP MLD and the at least one AP MLD belong to a first virtual AP MLD, multiple AP MLDs in the first virtual AP MLD are capable of multi-AP MLD coordinated transmission, the at least one AP MLD and the first AP MLD jointly participate in multi-AP MLD coordinated transmission for a first non-AP MLD, the at least one AP MLD includes a second AP MLD, and the multi-AP MLD TX trigger frame indicates a link, a coordination mode, and a transmission parameter used by each AP MLD participating in multi-AP MLD coordinated transmission for the first non-AP MLD.

S520, the second AP MLD receives the multi-AP MLD TX trigger frame sent by the first AP MLD.

In some embodiments, one AP MLD may belong to one or more virtual AP MLDs.

In some embodiments, each virtual AP MLD shall have only one master AP MLD, while the remaining AP MLD(s) is a slave AP MLD.

In some embodiments, each virtual AP MLD may support one or more multi-AP MLD coordination modes.

In embodiments of the disclosure, "field" can also be referred to as "sub-field". One field can occupy one or more bytes/octets, or can occupy one or more bits.

In some embodiments, the first AP MLD is a master AP MLD. Alternatively, in some embodiments, the first AP MLD can be a slave AP MLD. Embodiments of the disclosure are not limited in this regard.

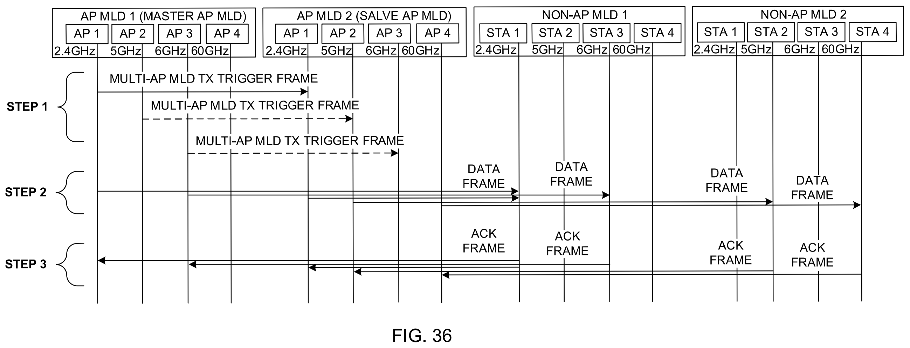

In embodiments of the disclosure, a schematic diagram illustrating coordinated transmission by multiple AP MLDs using multiple links is illustrated in FIG. 7. After completing channel sounding and data sharing, the AP MLDs participating in multi-AP MLD coordinated transmission can transmit data at the same time to one or more non-AP MLDs. As illustrated in FIG. 36, AP MLD 1 uses link 1 and link 2 and AP MLD 2 uses link 3 to jointly transmit data to non-AP MLD 1, which can specifically include the following steps, as illustrated in FIG. 36.

Step 1, AP MLD 1 acting as a master AP MLD sends a multi-AP MLD TX trigger frame to slave AP MLDs (for example, AP MLD 2) participating in coordinated transmission, so as to trigger the AP MLDs participating in coordinated transmission to send data frames at the same time, where the multi-AP MLD TX trigger frame indicates which link, coordination mode, and parameter is to be used for each AP MLD participating in coordinated transmission to send the data frame.

Step 2, according to an indication in the multi-AP MLD TX trigger frame, the AP MLDs participating in coordinated transmission send data frames at the same time to a target non-AP MLD on corresponding links by applying a specified coordination mode(s) and parameter(s). For example, AP MLD 1 sends the data frame to non-AP MLD 1 by using link 1 and link 2, AP MLD 2 sends the data frame to non-AP MLD 1 by using link 3, and AP MLD 2 sends the data frame to non-AP MLD 2 by using link 4 and link 5. In this case, sending of the data frame to non-AP MLD 1 on link 1 by AP MLD 1 and sending of the data frame to non-AP MLD 1 on link 3 by AP MLD 2 are performed on the same frequency band/channel, and therefore, a J-TX coordination mode is required.

Step 3, a non-AP MLD which has received data sent by a corresponding AP MLD feeds back an ACK frame to the AP MLD.

In some embodiments, a user information field of the multi-AP MLD TX trigger frame includes an AID field, and a link ID field and/or a link ID extension field. The AID field indicates an address of an AP MLD participating in multi-AP MLD coordinated transmission for the first non-AP MLD. The link ID field indicates an ID of a link used by the AP MLD indicated by the AID field, or the link ID extension field indicates the ID of the link used by the AP MLD indicated by the AID field, or the link ID field and the link ID extension field jointly indicate the ID of the link used by the AP MLD indicated by the AID field.

In some embodiments, a user information field of the multi-AP MLD TX trigger frame includes an AID field and a trigger dependent user information field, where the trigger dependent user information field includes a multi-link field or a basic multi-link field. The AID field indicates an address of an AP MLD participating in multi-AP MLD coordinated transmission for the first non-AP MLD. The multi-link field indicates an ID of a link used by the AP MLD indicated by the AID field, or the basic multi-link field indicates the ID of the link used by the AP MLD indicated by the AID field.

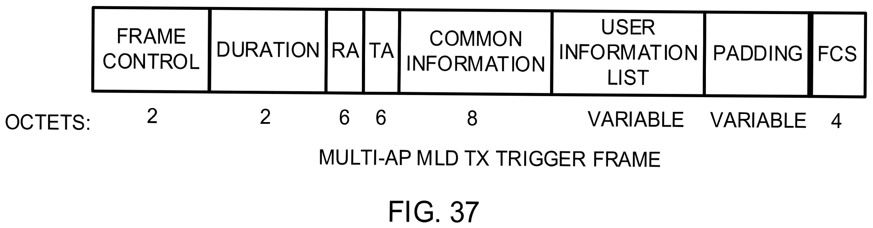

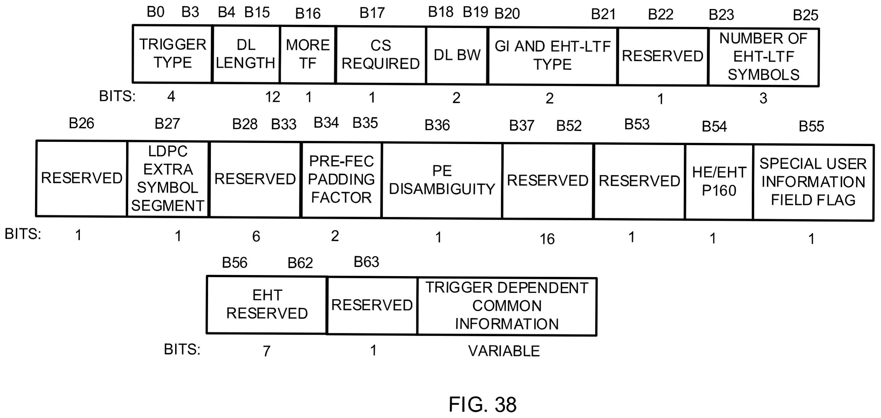

In some embodiments, a frame format of the multi-AP MLD TX trigger frame is illustrated in FIG. 37. The multi-AP MLD TX trigger frame is a variant of a trigger frame, and includes a common information field and a user information list field, where the user information list field includes one special user information field and/or one or more user information fields. The common information field of the multi-AP MLD TX trigger frame is illustrated in FIG. 38. A trigger type field is set to a value within 9~15 (for example, 9) to indicate that the trigger frame is a multi-AP MLD TX trigger frame that is used for triggering one or more AP MLDs to perform coordinated transmission.

Specifically, the common information field of the multi-AP MLD TX trigger frame includes the following fields: a trigger type field (occupying 4 bits), a DL length field (occupying 12 bits), a more trigger frame (TF) field (occupying 1 bit), a carrier sense (CS) required (occupying 1 bit), a DL BW (occupying 2 bits), a guard interval (GI) and EHT long training field (EHT-LTF) type (occupying 2 bits), the number of EHT-LTF symbols (occupying 3 bits), a low-density parity check (LDPC) extra symbol segment (occupying 1 bit), a Pre-FEC padding factor (occupying 2 bits), a packet extension (PE) disambiguity (occupying 1 bit), a high efficiency (HE)/EHT P160 field (occupying 1 bit), a special user information field flag (occupying 1 bit), an EHT reserved (occupying 7 bits), and a trigger dependent common information field (occupying variable number of bits).

Specifically, a format of the user information field is illustrated in FIG. 15. An AID12 (the least significant 12 bits) indicates an address of an AP MLD participating in multi-AP MLD coordinated transmission. In the disclosure, it is proposed that eight reserved bits (B25 and B32~B38) are defined as a link information field (including a 4-bit link ID subfield and a 4-bit link ID extension subfield) for indicating which link is to be used for the AP MLD to perform multi-AP MLD coordinated transmission. It should be noted that, in this case, the user information field can indicate an ID of only one link. Alternatively, a (basic) multi-link element can be carried in the trigger dependent user information field of the user information field. Since the (basic) multi-link element includes both a link ID and a link ID extension, the (basic) multi-link element can indicate which link(s) is to be used for the AP MLD to perform multi-AP MLD coordinated transmission. It should be noted that, in this case, the (basic) multi-link element carried in the trigger dependent user information subfield of the user information field can indicate an ID(s) of one or more links.

In some embodiments, the first AP MLD sends a data frame to the first non-AP MLD according to information indicated by the multi-AP MLD TX trigger frame.

In some embodiments, the first AP MLD receives an ACK frame sent by the first non-AP MLD, where the ACK frame indicates that the first non-AP MLD has successfully received the data frame sent by the first AP MLD.

In some embodiments, the second AP MLD sends a data frame to the first non-AP MLD according to information indicated by the multi-AP MLD TX trigger frame.

In some embodiments, the second AP MLD receives an ACK frame sent by the first non-AP MLD, where the ACK frame indicates that the first non-AP MLD has successfully received the data frame sent by the second AP MLD.

In some embodiments, the first AP MLD and one or more AP MLDs form the first virtual AP MLD.

In some embodiments, the first virtual AP MLD has a virtual MLD MAC. The virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the first virtual AP MLD is illustrated in FIG. 18 or FIG. 19. For details thereof, reference can be made to the related elaborations in the foregoing wireless communication method 200, which will not be described again herein.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

Therefore, in embodiments of the disclosure, it is possible to realize multi-AP MLD coordinated transmission with the first virtual AP MLD.

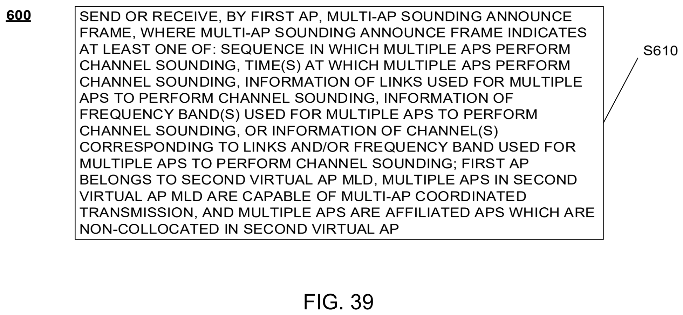

FIG. 39 is a schematic flowchart of a wireless communication method 600 according to embodiments of the disclosure. As illustrated in FIG. 39, the wireless communication method 600 can include at least some of the following.

S610, a first AP sends or receives a multi-AP sounding announce frame.

The multi-AP sounding announce frame indicates at least one of: a sequence in which multiple APs perform channel sounding, a time(s) at which the multiple APs perform channel sounding, information of links used for the multiple APs to perform channel sounding, information of a frequency band(s) used for the multiple APs to perform channel sounding, or information of a channel(s) corresponding to the links and/or the frequency band used for the multiple APs to perform channel sounding.

The first AP belongs to a second virtual AP MLD, multiple APs in the second virtual AP MLD are capable of multi-AP coordinated transmission, and the multiple APs are affiliated APs which are non-collocated in the second virtual AP MLD.

In embodiments of the disclosure, multi-AP joint channel sounding can be realized.

In embodiments of the disclosure, in S610, if the first AP sends the multi-AP sounding announce frame, the first AP can be a master AP. If the first AP receives the multi-AP sounding announce frame, the first AP can be a slave AP.

In some embodiments, one AP may belong to one or more virtual AP MLDs.

In some embodiments, each virtual AP MLD shall have only one master AP, while the remaining AP(s) is a slave AP.

In some embodiments, each virtual AP MLD may support one or more multi-AP coordination modes.

In embodiments of the disclosure, "field" can also be referred to as "sub-field". One field can occupy one or more bytes/octets, or can occupy one or more bits.

In some embodiments, the first AP is a master AP. Alternatively, in some embodiments, the first AP can be a slave AP. Embodiments of the disclosure are not limited in this regard.

In some embodiments, a multi-AP sounding announce field of the multi-AP sounding announce frame includes at least one of: a VBSSID field, a candidate set ID field, a sounding method field, or a sounding configuration field. The VBSSID field indicates a VBSSID of the second virtual AP MLD. The candidate set ID field indicates an ID of a multi-AP MLD candidate set corresponding to the second virtual AP MLD. The sounding method field indicates a method for performing channel sounding by the multiple APs. The sounding configuration field indicates configuration information for performing channel sounding by the multiple APs.

In some embodiments, the sounding method field includes at least one of: a sequential or joint field, or an explicit or implicit field. If the sequential or joint field has a first value, the sequential or joint field indicates that the multiple APs are to perform channel sounding in sequence, and if the sequential or joint field has a second value, the sequential or joint field indicates that the multiple APs are to perform channel sounding synchronously at the same time. If the explicit or implicit field has a first value, the explicit or implicit field indicates that the multiple APs are to perform explicit channel sounding, and if the explicit or implicit field has a second value, the explicit or implicit field indicates that the multiple APs are to perform implicit channel sounding.

Specifically, for example, sequential or joint field = 1 indicates that the multiple APs are to perform channel sounding in sequence, and sequential or joint field = 0 indicates that multiple APs are to perform channel sounding synchronously at the same time. Alternatively, sequential or joint field = 0 indicates that the multiple APs are to perform channel sounding in sequence, and sequential or joint field = 1 indicates that the multiple APs are to perform channel sounding synchronously at the same time.

Specifically, for example, explicit or implicit field = 1 indicates that multiple APs are to perform explicit channel sounding, and explicit or implicit field = 0 indicates that multiple APs are to perform implicit channel sounding. Alternatively, explicit or implicit field = 0 indicates that multiple APs are to perform explicit channel sounding, and explicit or implicit field = 1 indicates that multiple APs are to perform implicit channel sounding.

In some embodiments, if the sequential or joint field indicates that the multiple APs are to perform channel sounding in sequence, times at which the multiple APs perform channel sounding and/or a sequence in which the multiple APs perform channel sounding is indicated by the sounding configuration field.

In some embodiments, if the sequential or joint field indicates that the multiple APs are to perform channel sounding synchronously at the same time, a time at which the multiple APs are to perform channel sounding is indicated by the sounding configuration field.

In some embodiments, explicit or implicit subfield = 0 indicates that the multiple APs are to perform explicit channel sounding, that is, the AP sends an NDPA + NDP frame, and a non-AP MLD needs to feed back a channel sounding result. Explicit or implicit subfield = 1 indicates that the multiple APs are to perform implicit channel sounding, that is, a non-AP MLD sends an NDP frame, and the AP directly obtains a channel sounding result.

In some embodiments, the sounding configuration field includes at least one of: an AP number field (also referred to as "number of APs field") or multiple AP sounding configuration fields. The AP number field indicates the number of APs participating in multi-AP channel sounding. An *m*^{th} AP sounding configuration field in the multiple AP sounding configuration fields indicates configuration information for an *m*^{th} AP participating in multi-AP channel sounding.

In some embodiments, if the multiple APs are to perform channel sounding in sequence, an order of an AP sounding configuration field in the multiple AP sounding configuration fields indicates an order in which a corresponding AP performs multi-AP channel sounding.

In some embodiments, an AP sounding configuration field in the multiple AP sounding configuration fields includes at least one of: a BSSID field, an AP ID field, a start time field, or a basic multi-link element. The BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the basic multi-link element indicates information of a link used for the AP corresponding to the current AP sounding configuration field to perform multi-AP channel sounding.

In some embodiments, an AP sounding configuration field in the multiple AP sounding configuration fields includes at least one of: a BSSID field, an AP ID field, a start time field, or a link ID information field. The BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the link ID information field indicates information of a link used for the AP corresponding to the current AP sounding configuration field to perform multi-AP channel sounding.

In some embodiments, the link ID information field includes a link ID field and/or a link ID extension field. If the link ID information field includes only the link ID field, the link ID field indicates the ID of the link used for the AP corresponding to the current AP sounding configuration field to perform multi-AP channel sounding. Alternatively, if the link ID information field includes only the link ID extension field, the link ID extension field indicates the ID of the link used for the AP corresponding to the current AP sounding configuration field to perform multi-AP channel sounding. Alternatively, if the link ID information field includes both the link ID field and the link ID extension field, the link ID field and the link ID extension field jointly indicate the ID of the link used for the AP corresponding to the current AP sounding configuration field to perform multi-AP channel sounding.

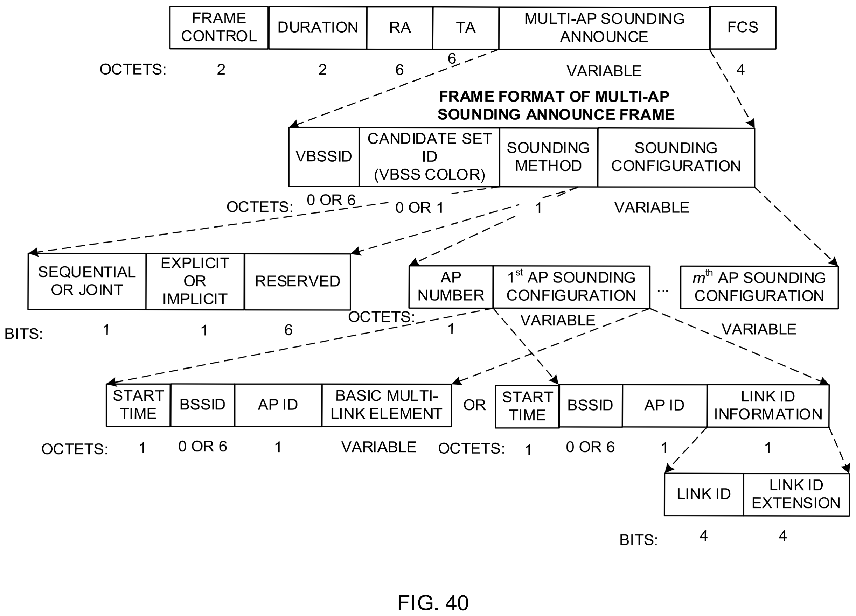

In some embodiments, a frame format of the multi-AP sounding announce frame is illustrated in FIG. 40. The multi-AP sounding announce frame includes a frame control field (occupying 2 octets), a duration field (occupying 2 octets), an RA (occupying 6 octets), a TA (occupying 6 octets), a multi-AP sounding announce frame field (occupying variable number of octets), and an FCS field (occupying 4 octets). Specifically, the multi-AP sounding announce frame field includes a VBSSID field (occupying 0 or 6 octets), a candidate set ID or VBSS color field (occupying 0 or 1 octet), a sounding method field (occupying 1 octet), and a sounding configuration field (occupying variable number of octets). The sounding method field includes a sequential or joint field (occupying 1 bit) and an explicit or implicit field (occupying 1 bit). The sounding configuration field includes: an AP number (also referred to as "number of APs") field (occupying 1 octet), a 1^{st} AP sounding configuration field, a 2^{nd} AP sounding configuration field, ..., an *m*^{th} AP sounding configuration field. The AP sounding configuration field includes: a BSSID field (occupying 6 octets), an AP ID field (occupying 1 octet), a start time field (occupying 1 octet), and a basic multi-link element (occupying variable number of octets). Alternatively, the AP sounding configuration field includes: a BSSID field (occupying 6 octets), an AP ID field (occupying 1 octet), a start time field (occupying 1 octet), and a link ID information field (occupying 1 octet), where the link ID information field includes a link ID field (occupying 4 bits) and a link ID extension field (occupying 4 bits).

It should be noted that, in FIG. 40, the basic multi-link element indicates information of a link used by a current AP to perform multi-AP channel sounding. The basic multi-link element contains lots of unnecessary information, or can be replaced by a link ID information subfield. In FIG. 40, the link ID information field indicates the information of the link used for the current AP to perform multi-AP channel sounding, or can be replaced by a basic multi-link element.

In some embodiments, a first non-AP MLD receives a second frame sent by the first AP. The second frame is sent by the first AP according to information indicated by the multi-AP sounding announce frame, the first non-AP MLD is a non-AP MLD associated with the first AP in all non-AP MLDs participating in multi-AP channel sounding, and the second frame is an NDPA frame or a sounding trigger frame. The multi-AP sounding announce frame indicates at least one of: a sequence in which multiple APs perform channel sounding, a time(s) at which the multiple APs perform channel sounding, information of links used for the multiple APs to perform channel sounding, information of a frequency band(s) used for the multiple APs to perform channel sounding, or information of a channel(s) corresponding to the links and/or the frequency band used for the multiple APs to perform channel sounding. If the second frame is an NDPA frame, the NDPA frame indicates a parameter and configuration information of an NDP frame to be sent. If the second frame is a sounding trigger frame, the sounding trigger frame is used for triggering or requesting the first non-AP MLD to feed back a sounding result.

In some embodiments, if the multiple APs include the first AP and the multiple APs perform explicit channel sounding, then the first AP sends an NDPA frame to the first non-AP MLD according to the information indicated by the multi-AP sounding announce frame, where the NDPA frame indicates a parameter and configuration information of an NDP frame to be sent, and the first non-AP MLD is a non-AP MLD associated with the first AP in all non-AP MLDs participating in multi-AP channel sounding. The first AP sends an NDP frame to the first non-AP MLD on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. If the non-AP MLD information list field includes only the link ID field, the link ID field indicates an ID of a link used for the first AP to perform multi-AP channel sounding. Alternatively, if the non-AP MLD information list field includes only the link ID extension field, the link ID extension field indicates the ID of the link used for the first AP to perform multi-AP channel sounding. Alternatively, if the non-AP MLD information list field includes both the link ID field and the link ID extension field, the link ID field and the link ID extension field jointly indicate the ID of the link used for the first AP to perform multi-AP channel sounding.

In some embodiments, if the first AP sends the multi-AP sounding announce frame, and an AP which is co-located with the first AP in the second virtual AP MLD covers all the non-AP MLDs participating in multi-AP channel sounding, then the first AP sends a BFRP trigger frame to all the non-AP MLDs participating in multi-AP channel sounding on the channel for sending the NDPA frame, where the BFRP trigger frame is used for triggering or requesting all the non-AP MLDs participating in multi-AP channel sounding to feed back channel sounding results to APs associated with the non-AP MLDs. The first AP receives an NDP feedback frame sent by the first non-AP MLD, where the NDP feedback frame contains a channel sounding result for the first AP.

In some embodiments, if the first AP sends the multi-AP sounding announce frame, and an AP which is co-located with the first AP in the second virtual AP MLD is unable to cover all the non-AP MLDs participating in multi-AP channel sounding, then the first AP sends a BFRP trigger frame to the first non-AP MLD on the channel for sending the NDPA frame, where the BFRP trigger frame is used for triggering or requesting the first non-AP MLD to feed back a channel sounding result. The first AP receives an NDP feedback frame sent by the first non-AP MLD, where the NDP feedback frame contains a channel sounding result for the first AP.

In some embodiments, a user information field of the BFRP trigger frame includes a link ID field and/or a link ID extension field. If the user information field of the BFRP trigger frame includes only the link ID field, the link ID field indicates an ID of a link used for the first AP to perform multi-AP MLD channel sounding. Alternatively, if the user information field of the BFRP trigger frame includes only the link ID extension field, the link ID extension field indicates the ID of the link used for the first AP to perform multi-AP MLD channel sounding. Alternatively, if the user information field of the BFRP trigger frame includes both the link ID field and the link ID extension field, the link ID field and the link ID extension field jointly indicate the ID of the link used for the first AP to perform multi-AP MLD channel sounding.

In some embodiments, the NDP feedback frame includes a link ID information field, where the link ID information field includes a link ID field and/or a link ID extension field. If the link ID information field includes only the link ID field, the link ID field indicates an ID of a link that a channel sounding result carried in the NDP feedback frame corresponds to. Alternatively, if the link ID information field includes only the link ID extension field, the link ID extension field indicates the ID of the link that the channel sounding result carried in the NDP feedback frame corresponds to. Alternatively, if the link ID information field includes both the link ID field and the link ID extension field, the link ID field and the link ID extension field jointly indicate the ID of the link that the channel sounding result carried in the NDP feedback frame corresponds to.

In some embodiments, the NDP feedback frame includes a multi-link element or a basic multi-link element, where a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

In some embodiments, if the multiple APs are to perform channel sounding in sequence, the multiple APs send the NDPA frames and/or the NDP frames in a sequence indicated by the multi-AP sounding announce frame.

In some embodiments, if the multiple APs are to perform channel sounding synchronously at the same time, the multiple APs send the NDPA frames and/or the NDP frames synchronously at a start time indicated by the multi-AP sounding announce frame.

In some embodiments, if the second frame is an NDPA frame and the multiple APs perform explicit channel sounding, the first non-AP MLD receives an NDP frame that is sent by the first AP on a channel for sending the NDPA frame, where a time interval between the NDP frame and the NDPA frame is not less than one SIFS.

In some embodiments, if the first AP sends the multi-AP sounding announce frame, and an AP which is co-located with the first AP in the second virtual AP MLD covers all the non-AP MLDs participating in multi-AP channel sounding, then the first non-AP MLD receives a BFRP trigger frame that is sent by the first AP on a channel for sending the NDPA frame, where the BFRP trigger frame is used for triggering or requesting all the non-AP MLDs participating in multi-AP channel sounding to feed back channel sounding results to APs associated with the non-AP MLDs. The first non-AP MLD sends an NDP feedback frame to the first AP, where the NDP feedback frame contains a channel sounding result for the first AP.

In some embodiments, if the first AP sends the multi-AP sounding announce frame, and an AP which is co-located with the first AP in the second virtual AP MLD is unable to cover all the non-AP MLDs participating in multi-AP channel sounding, then the first non-AP MLD receives a BFRP trigger frame that is sent by the first AP on a channel for sending the NDPA frame, where the BFRP trigger frame is used for triggering or requesting the first non-AP MLD to feed back a channel sounding result. The first non-AP MLD sends an NDP feedback frame to the first AP, where the NDP feedback frame contains a channel sounding result for the first AP.

In some embodiments, for a frame format of the NDPA frame, reference can be made to related elaborations in the wireless communication method 200. For the BFRP trigger frame, reference can be made to related elaborations in the wireless communication method 200. For the NDP feedback frame, reference can be made to related elaborations in the wireless communication method 200. Details are not repeatedly described herein.

In some embodiments, for a procedure of sequential channel sounding with explicit feedback, reference can be made to related elaborations in the wireless communication method 200, and for a procedure of joint channel sounding with explicit feedback, reference can be made to related elaborations in the wireless communication method 200, which are not described again herein.

In some embodiments, if the multiple APs include the first AP and the multiple APs perform implicit channel sounding, the first AP sends a sounding trigger frame to a first non-AP MLD according to information indicated by the multi-AP sounding announce frame, where the sounding trigger frame is used for triggering or requesting the first non-AP MLD to feed back a sounding result, and the first non-AP MLD is a non-AP MLD associated with the first AP in all non-AP MLDs participating in multi-AP channel sounding. The first AP receives an NDP frame sent by the first non-AP MLD, where the NDP frame contains a channel sounding result for the first AP.

In some embodiments, the user information field of the sounding trigger frame includes a link ID field and a link ID extension field, and the link ID field and the link ID extension field jointly indicate an ID of a link used for the first AP to perform multi-AP channel sounding.

In some embodiments, the NDP frame includes a link ID information field, where the link ID information field includes a link ID field and/or a link ID extension field. If the link ID information field includes only the link ID field, the link ID field indicates an ID of a link that a channel sounding result carried in the NDP feedback frame corresponds to. Alternatively, if the link ID information field includes only the link ID extension field, the link ID extension field indicates the ID of the link that the channel sounding result carried in the NDP feedback frame corresponds to. Alternatively, the link ID information field includes both the link ID field and the link ID extension field, the link ID field and the link ID extension field jointly indicate the ID of the link that the channel sounding result carried in the NDP frame corresponds to.

In some embodiments, the NDP frame includes a multi-link element or a basic multi-link element. A link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

In some embodiments, if the multiple APs are to perform channel sounding in sequence, the multiple APs trigger, in a sequence indicated by the multi-AP sounding announce frame, all the non-AP MLDs participating in multi-AP channel sounding to send the NDP frames.

In some embodiments, if the multiple APs are to perform channel sounding synchronously at the same time, the multiple APs trigger, according to a start time indicated by the multi-AP sounding announce frame, all the non-AP MLDs participating in multi-AP channel sounding to send the NDP frames synchronously at the same time.

In some embodiments, if the second frame is a sounding trigger frame and the multiple APs perform implicit channel sounding, the first non-AP MLD sends an NDP frame to the first AP, where the NDP frame contains a channel sounding result for the first AP.

In some embodiments, for a procedure of sequential channel sounding with implicit feedback, reference can be made to related elaborations in the wireless communication method 200, and for a procedure of joint channel sounding with implicit feedback, reference can be made to related elaborations in the wireless communication method 200, which are not described again herein.

In some embodiments, the second virtual AP MLD can consist of affiliated APs of some or all AP MLDs in a multi-AP MLD candidate set. Optionally, the second virtual AP MLD can be a logical AP MLD.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC can also be referred to as a virtual MLD MAC.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

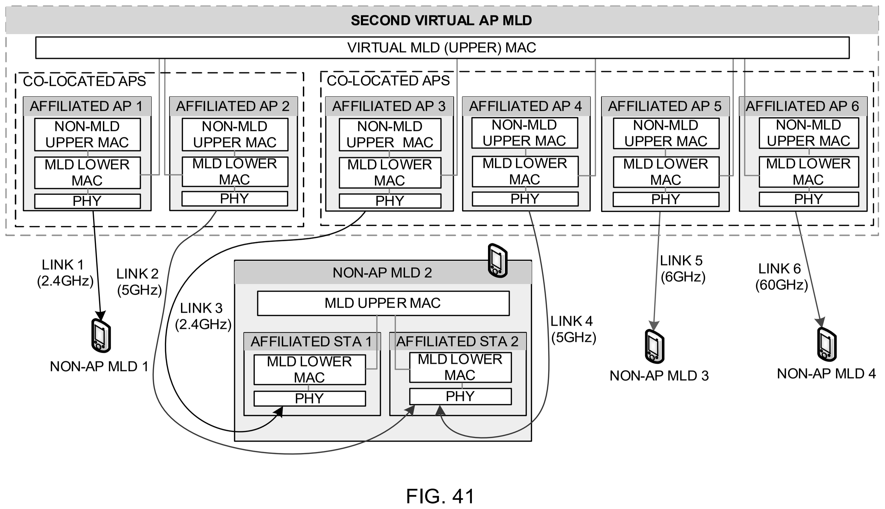

In some embodiments, the second virtual AP MLD is illustrated in FIG. 41. Affiliated AP 1~affiliated AP 6 are six APs affiliated to the second virtual AP MLD, where each of the six APs has a non-MLD upper MAC, an MLD lower MAC, and a PHY, but has no MLD upper MAC. In order to realize multi-AP coordination, the second virtual AP MLD has a virtual MLD (upper) MAC, and the virtual MLD (upper) MAC is connected to MLD lower MACs of affiliated AP 1~affiliated AP 6 and manages and controls affiliated AP 1~affiliated AP 6. As illustrated in FIG. 41, the virtual MLD (upper) MAC of the second virtual AP MLD is located in an independent controller device.

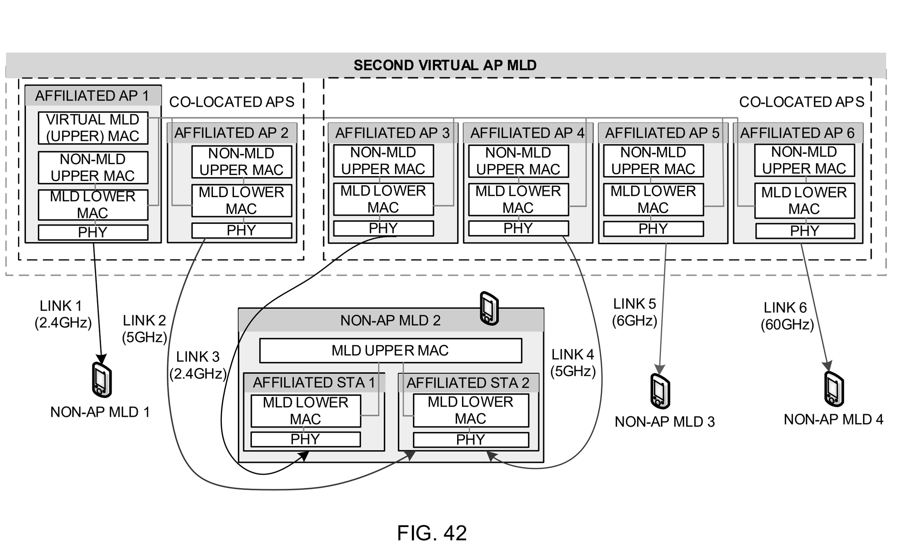

In some embodiments, the second virtual AP MLD is illustrated in FIG. 42. Affiliated AP 1~affiliated AP 6 are six APs affiliated to the second virtual AP MLD, where each of the six APs has a non-MLD upper MAC, an MLD lower MAC, and a PHY, but has no MLD upper MAC. In order to realize multi-AP coordination, the second virtual AP MLD has a virtual MLD (upper) MAC, and the virtual MLD (upper) MAC is connected to MLD lower MACs of affiliated AP 1~affiliated AP 6 and manages and controls affiliated AP 1~affiliated AP 6. As illustrated in FIG. 42, the virtual MLD (upper) MAC of the second virtual AP MLD is located in affiliated AP 1, and affiliated AP 1 has a virtual MLD (upper) MAC for managing and controlling all the affiliated APs in the second virtual AP MLD. MLD Lower MACs of the affiliated APs in the second virtual AP MLD are connected to the virtual MLD (upper) MAC of affiliated AP 1.

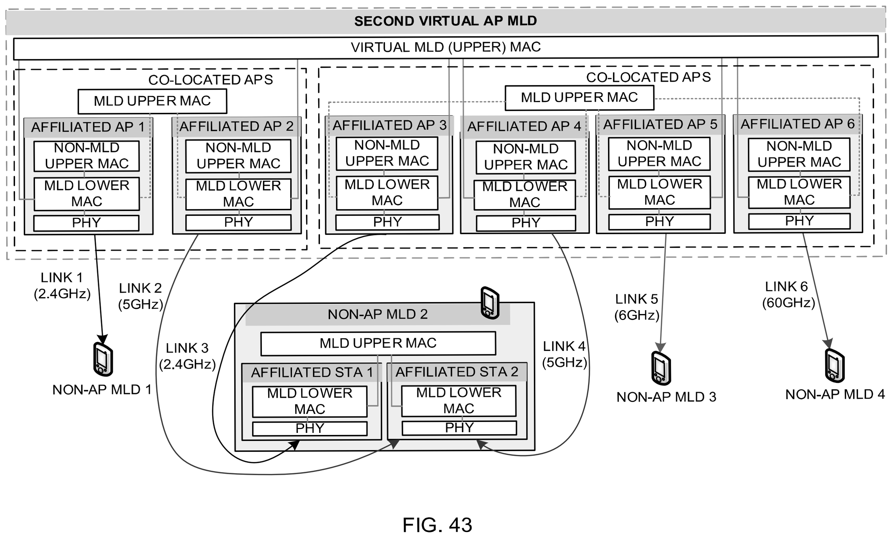

In some embodiments, the second virtual AP MLD is illustrated in FIG. 43. Affiliated AP 1~affiliated AP 6 are six APs affiliated to the second virtual AP MLD, where each of the six APs has a non-MLD upper MAC, an MLD lower MAC, and a PHY, but has no MLD upper MAC. In order to realize multi-AP coordination, the second virtual AP MLD has a virtual MLD (upper) MAC, and the virtual MLD (upper) MAC is connected to MLD lower MACs of affiliated AP 1~affiliated AP 6 and manages and controls affiliated AP 1~affiliated AP 6. As illustrated in FIG. 43, the virtual MLD (upper) MAC of the second virtual AP MLD is located in an independent controller device, and multiple affiliated APs co-located in the second virtual AP MLD share one MLD upper MAC.

Specifically, as illustrated in FIG. 41 to FIG. 43, co-located AP 1 and AP 2 can set up multiple links (link 1 and link 2) with non-AP MLD 1 and non-AP MLD 2. Co-located AP 3, AP 4, AP 5, and AP 6 can set up multiple links (link 3, link 4, link 5 and link 6) with non-AP MLD 2, non-AP MLD 3, and non-AP MLD 4.

Optionally, as illustrated in FIG. 41 to FIG. 43, AP 2 and AP 4 provide data transmission service at the same time for non-AP MLD 2 on link 2 and link 4 of 5GHz respectively, which can improve communication rate and reduce communication delay of non-AP MLD 2 to some extent. Since pathloss of a 5GHz signal is more serious than pathloss of 2.4GHz of lower frequency band and thus non-AP MLD 2 may have poor communication stability, AP 3 can also provide service for non-AP MLD 2 by using link 3 of 2.4GHz.

Optionally, as illustrated in FIG. 41 to FIG. 43, since non-AP MLD 2 has set up multiple links with AP 2, AP 3, and AP 4, even if non-AP MLD 2 moves away from AP 2 and thus causes disconnection with link 2, non-AP MLD 2 is still connected with AP 3 and AP 4 over link 3 and link 4, which can realize seamless roaming/seamless transition of the non-AP MLD.

In some embodiments, as illustrated in FIG. 41 to FIG. 43, the second virtual AP MLD can be regarded as a two-layer network architecture.

In some embodiments, the virtual MLD upper MAC of the second virtual AP MLD manages link assignment for an entire VBSS corresponding to the second virtual AP MLD. For example, a non-AP MLD sends an association request frame to an anchor AP in the virtual AP MLD, so as to associate with and perform multi-link setup with all affiliated APs in the virtual AP MLD. The controller of the virtual AP MLD manages link ID assignment for the entire VBSS, and therefore, a link ID that is different from a link ID assigned previously can be assigned to the non-AP MLD for multi-link communication between the non-AP MLD and each AP in the virtual AP MLD. That is, during multi-AP coordination, the controller of the virtual AP MLD is required to assign different link IDs to the non-AP MLD and the virtual AP MLD, which prevents the non-AP MLD from setting up links having the same link ID with different APs, in which case mapping error may occur during TID-to-link mapping.

In some embodiments, after the first non-AP MLD is successfully associated with a target multi-AP MLD candidate set, some of links set up between the first non-AP MLD and multiple affiliated APs co-located in the second virtual AP MLD are used only for transmitting control plane information, and the rest of the links set up between the first non-AP MLD and the multiple affiliated APs co-located in the second virtual AP MLD are used only for transmitting data plane information. Alternatively, some or all of links set up between the first non-AP MLD and the multiple affiliated APs co-located in the second virtual AP MLD are used for transmitting control plane information and data plane information.

For example, as illustrated in FIG. 41 to FIG. 43, link 3 between AP 3 and non-AP MLD 2 can be used only as a control plane, that is, used only for transmitting a control frame and/or a management frame, and then link 2 between AP 2 and non-AP MLD 2, and link 4 between AP 4 and non-AP MLD 2 are used as data planes, that is, used for transmitting data frames. Alternatively, link 3 between AP 3 and non-AP MLD 2 can be used for transmitting a control frame and a management frame, and can also be used for transmitting a data frame. The disclosure is not limited in this regard.

In some embodiments, after the first non-AP MLD is successfully associated with the target multi-AP MLD candidate set, one affiliated STA of the first non-AP MLD is allowed for setting up links with multiple affiliated APs non-collocated in the second virtual AP MLD.

In some embodiments, after the first non-AP MLD is successfully associated with the target multi-AP MLD candidate set, multiple links corresponding to one affiliated STA of the first non-AP MLD are used for transmitting the same PPDU. Alternatively, multiple links corresponding one affiliated STA of the first non-AP MLD are used for transmitting different PPDUs.

For example, as illustrated in FIG. 41 to FIG. 43, link 2 between AP 2 and non-AP MLD 2 and link 4 between AP 4 and non-AP MLD 2 can be used for transmitting the same PPDU (i. e. identical data) to improve communication reliability/stability. Alternatively, link 2 between AP 2 and non-AP MLD 2 and link 4 between AP 4 and non-AP MLD 2 can be used for transmitting different PPDUs (i. e., different data) to improve communication rate/throughput. The disclosure is not limited in this regard.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD. In other words, an EHT non-AP MLD supporting only 802.11be is associated with and performs multi-link setup with only one group of co-located affiliated APs. During multi-link setup, a link ID assigned to the EHT non-AP MLD by the AP is assigned centrally by the virtual MLD MAC, instead of assigning a link ID to the EHT non-AP MLD separately, thereby avoiding link ID conflict.

In some embodiments, a virtual MLD (upper) MAC sublayer of the second virtual AP MLD can have the following functions:
authentication, association, and reassociation between an AP MLD and a non-AP MLD;
security association (e.g., PMKSA, PTKSA) and distribution of GTK/IGTK/BIGTK;
SN/PN assignment for frames to be encrypted by PTK for unicast frames;
SN assignment for group addressed MSDUs;
power save buffering of individually addressed frames (only on AP MLD);
encryption/decryption using PTK for unicast frames;
selection of the MLD lower MAC sublayer for transmission;
merging reception of MPDUs from two or more links;
reordering of packets to ensure in-order delivery per each Block ACK session;
block ACK scoreboarding for individually addressed frames (in collaboration with the MLD lower MAC sublayer). Optionally, the MLD upper MAC sublayer delivers the Block ACK record on one link to the MLD lower MAC sublayer of other links;
MLD level management information exchange/indication via the MLD lower MAC sublayer;
coordination of distribution and management of EDCA parameters across the MLD lower MAC sublayers of the links.

In some embodiments, an affiliated (non-MLO) upper MAC sublayer (only on AP) of the second virtual AP MLD can have the following functions:
non-MLO peer operations, above the MLD lower MAC sublayer;
maintenance of link specific GTK/IGTK/BIGTK (between an AP affiliated with the AP MLD and a non-AP STA affiliated with the non-AP MLD);
link specific encryption/decryption/integrity protection and PN assignment using GTK/IGTK/BIGTK (between an AP affiliated with the AP MLD and a non-AP STA affiliated with the non-AP MLD);
link-specific management info exchange/indication (e.g., beacon);
power save buffering of group addressed frames.

In some embodiments, an MLD lower MAC sublayer of the second virtual AP MLD can have the following functions:
link specific control information exchange/indication (e.g., RTS/CTS, ACKs, NDP, etc.);
power save state and mode;
MAC address filtering for frame reception;
block ACK scoreboarding for individually addressed frames (in collaboration with the MLD upper MAC sublayer). Optionally, the MLD lower MAC sublayer receives the block ACK record on the other links from the MLD upper MAC sublayer).

Specifically, in embodiments of the disclosure, in the three-layer network architectures illustrated in FIG. 18 and FIG. 19, each AP MLD in a virtual AP MLD is a complete MLD, a virtual MLD MAC of the virtual AP MLD manages and controls MLD upper MACs of the AP MLDs, and requirements on synchronization between AP MLDs and between the AP MLD and the virtual AP MLD are low. In the two-layer network architectures illustrated in FIG. 41 to FIG. 43, a virtual MLD (upper) MAC of a virtual AP MLD directly manages and controls MLD lower MACs of affiliated APs, which has high requirements on synchronization between affiliated APs and between the affiliated AP and the virtual AP MLD.

Therefore, in embodiments of the disclosure, it is possible to realize multi-AP MLD joint channel sounding with the second virtual AP MLD.

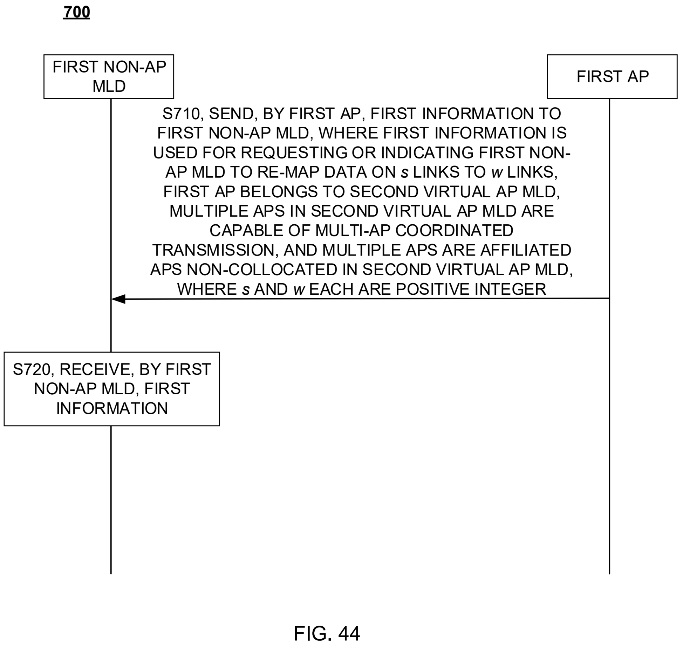

FIG. 44 is a schematic flowchart of a wireless communication method 700 according to embodiments of the disclosure. As illustrated in FIG. 44, the wireless communication method 700 can include at least some of the following.

S710, a first AP sends first information to a first non-AP MLD, where the first information is used for requesting or indicating the first non-AP MLD to re-map data on s links to w links, the first AP belongs to a second virtual AP MLD, multiple APs in the second virtual AP MLD are capable of multi-AP coordinated transmission, and the multiple APs are affiliated APs non-collocated in the second virtual AP MLD, where s and w each are a positive integer.

Step S720, the first non-AP MLD receives the first information sent by the first AP.

In some embodiments, one AP can belong to one or more virtual AP MLDs.

In some embodiments, each virtual AP MLD shall have only one master AP, while the remaining AP(s) is a slave AP.

In some embodiments, each virtual AP MLD may support one or more multi-AP coordination modes.

In embodiments of the disclosure, "field" can also be referred to as "sub-field". One field can occupy one or more bytes/octets, or can occupy one or more bits.

In some embodiments, the first AP is a master AP. Alternatively, in some embodiments, the first AP can also be a slave AP. Embodiments of the disclosure are not limited in this regard.

In some embodiments, the s links are links that correspond to the first non-AP MLD and have outages, and the w links are links that correspond to the first non-AP MLD and do not have outages.

In some embodiments, the w links are links set up between the first non-AP MLD and an AP which is co-located with the first AP in the second virtual AP MLD, and the s links are links set up between the first non-AP MLD and an AP which is co-located with a second AP in the second virtual AP MLD.

In some embodiments, the s links are links set up between the first non-AP MLD and an AP which is co-located with the first AP in the second virtual AP MLD, and the w links are links set up between the first non-AP MLD and an AP which is co-located with a second AP in the second virtual AP MLD.

In some embodiments, the first information is a TID-to-link mapping element. The TID-to-link mapping element includes a link mapping field of at least one TID, and a link mapping of TID n field in the link mapping field of the at least one TID indicates a link to which TID *n* is mapped, where n is a non-negative integer.

In some embodiments, a link mapping field of a TID in the link mapping field of the at least one TID occupies k bytes, where *k* is a positive integer and k>2. Optionally, k=32.

In some embodiments, for the TID-to-link mapping element, reference can be made to the related elaborations in the wireless communication method 300, which will not be described in detail again herein.

In some embodiments, the first information is carried in a beacon frame or a probe response frame.

In some embodiments, if the first information is carried in a beacon frame, the beacon frame further includes a reconfiguration multi-link element. Alternatively, if the first information is carried in a probe response frame, the probe response frame further includes a reconfiguration multi-link element. The reconfiguration multi-link element is used for announcing release or disconnection of connections with affiliated APs corresponding to the s links.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

In some embodiments, the first AP receives a TID-to-link mapping response frame sent by the first non-AP MLD. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

In some embodiments, the first AP sends a beacon frame or a probe response frame to the first non-AP MLD. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, a link information field of the reconfiguration multi-link element includes at least one per-STA profile field. A link ID field of a per-STA profile field in the at least one per-STA profile field indicates an ID of a link for a reported STA during multi-AP MLD coordination. Alternatively, a link ID extension field of the per-STA profile field in the at least one per-STA profile field indicates the ID of the link for the reported STA during multi-AP MLD coordination. Alternatively, the link ID field and the link ID extension field of the per-STA profile field in the at least one per-STA profile field jointly indicate the ID of the link for the reported STA during multi-AP coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer. For example, *Q*₁=4, and *Q*₂=4.

In some embodiments, the first AP determines, according to link quality of the s links, that outage has occurred to the s links. Alternatively, the first AP determines, according to location information or displacement information of the first non-AP MLD, that outage has occurred to the s links.

In some embodiments, the first AP receives second information sent by the first non-AP MLD, where the second information indicates that outage has occurred to the s links. Optionally, the second information is carried in an outage frame.

In some embodiments, the first AP receives third information sent by another AP, where the third information indicates that outage has occurred to the s links.

In some embodiments, the second information or the third information includes at least one of: IDs of the s links, or MAC addresses of APs corresponding to the s links.

In some embodiments, for the reconfiguration multi-link element, reference can be made to the related elaborations in the wireless communication method 300 above. For beacon frame and the probe response frame, reference can be made to the related elaborations in the wireless communication method 300 above. For the TID-to-link mapping request frame and the TID-to-link mapping response frame, reference can be made to the related elaborations in the wireless communication method 300 above. Details are not described again herein.

In some embodiments, the second virtual AP MLD has a virtual MLD upper MAC. The virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the second virtual AP MLD is illustrated in FIG. 41, FIG. 42, or FIG. 43. For details thereof, reference can be made to related elaborations in the foregoing wireless communication method 600, which is not described again herein.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information and the rest of the links set up between the non-AP MLD and the multiple affiliated APs co-located in the second virtual AP MLD are used only for transmitting data plane information, or some or all of the links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

Therefore, in embodiments of the disclosure, it is possible to realize seamless roaming of a non-AP MLD with the second virtual AP MLD.

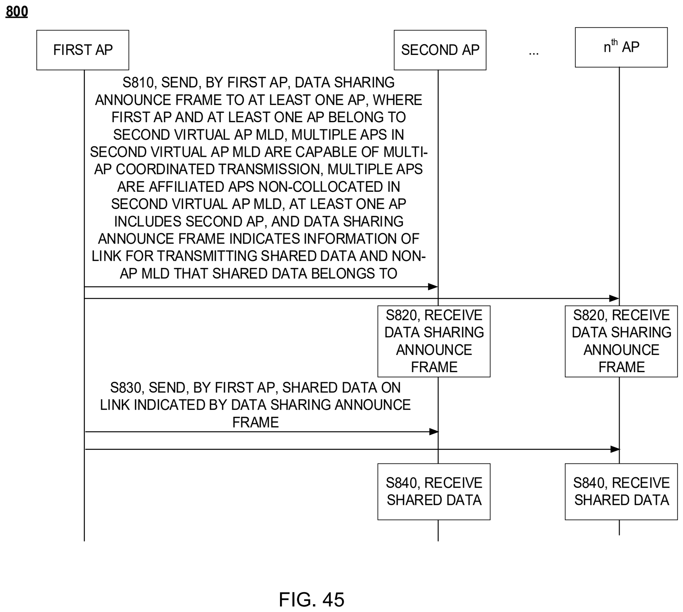

FIG. 45 is a schematic flowchart of a wireless communication method 800 according to embodiments of the disclosure. As illustrated in FIG. 45, the wireless communication method 800 can include at least some of the following.

S810, a first AP sends a data sharing announce frame to at least one AP, where the first AP and the at least one AP belong to a second virtual AP MLD, multiple APs in the second virtual AP MLD are capable of multi-AP coordinated transmission, the multiple APs are affiliated APs non-collocated in the second virtual AP MLD, the at least one AP includes a second AP, and the data sharing announce frame indicates information of a link for transmitting shared data and a non-AP MLD that the shared data belongs to.

S820, the second AP receives the data sharing announce frame sent by the first AP.

S830, the first AP sends the shared data on the link indicated by the data sharing announce frame.

S840, the second AP receives the shared data that is sent by the first AP on the link indicated by the data sharing announce frame.

In embodiments of the disclosure, an operation of an AP in the at least one AP is consistent with that of the second AP. For details thereof, reference can be made to the second AP, which will not be described again herein.,

In some embodiments, one AP can belong to one or more virtual AP MLDs.

In some embodiments, each virtual AP MLD shall have only one master AP, while the remaining AP(s) is a slave AP.

In some embodiments, each virtual AP MLD may support one or more multi-AP coordination modes.

In embodiments of the disclosure, "field" can also be referred to as "sub-field". One field can occupy one or more bytes/octets, or can occupy one or more bits.

In some embodiments, the first AP is a master AP. Alternatively, in some embodiments, the first AP can also be a slave AP. Embodiments of the disclosure are not limited in this regard.

In some embodiments, a data sharing announcement field of the data sharing announce frame includes a link ID information field and an MLD MAC address field, where the link ID information field indicates the information of the link for transmitting the shared data, and the MLD MAC address field indicates a MAC address of the non-AP MLD that the shared data belongs to.

In some embodiments, the first AP receives an ACK frame(s) fed back by some or all APs in the at least one AP MLD, where the ACK frame indicates that a corresponding AP has successfully received the shared data.

In some embodiments, the first AP shares data of at least one non-AP MLD with the at least one AP over a backhaul link.

In some embodiments, the second AP feeds back an ACK frame to the first AP, where the ACK frame indicates that the second AP has successfully received the shared data.

In some embodiments, the first AP shares data of at least one non-AP MLD with the second AP over a backhaul link.

In some embodiments, for the frame format of the data sharing announce frame, reference can be made to the related elaborations in the wireless communication method 400, which will not be elaborated again herein.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the second virtual AP MLD is illustrated in FIG. 41, FIG. 42, or FIG. 43. For details thereof, reference can be made to related elaborations in the foregoing wireless communication method 600, which is not described again herein.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information and the rest of the links set up between the non-AP MLD and the multiple affiliated APs co-located in the second virtual AP MLD are used only for transmitting data plane information, or some or all of the links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

Therefore, in embodiments of the disclosure, it is possible to realize data sharing among multiple AP MLDs with the second virtual AP MLD.

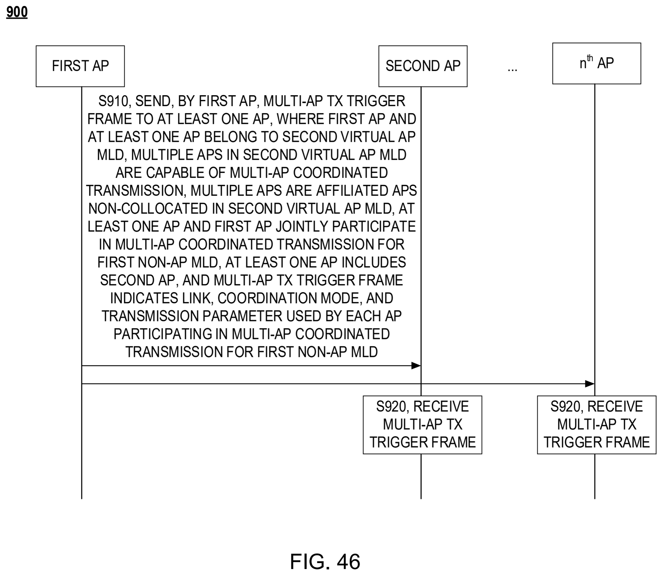

FIG. 46 is a schematic flowchart of a wireless communication method 900 according to embodiments of the disclosure. As illustrated in FIG. 46, the wireless communication method 900 can include at least some of the following.

S910, a first AP sends a multi-AP TX trigger frame to at least one AP, where the first AP and the at least one AP belong to a second virtual AP MLD, multiple APs in the second virtual AP MLD are capable of multi-AP coordinated transmission, the multiple APs are affiliated APs non-collocated in the second virtual AP MLD, the at least one AP and the first AP jointly participate in multi-AP coordinated transmission for a first non-AP MLD, the at least one AP includes a second AP, and the multi-AP TX trigger frame indicates a link, a coordination mode, and a transmission parameter used by each AP participating in multi-AP coordinated transmission for the first non-AP MLD.

S920, the second AP receives the multi-AP TX trigger frame sent by the first AP.

In embodiments of the disclosure, an operation of an AP in the at least one AP is consistent with that of the second AP. For details thereof, reference can be made to the second AP, which is not described again herein.

In some embodiments, one AP can belong to one or more virtual AP MLDs.

In some embodiments, each virtual AP MLD shall have only one master AP, while the remaining AP(s) is a slave AP.

In some embodiments, each virtual AP MLD may support one or more multi-AP coordination modes.

In embodiments of the disclosure, "field" can also be referred to as "sub-field". One field can occupy one or more bytes/octets, or can occupy one or more bits.

In some embodiments, the first AP is a master AP. Alternatively, in some embodiments, the first AP can also be a slave AP. Embodiments of the disclosure are not limited in this regard.

In some embodiments, a user information field of the multi-AP TX trigger frame includes an AID field, and a link ID field and/or a link ID extension field. The AID field indicates an address of an AP participating in multi-AP coordinated transmission for the first non-AP MLD. The link ID field indicates an ID of a link used by the AP indicated by the AID field, or the link ID extension field indicates the ID of the link used by the AP indicated by the AID field, or the link ID field and the link ID extension field jointly indicate the ID of the link used by the AP indicated by the AID field.

In some embodiments, a user information field of the multi-AP TX trigger frame includes an AID field and a trigger dependent user information field, where the trigger dependent user information field includes a multi-link field or a basic multi-link field. The AID field indicates an address of an AP participating in multi-AP coordinated transmission for the first non-AP MLD. The multi-link field indicates an ID of a link used by the AP indicated by the AID field, or the basic multi-link field indicates the ID of the link used by the AP indicated by the AID field.

In some embodiments, for the frame format of the multi-AP TX trigger frame, reference can be made to the related elaborations of the frame format of the multi-AP MLD TX trigger frame in the foregoing wireless communication method 500, which is not repeatedly described herein.

In some embodiments, the first AP sends a data frame to the first non-AP MLD according to information indicated by the multi-AP TX trigger frame.

In some embodiments, the first AP receives an ACK frame sent by the first non-AP MLD, where the ACK frame indicates that the first non-AP MLD has successfully received the data frame sent by the first AP.

In some embodiments, the second AP sends a data frame to the first non-AP MLD according to information indicated by the multi-AP TX trigger frame.

In some embodiments, the second AP receives an ACK frame sent by the first non-AP MLD, where the ACK frame indicates that the first non-AP MLD has successfully received the data frame sent by the second AP.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the second virtual AP MLD is illustrated in FIG. 41, FIG. 42, or FIG. 43. For details thereof, reference can be made to related elaborations in the foregoing wireless communication method 600, which is not described again herein.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information and the rest of the links set up between the non-AP MLD and the multiple affiliated APs co-located in the second virtual AP MLD are used only for transmitting data plane information, or some or all of the links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

Therefore, in embodiments of the disclosure, it is possible to realize multi-AP MLD coordinated transmission with the second virtual AP MLD.

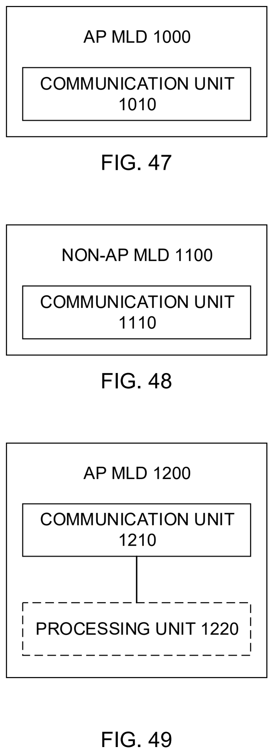

The method embodiments of the disclosure are described in detail above with reference to FIG. 6 to FIG. 46, and the apparatus embodiments of the disclosure are described in detail below with reference to FIG. 47 to FIG. 65. It should be understood that, the apparatus embodiments and the method embodiments correspond to each other, and for similar elaborations, reference can be made to the method embodiments.

FIG. 47 is a schematic block diagram of an AP MLD 1000 according to embodiments of the disclosure. The AP MLD 1000 is a first AP MLD. As illustrated in FIG. 47, the AP MLD 1000 includes a communication unit 1010. The communication unit 1010 is configured to send or receive a multi-AP MLD sounding announce frame. The multi-AP MLD sounding announce frame indicates at least one of: a sequence in which multiple AP MLDs perform channel sounding, a time at which the multiple AP MLDs perform channel sounding, information of links used for the multiple AP MLDs to perform channel sounding, information of a frequency band used for the multiple AP MLDs to perform channel sounding, or information of a channel corresponding to the links and/or the frequency band used for the multiple AP MLDs to perform channel sounding. The first AP MLD belongs to a first virtual AP MLD, and multiple AP MLDs in the first virtual AP MLD are capable of multi-AP MLD coordinated transmission.

In some embodiments, a multi-AP MLD sounding announce field of the multi-AP MLD sounding announce frame includes at least one of: a VBSSID field, a candidate set ID field, a sounding method field, or a sounding configuration field, where the VBSSID field indicates a VBSSID of the first virtual AP MLD, the candidate set ID field indicates an ID of a multi-AP MLD candidate set corresponding to the first virtual AP MLD, the sounding method field indicates a method for performing channel sounding by the multiple AP MLDs, and the sounding configuration field indicates configuration information for performing channel sounding by the multiple AP MLDs.

In some embodiments, the sounding method field includes at least one of: a sequential or joint field, or an explicit or implicit field. If the sequential or joint field has a first value, the sequential or joint field indicates that the multiple AP MLDs are to perform channel sounding in sequence; and if the sequential or joint field has a second value, the sequential or joint field indicates that the multiple AP MLDs are to perform channel sounding synchronously at the same time. If the explicit or implicit field has a first value, the explicit or implicit field indicates that the multiple AP MLDs are to perform explicit channel sounding; and if the explicit or implicit field has a second value, the explicit or implicit field indicates that the multiple AP MLDs are to perform implicit channel sounding.

In some embodiments, if the sequential or joint field indicates that the multiple AP MLDs are to perform channel sounding in sequence, times at which the multiple AP MLDs perform channel sounding and/or a sequence in which the multiple AP MLDs perform channel sounding is indicated by the sounding configuration field. Alternatively, if the sequential or joint field indicates that the multiple AP MLDs are to perform channel sounding synchronously at the same time, a time at which the multiple AP MLDs perform channel sounding is indicated by the sounding configuration field.

In some embodiments, the sounding configuration field includes at least one of: AP MLD number field or multiple AP MLD sounding configuration fields, where the AP MLD number field indicates the number of AP MLDs participating in multi-AP MLD channel sounding, and an *m*^{th} AP MLD sounding configuration field in the multiple AP MLD sounding configuration fields indicates configuration information for an *m*^{th} AP MLD participating in multi-AP MLD channel sounding.

In some embodiments, if the multiple AP MLDs are to perform channel sounding in sequence, an order of an AP MLD sounding configuration field in the multiple AP MLD sounding configuration fields indicates an order in which a corresponding AP MLD performs multi-AP MLD channel sounding.

In some embodiments, an AP MLD sounding configuration field in the multiple AP MLD sounding configuration fields includes at least one of: a BSSID field, an AP MLD ID field, a start time field, or a basic multi-link element, where the BSSID field indicates a BSSID of an AP MLD corresponding to a current AP MLD sounding configuration field, the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the basic multi-link element indicates information of a link used for the AP MLD corresponding to the current AP MLD sounding configuration field to perform multi-AP MLD channel sounding.

In some embodiments, an AP MLD sounding configuration field in the multiple AP MLD sounding configuration fields includes at least one of: a BSSID field, an AP MLD ID field, a start time field, or a link ID information field, where the BSSID field indicates a BSSID of an AP MLD corresponding to a current AP MLD sounding configuration field, the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the link ID information field indicates information of a link used for the AP MLD corresponding to the current AP MLD sounding configuration field to perform multi-AP MLD channel sounding.

In some embodiments, the link ID information field includes a link ID field and/or a link ID extension field. If the link ID information field includes only the link ID field, the link ID field indicates the ID of the link used for the AP MLD corresponding to the current AP MLD sounding configuration field to perform multi-AP MLD channel sounding. Alternatively, if the link ID information field includes only the link ID extension field, the link ID extension field indicates the ID of the link used for the AP MLD corresponding to the current AP MLD sounding configuration field to perform multi-AP MLD channel sounding. Alternatively, if the link ID information field includes both the link ID field and the link ID extension field, the link ID field and the link ID extension field jointly indicate the ID of the link used for the AP MLD corresponding to the current AP MLD sounding configuration field to perform multi-AP MLD channel sounding.

In some embodiments, the multiple AP MLDs include the first AP MLD and the multiple AP MLDs perform explicit channel sounding, and the communication unit 1010 is further configured to send an NDPA frame to a first non-AP MLD according to information indicated by the multi-AP MLD sounding announce frame, where the NDPA frame indicates a parameter and configuration information of an NDP frame to be sent, and the first non-AP MLD is a non-AP MLD associated with the first AP MLD in all non-AP MLDs participating in multi-AP MLD channel sounding. The communication unit 1010 is further configured to send an NDP frame to the first non-AP MLD on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. If the non-AP MLD information list field includes only the link ID field, the link ID field indicates an ID of a link used for the first AP MLD to perform multi-AP MLD channel sounding. Alternatively, if the non-AP MLD information list field includes only the link ID extension field, the link ID extension field indicates the ID of the link used for the first AP MLD to perform multi-AP MLD channel sounding. Alternatively, if the non-AP MLD information list field includes both the link ID field and the link ID extension field, the link ID field and the link ID extension field jointly indicate the ID of the link used for the first AP MLD to perform multi-AP MLD channel sounding.

In some embodiments, the first AP MLD sends the multi-AP MLD sounding announce frame and the first AP MLD covers all the non-AP MLDs participating in multi-AP MLD channel sounding, and the communication unit 1010 is further configured to send a BFRP trigger frame to all the non-AP MLDs participating in multi-AP MLD channel sounding on the channel for sending the NDPA frame, where the BFRP trigger frame is used for triggering or requesting all the non-AP MLDs participating in multi-AP MLD channel sounding to feed back channel sounding results to AP MLDs associated with the non-AP MLDs. The communication unit 1010 is further configured to receive an NDP feedback frame sent by the first non-AP MLD, where the NDP feedback frame contains a channel sounding result for the first AP MLD.

In some embodiments, the first AP MLD sends the multi-AP MLD sounding announce frame but the first AP MLD is unable to cover all the non-AP MLDs participating in multi-AP MLD channel sounding, and the communication unit 1010 is further configured to send a BFRP trigger frame to the first non-AP MLD on the channel for sending the NDPA frame, where the BFRP trigger frame is used for triggering or requesting the first non-AP MLD to feed back a channel sounding result. The communication unit 1010 is further configured to receive an NDP feedback frame sent by the first non-AP MLD, where the NDP feedback frame contains a channel sounding result for the first AP MLD.

In some embodiments, a user information field of the BFRP trigger frame includes a link ID field and/or a link ID extension field. If the user information field of the BFRP trigger frame includes only the link ID field, the link ID field indicates an ID of a link used for the first AP MLD to perform multi-AP MLD channel sounding. Alternatively, if the user information field of the BFRP trigger frame includes only the link ID extension field, the link ID extension field indicates the ID of the link used for the first AP MLD to perform multi-AP MLD channel sounding. Alternatively, if the user information field of the BFRP trigger frame includes both the link ID field and the link ID extension field, the link ID field and the link ID extension field jointly indicate the ID of the link used for the first AP MLD to perform multi-AP MLD channel sounding.

In some embodiments, the NDP feedback frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP feedback frame corresponds to. Alternatively, the NDP feedback frame includes a multi-link element or a basic multi-link element, where a link ID information field of the multi-link element indicates the ID of the link that the channel sounding result carried in the NDP feedback frame corresponds to; or a link ID information field of the basic multi-link element indicates the ID of the link that the channel sounding result carried in the NDP feedback frame corresponds to.

In some embodiments, if the multiple AP MLDs perform channel sounding in sequence, the multiple AP MLDs send NDPA frames and/or NDP frames in a sequence indicated by the multi-AP MLD sounding announce frame. Alternatively, if the multiple AP MLDs perform channel sounding synchronously at the same time, the multiple AP MLDs send the NDPA frames and/or the NDP frames synchronously at a start time indicated by the multi-AP MLD sounding announce frame.

In some embodiments, the multiple AP MLDs include the first AP MLD and the multiple AP MLDs perform implicit channel sounding, and the communication unit 1010 is further configured to send a sounding trigger frame to a first non-AP MLD according to information indicated by the multi-AP MLD sounding announce frame, where the sounding trigger frame is used for triggering or requesting the first non-AP MLD to feed back a sounding result, and the first non-AP MLD is a non-AP MLD associated with the first AP MLD in all non-AP MLDs participating in multi-AP MLD channel sounding. The communication unit 1010 is further configured to receive an NDP frame sent by the first non-AP MLD, where the NDP frame contains a channel sounding result for the first AP MLD.

In some embodiments, a user information field of the sounding trigger frame includes a link ID field and a link ID extension field, and the link ID field and the link ID extension field jointly indicate an ID of a link used for the first AP MLD to perform multi-AP MLD channel sounding.

In some embodiments, the NDP frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP frame corresponds to. Alternatively, the NDP frame includes a multi-link element or a basic multi-link element, where a link ID information field of the multi-link element indicates the ID of the link that the channel sounding result carried in the NDP frame corresponds to, or a link ID information field of the basic multi-link element indicates the ID of the link that the channel sounding result carried in the NDP frame corresponds to.

In some embodiments, if the multiple AP MLDs perform channel sounding in sequence, the multiple AP MLDs trigger, in a sequence indicated by the multi-AP MLD sounding announce frame, all the non-AP MLDs participating in multi-AP MLD channel sounding to send the NDP frames. Alternatively, if the multiple AP MLDs perform channel sounding synchronously at the same time, the multiple AP MLDs trigger, according to a start time indicated by the multi-AP MLD sounding announce frame, all the non-AP MLDs participating in multi-AP MLD channel sounding to send the NDP frames synchronously at the same time.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1000 according to embodiments of the disclosure can correspond to the first AP MLD in the method embodiments of the disclosure, and the foregoing and other operations and/or functions of various units in the AP MLD 1000 are intended to implement corresponding procedures of the first AP MLD in the method 200 illustrated in FIG. 6, which are not described herein again for the sake of brevity.

FIG. 48 is a schematic block diagram of a non-AP MLD 1100 according to embodiments of the disclosure. The non-AP MLD 1100 is a first non-AP MLD. As illustrated in FIG. 48, the non-AP MLD 1100 includes a communication unit 1110. The communication unit 1110 is configured to receive a first frame sent by a first AP MLD. The first frame is sent by the first AP MLD according to information indicated by a multi-AP MLD sounding announce frame, the first non-AP MLD is a non-AP MLD associated with the first AP MLD in all non-AP MLDs that participate in the multi-AP MLD channel sounding, the first AP MLD belongs to a first virtual AP MLD, multiple AP MLDs in the first virtual AP MLD are capable of multi-AP MLD coordinated transmission, and the first frame is an NDPA frame or a sounding trigger frame. The multi-AP MLD sounding announce frame indicates at least one of: a sequence in which multiple AP MLDs perform channel sounding, a time at which the multiple AP MLDs perform channel sounding, information of links used for the multiple AP MLDs to perform channel sounding, information of a frequency band used for the multiple AP MLDs to perform channel sounding, or information of a channel corresponding to the links and/or the frequency band used for the multiple AP MLDs to perform channel sounding. If the first frame is an NDPA frame, the NDPA frame indicates a parameter and configuration information of an NDP frame to be sent. If the first frame is a sounding trigger frame, the sounding trigger frame is used for triggering or requesting the first non-AP MLD to feed back a sounding result.

In some embodiments, a multi-AP MLD sounding announce field of the multi-AP MLD sounding announce frame includes at least one of: a VBSSID field, a candidate set ID field, a sounding method field, or a sounding configuration field, where the VBSSID field indicates a VBSSID of the first virtual AP MLD, the candidate set ID field indicates an ID of a multi-AP MLD candidate set corresponding to the first virtual AP MLD, the sounding method field indicates a method for performing channel sounding by the multiple AP MLDs, and the sounding configuration field indicates configuration information for performing channel sounding by the multiple AP MLDs.

In some embodiments, the sounding method field includes at least one of: a sequential or joint field, or an explicit or implicit field. If the sequential or joint field has a first value, the sequential or joint field indicates that the multiple AP MLDs are to perform channel sounding in sequence; and if the sequential or joint field has a second value, the sequential or joint field indicates that the multiple AP MLDs are to perform channel sounding synchronously at the same time. If the explicit or implicit field has a first value, the explicit or implicit field indicates that the multiple AP MLDs are to perform explicit channel sounding; and if the explicit or implicit field has a second value, the explicit or implicit field indicates that the multiple AP MLDs are to perform implicit channel sounding.

In some embodiments, if the sequential or joint field indicates that the multiple AP MLDs are to perform channel sounding in sequence, times at which the multiple AP MLDs perform channel sounding and/or a sequence in which the multiple AP MLDs perform channel sounding is indicated by the sounding configuration field. Alternatively, if the sequential or joint field indicates that the multiple AP MLDs are to perform channel sounding synchronously at the same time, a time at which the multiple AP MLDs perform channel sounding is indicated by the sounding configuration field.

In some embodiments, the sounding configuration field includes at least one of: AP MLD number field or multiple AP-MLD sounding configuration fields, where the AP MLD number field indicates the number of AP MLDs participating in multi-AP MLD channel sounding, and an *m*^{th} AP-MLD sounding configuration field in the multiple AP-MLD sounding configuration fields indicates configuration information for an *m*^{th} AP MLD participating in multi-AP MLD channel sounding.

In some embodiments, if the multiple AP MLDs are to perform channel sounding in sequence, an order of an AP-MLD sounding configuration field in the multiple AP-MLD sounding configuration fields indicates an order in which a corresponding AP MLD performs multi-AP MLD channel sounding.

In some embodiments, an AP-MLD sounding configuration field in the multiple AP-MLD sounding configuration fields includes at least one of: a BSSID field, an AP MLD ID field, a start time field, or a basic multi-link element, where the BSSID field indicates a BSSID of an AP MLD corresponding to a current AP-MLD sounding configuration field, the AP MLD ID field indicates an ID of the AP MLD corresponding to the current AP-MLD sounding configuration field, the start time field indicates a start time at which the AP MLD corresponding to the current AP-MLD sounding configuration field performs multi-AP MLD channel sounding, the basic multi-link element indicates information of a link used for the AP MLD corresponding to the current AP-MLD sounding configuration field to perform multi-AP MLD channel sounding.

In some embodiments, an AP-MLD sounding configuration field in the multiple AP-MLD sounding configuration fields includes at least one of: a BSSID field, an AP MLD ID field, a start time field, or a link ID information field, where the BSSID field indicates a BSSID of an AP MLD corresponding to a current AP-MLD sounding configuration field, the AP MLD ID field indicates an ID of the AP MLD corresponding to the current AP-MLD sounding configuration field, the start time field indicates a start time at which the AP MLD corresponding to the current AP-MLD sounding configuration field performs multi-AP MLD channel sounding, the link ID information field indicates information of a link used for the AP MLD corresponding to the current AP-MLD sounding configuration field to perform multi-AP MLD channel sounding.

In some embodiments, the link ID information field includes a link ID field and/or a link ID extension field. If the link ID information field includes only the link ID field, the link ID field indicates the ID of the link used for the AP MLD corresponding to the current AP-MLD sounding configuration field to perform multi-AP MLD channel sounding. Alternatively, if the link ID information field includes only the link ID extension field, the link ID extension field indicates the ID of the link used for the AP MLD corresponding to the current AP-MLD sounding configuration field to perform multi-AP MLD channel sounding. Alternatively, if the link ID information field includes both the link ID field and the link ID extension field, the link ID field and the link ID extension field jointly indicate the ID of the link used for the AP MLD corresponding to the current AP-MLD sounding configuration field to perform multi-AP MLD channel sounding.

In some embodiments, the first frame is an NDPA frame and the multiple AP MLDs perform explicit channel sounding, the communication unit 1110 is further configured to receive an NDP frame that is sent by the first AP MLD on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. If the non-AP MLD information list field includes only the link ID field, the link ID field indicates an ID of a link used for the first AP MLD to perform multi-AP MLD channel sounding. Alternatively, if the non-AP MLD information list field includes only the link ID extension field, the link ID extension field indicates the ID of the link used for the first AP MLD to perform multi-AP MLD channel sounding. Alternatively, if the non-AP MLD information list field includes both the link ID field and the link ID extension field, the link ID field and the link ID extension field jointly indicate the ID of the link used for the first AP MLD to perform multi-AP MLD channel sounding.

In some embodiments, the first AP MLD sends the multi-AP MLD sounding announce frame and the first AP MLD covers all the non-AP MLDs participating in multi-AP MLD channel sounding, and the communication unit 1110 is further configured to receive a BFRP trigger frame that is sent by the first AP MLD on the channel for sending the NDPA frame, where the BFRP trigger frame is used for triggering or requesting all the non-AP MLDs participating in multi-AP MLD channel sounding to feed back channel sounding results to AP MLDs associated with the non-AP MLDs. The communication unit 1110 is further configured to send an NDP feedback frame to the first AP MLD, where the NDP feedback frame contains a channel sounding result for the first AP MLD.

In some embodiments, the first AP MLD sends the multi-AP MLD sounding announce frame and the first AP MLD is unable to cover all the non-AP MLDs participating in multi-AP MLD channel sounding, and the communication unit 1110 is further configured to receive a BFRP trigger frame sent by the first AP MLD on the channel for sending the NDPA frame, where the BFRP trigger frame is used for triggering or requesting the first non-AP MLD to feed back a channel sounding result. The communication unit 1110 is further configured to send an NDP feedback frame to the first AP MLD, where the NDP feedback frame contains a channel sounding result for the first AP MLD.

In some embodiments, a user information field of the BFRP trigger frame includes a link ID field and/or a link ID extension field. If the user information field of the BFRP trigger frame includes only the link ID field, the link ID field indicates an ID of a link used for the first AP MLD to perform multi-AP MLD channel sounding. Alternatively, if the user information field of the BFRP trigger frame includes only the link ID extension field, the link ID extension field indicates the ID of the link used for the first AP MLD to perform multi-AP MLD channel sounding. Alternatively, if the user information field of the BFRP trigger frame includes both the link ID field and the link ID extension field, the link ID field and the link ID extension field jointly indicate the ID of the link used for the first AP MLD to perform multi-AP MLD channel sounding.

In some embodiments, the NDP feedback frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP feedback frame corresponds to. Alternatively, the NDP feedback frame includes a multi-link element or a basic multi-link element, where a link ID information field of the multi-link element indicates the ID of the link that the channel sounding result carried in the NDP feedback frame corresponds to; or a link ID information field of the basic multi-link element indicates the ID of the link that the channel sounding result carried in the NDP feedback frame corresponds to.

In some embodiments, if the multiple AP MLDs perform channel sounding in sequence, the multiple AP MLDs send NDPA frames and/or NDP frames in a sequence indicated by the multi-AP MLD sounding announce frame. Alternatively, if the multiple AP MLDs perform channel sounding synchronously at the same time, the multiple AP MLDs send the NDPA frames and/or the NDP frames synchronously at a start time indicated by the multi-AP MLD sounding announce frame.

In some embodiments, the first frame is a sounding trigger frame and the multiple AP MLDs perform implicit channel sounding, and the communication unit 1110 is further configured to send an NDP frame to the first AP MLD, where the NDP frame contains a channel sounding result for the first AP MLD.

In some embodiments, a user information field of the sounding trigger frame includes a link ID field and a link ID extension field, and the link ID field and the link ID extension field jointly indicate an ID of a link used for the first AP MLD to perform multi-AP MLD channel sounding.

In some embodiments, the NDP frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP frame corresponds to. Alternatively, the NDP frame includes a multi-link element or a basic multi-link element, where a link ID information field of the multi-link element indicates the ID of the link that the channel sounding result carried in the NDP frame corresponds to, or a link ID information field of the basic multi-link element indicates the ID of the link that the channel sounding result carried in the NDP frame corresponds to.

In some embodiments, if the multiple AP MLDs perform channel sounding in sequence, the multiple AP MLDs trigger, in a sequence indicated by the multi-AP MLD sounding announce frame, all the non-AP MLDs participating in multi-AP MLD channel sounding to send the NDP frames. Alternatively, if the multiple AP MLDs perform channel sounding synchronously at the same time, the multiple AP MLDs trigger, according to a start time indicated by the multi-AP MLD sounding announce frame, all the non-AP MLDs participating in multi-AP MLD channel sounding to send the NDP frames synchronously at the same time.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the non-AP MLD 1100 according to embodiments of the disclosure can correspond to the first non-AP MLD in the method embodiments of the disclosure, and the foregoing and other operations and/or functions of various units in the non-AP MLD 1100 are intended to implement corresponding procedures of the first non-AP MLD in the method 200 illustrated in FIG. 6, which are not described herein again for the sake of brevity.

FIG. 49 is a schematic block diagram of an AP MLD 1200 according to embodiments of the disclosure. The AP MLD 1200 is a first AP MLD. As illustrated in FIG. 49, the AP MLD 1200 includes a communication unit 1210. The communication unit 1210 is configured to send first information to a first non-AP MLD, where the first AP MLD belongs to a first virtual AP MLD, multiple AP MLDs in the first virtual AP MLD are capable of multi-AP MLD coordinated transmission, and the first information is used for requesting or indicating the first non-AP MLD to re-map data on s links to *w* links, where *s* and *w* each are a positive integer.

In some embodiments, the s links are links that correspond to the first non-AP MLD and have outages, and the *w* links are links that correspond to the first non-AP MLD and do not have outages.

In some embodiments, the *w* links are links set up between the first non-AP MLD and the first AP MLD, and the s links are links set up between the first non-AP MLD and a second AP MLD in the first virtual AP MLD. Alternatively, the s links are links set up between the first non-AP MLD and the first AP MLD, and the *w* links are links set up between the first non-AP MLD and the second AP MLD in the first virtual AP MLD.

In some embodiments, the first information is a traffic identifier (TID)-to-link mapping element, where the TID-to-link mapping element includes a link mapping field of at least one TID, and a link mapping of TID n field in the link mapping field of the at least one TID indicates a link to which TID *n* is mapped, where n is a non-negative integer.

In some embodiments, a link mapping field of a TID in the link mapping field of the at least one TID occupies k bytes, where k is a positive integer and k>2.

In some embodiments, k = 32.

In some embodiments, the first information is carried in a beacon frame or a probe response frame.

In some embodiments, if the first information is carried in a beacon frame, the beacon frame further includes a reconfiguration multi-link element; or if the first information is carried in a probe response frame, the probe response frame further includes a reconfiguration multi-link element, where the reconfiguration multi-link element is used for announcing release or disconnection of connections with affiliated APs corresponding to the s links.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

In some embodiments, the communication unit 1210 is further configured to receive a TID-to-link mapping response frame sent by the first non-AP MLD. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

In some embodiments, the communication unit 1210 is further configured to send a beacon frame or a probe response frame to the first non-AP MLD. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, a link information field of the reconfiguration multi-link element includes at least one per-STA profile field. A link ID field of a per-STA profile field in the at least one per-STA profile field indicates an ID of a link for a reported STA during multi-AP MLD coordination. Alternatively, a link ID extension field of the per-STA profile field in the at least one per-STA profile field indicates the ID of the link for the reported STA during multi-AP MLD coordination. Alternatively, the link ID field and the link ID extension field of the per-STA profile field in the at least one per-STA profile field jointly indicate the ID of the link for the reported STA during multi-AP MLD coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer.

In some embodiments, the AP MLD 1000 further includes a processing unit 1220. The processing unit 1220 is configured to determine, according to link quality of the s links, that outage has occurred to the s links, or determining, by the first AP MLD according to location information or displacement information of the first non-AP MLD, that outage has occurred to the s links. Additionally or alternatively, the communication unit 1210 is further configured to receive second information sent by the first non-AP MLD, where the second information indicates that outage has occurred to the s links. Additionally or alternatively, the communication unit 1210 is further configured to receive third information sent by another AP MLD, where the third information indicates that outage has occurred to the s links.

In some embodiments, the second information or the third information includes at least one of: IDs of the s links, MAC addresses of AP MLDs corresponding to the s links, or MAC addresses of APs corresponding to the s links.

In some embodiments, the second information is carried in an outage frame.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1200 according to embodiments of the disclosure can correspond to the first AP MLD in the method embodiments of the disclosure, and the foregoing and other operations and/or functions of various units in the AP MLD 1200 are intended to implement the corresponding procedures of the first AP MLD in the method 300 illustrated in FIG. 20, which are not described herein again for the sake of brevity.

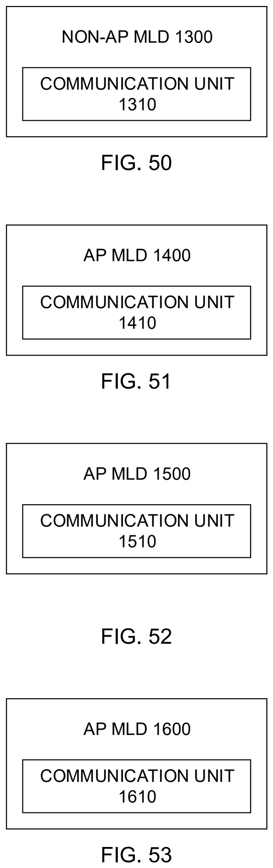

FIG. 50 is a schematic block diagram of a non-AP MLD 1300 according to embodiments of the disclosure. The non-AP MLD 1300 is a first non-AP MLD. As illustrated in FIG. 50, the non-AP MLD 1300 includes a communication unit 1310. The communication unit 1310 is configured to receive first information sent by a first AP MLD, where the first AP MLD belongs to a first virtual AP MLD, multiple AP MLDs in the first virtual AP MLD are capable of multi-AP MLD coordinated transmission, and the first information is used for requesting or indicating the first non-AP MLD to re-map data on s links to *w* links, where s and *w* each are a positive integer.

In some embodiments, the s links are links that correspond to the first non-AP MLD and have outages, and the *w* links are links that correspond to the first non-AP MLD and do not have outages.

In some embodiments, the *w* links are links set up between the first non-AP MLD and the first AP MLD, and the s links are links set up between the first non-AP MLD and a second AP MLD in the first virtual AP MLD. Alternatively, the s links are links set up between the first non-AP MLD and the first AP MLD, and the *w* links are links set up between the first non-AP MLD and the second AP MLD in the first virtual AP MLD.

In some embodiments, the first information is a TID-to-link mapping element, where the TID-to-link mapping element includes a link mapping field of at least one TID, and a link mapping of TID n field in the link mapping field of the at least one TID indicates a link to which TID *n* is mapped, where n is a non-negative integer.

In some embodiments, a link mapping field of a TID in the link mapping field of the at least one TID occupies k bytes, where k is a positive integer and k>2.

In some embodiments, *k =* 32.

In some embodiments, the first information is carried in a beacon frame or a probe response frame.

In some embodiments, if the first information is carried in a beacon frame, the beacon frame further includes a reconfiguration multi-link element; or if the first information is carried in a probe response frame, the probe response frame further includes a reconfiguration multi-link element, where the reconfiguration multi-link element is used for announcing release or disconnection of connections with affiliated APs corresponding to the s links.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

In some embodiments, the communication unit 1310 is further configured to send a TID-to-link mapping response frame to the first AP MLD. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

In some embodiments, the communication unit 1310 is further configured to receive a beacon frame or a probe response frame sent by the first AP MLD. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, a link information field of the reconfiguration multi-link element includes at least one per-STA profile field. A link ID field of a per-STA profile field in the at least one per-STA profile field indicates an ID of a link for a reported STA during multi-AP MLD coordination. Alternatively, a link ID extension field of the per-STA profile field in the at least one per-STA profile field indicates the ID of the link for the reported STA during multi-AP MLD coordination. Alternatively, the link ID field and the link ID extension field of the per-STA profile field in the at least one per-STA profile field jointly indicate the ID of the link for the reported STA during multi-AP MLD coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer.

In some embodiments, that outage has occurred to the s links is determined by the first AP MLD according to link quality of the s links, or determined by the first AP MLD according to location information or displacement information of the first non-AP MLD. Additionally or alternatively, that outage has occurred to the s links is indicated by second information sent by the first non-AP MLD. Additionally or alternatively, that outage has occurred to the s links is indicated by third information sent by another AP MLD.

In some embodiments, the second information or the third information includes at least one of: IDs of the s links, MAC addresses of AP MLDs corresponding to the s links, or MAC addresses of APs corresponding to the s links.

In some embodiments, the second information is carried in an outage frame.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or a SOC. The processing unit can be one or more processors.

It should be understood that, the non-AP MLD 1300 according to embodiments of the disclosure can correspond to the first non-AP MLD in the method embodiments of the disclosure. The foregoing and other operations and/or functions of various units in the non-AP MLD 1300 are intended to implement corresponding procedures of the first non-AP MLD in the method 300 illustrated in FIG. 20, which are not described herein again for the sake of brevity.

FIG. 51 is a schematic block diagram of an AP MLD 1400 according to embodiments of the disclosure. The AP MLD 1400 is a first AP MLD. As illustrated in FIG. 51, the AP MLD 1400 includes a communication unit 1410. The communication unit 1410 is configured to send a data sharing announce frame to at least one AP MLD, where the first AP MLD and the at least one AP MLD belong to a first virtual AP MLD, multiple AP MLDs in the first virtual AP MLD are capable of multi-AP MLD coordinated transmission, and the data sharing announce frame indicates information of a link for transmitting shared data and a non-AP MLD that the shared data belongs to. The communication unit 1410 is further configured to send the shared data on the link indicated by the data sharing announce frame.

In some embodiments, a data sharing announcement field of the data sharing announce frame includes a link ID information field and an MLD MAC address field, where the link information field indicates the information of the link for transmitting the shared data, and the MLD MAC address field indicates a MAC address of the non-AP MLD that the shared data belongs to.

In some embodiments, the communication unit 1410 is further configured to receive an ACK frame fed back by some or all of the at least one AP MLD, where the ACK frame indicates that a corresponding AP MLD has successfully received the shared data.

In some embodiments, the first AP MLD shares data of at least one non-AP MLD with the at least one AP MLD over a backhaul link.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1400 according to embodiments of the disclosure can correspond to the first AP MLD in the method embodiments of the disclosure, and the foregoing and other operations and/or functions of various units in the AP MLD 1400 are intended to implement corresponding procedures of the first AP MLD in the method 400 illustrated in FIG. 32, which are not described herein again for the sake of brevity.

FIG. 52 is a schematic block diagram of an AP MLD 1500 according to embodiments of the disclosure. The AP MLD 1500 is a second AP MLD. As illustrated in FIG. 52, the AP MLD 1500 includes a communication unit 1510. The communication unit 1510 is configured to receive a data sharing announce frame sent by a first AP MLD, where the first AP MLD and the second AP MLD belong to a first virtual AP MLD, multiple AP MLDs in the first virtual AP MLD are capable of multi-AP MLD coordinated transmission, and the data sharing announce frame indicates information of a link for transmitting shared data and a non-AP MLD that the shared data belongs to. The communication unit 1510 is further configured to receive the shared data that is sent by the first AP MLD on the link indicated by the data sharing announce frame.

In some embodiments, a data sharing announcement field of the data sharing announce frame includes a link ID information field and an MLD MAC address field, where the link information field indicates the information of the link for transmitting the shared data, and the MLD MAC address field indicates a MAC address of the non-AP MLD that the shared data belongs to.

In some embodiments, the communication unit 1510 is further configured to feed back an ACK frame to the first AP MLD, where the ACK frame indicates that the second AP MLD has successfully received the shared data.

In some embodiments, the first AP MLD shares data of at least one non-AP MLD with the second AP MLD over a backhaul link.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1500 according to embodiments of the disclosure can correspond to the second AP MLD in the method embodiments of the disclosure, and the foregoing and other operations and/or functions of various units in the AP MLD 1500 are intended to implement corresponding procedures of the second AP MLD in the method 400 illustrated in FIG. 32, which are not described herein again for the sake of brevity.

FIG. 53 is a schematic block diagram of an AP MLD 1600 according to embodiments of the disclosure. The AP MLD 1600 is a first AP MLD. As illustrated in FIG. 53, the AP MLD 1600 includes a communication unit 1610. The communication unit 1610 is configured to send a multi-AP MLD TX trigger frame to at least one AP MLD, where the first AP MLD and the at least one AP MLD belong to a first virtual AP MLD, multiple AP MLDs in the first virtual AP MLD are capable of multi-AP MLD coordinated transmission, the at least one AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

In some embodiments, a user information field of the multi-AP MLD TX trigger frame includes an AID field, and a link ID field and/or a link ID extension field, where the AID field indicates an address of an AP MLD participating in multi-AP MLD coordinated transmission for the first non-AP MLD, and the link ID field indicates an ID of a link used by the AP MLD indicated by the AID field, or the link ID extension field indicates the ID of the link used by the AP MLD indicated by the AID field, or the link ID field and the link ID extension field jointly indicate the ID of the link used by the AP MLD indicated by the AID field. Alternatively, the user information field of the multi-AP MLD TX trigger frame includes an AID field and a trigger dependent user information field, and the trigger dependent user information field includes a multi-link field or a basic multi-link field, where the AID field indicates an address of an AP MLD participating in multi-AP MLD coordinated transmission for the first non-AP MLD, and the multi-link field indicates an ID of a link used by the AP MLD indicated by the AID field, or the basic multi-link field indicates the ID of the link used by the AP MLD indicated by the AID field.

In some embodiments, the communication unit 1610 is further configured to send a data frame to the first non-AP MLD according to information indicated by the multi-AP MLD TX trigger frame.

In some embodiments, the communication unit 1610 is further configured to receive an ACK frame sent by the first non-AP MLD, where the ACK frame indicates that the first non-AP MLD has successfully received the data frame sent by the first AP MLD.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a physical (PHY) layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, if the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1600 according to embodiments of the disclosure can correspond to the first AP MLD in the method embodiments of the disclosure, and the foregoing and other operations and/or functions of various units in the AP MLD 1600 are intended to implement the corresponding procedures of the first AP MLD in the method 500 illustrated in FIG. 35, which are not described herein again for the sake of brevity.

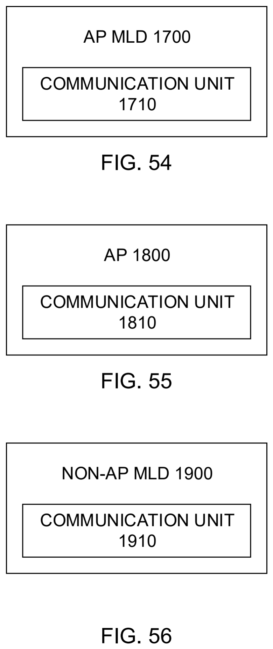

FIG. 54 is a schematic block diagram of an AP MLD 1700 according to embodiments of the disclosure. The AP MLD 1700 is a second AP MLD. As illustrated in FIG. 54, the AP MLD 1700 includes a communication unit 1710. The communication unit 1710 is configured to receive a multi-AP MLD TX trigger frame sent by the first AP MLD, where the first AP MLD and the second AP MLD belong to a first virtual AP MLD, multiple AP MLDs in the first virtual AP MLD are capable of multi-AP MLD coordinated transmission, the second AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

In some embodiments, a user information field of the multi-AP MLD TX trigger frame includes an AID field, and a link ID field and/or a link ID extension field, where the AID field indicates an address of an AP MLD participating in multi-AP MLD coordinated transmission for the first non-AP MLD, and the link ID field indicates an ID of a link used by the AP MLD indicated by the AID field, or the link ID extension field indicates the ID of the link used by the AP MLD indicated by the AID field, or the link ID field and the link ID extension field jointly indicate the ID of the link used by the AP MLD indicated by the AID field. Alternatively, the user information field of the multi-AP MLD TX trigger frame includes an AID field and a trigger dependent user information field, and the trigger dependent user information field includes a multi-link field or a basic multi-link field, where the AID field indicates an address of an AP MLD participating in multi-AP MLD coordinated transmission for the first non-AP MLD, and the multi-link field indicates an ID of a link used by the AP MLD indicated by the AID field, or the basic multi-link field indicates the ID of the link used by the AP MLD indicated by the AID field.

In some embodiments, the communication unit 1710 is further configured to send a data frame to the first non-AP MLD according to information indicated by the multi-AP MLD TX trigger frame.

In some embodiments, the communication unit 1710 is further configured to receive an ACK frame sent by the first non-AP MLD, where the ACK frame indicates that the first non-AP MLD has successfully received the data frame sent by the second AP MLD.

In some embodiments, the first AP MLD and one or more AP MLDs form the first virtual AP MLD.

In some embodiments, the first virtual AP MLD has a virtual MLD MAC, where the virtual MLD MAC is connected to MLD upper MACs of all AP MLDs in the first virtual AP MLD, and the virtual MLD MAC manages and controls all the AP MLDs in the first virtual AP MLD.

In some embodiments, the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

In some embodiments, an AP MLD in the first virtual AP MLD has an MLD upper MAC, a non-MLD upper MAC, an MLD lower MAC, and a PHY layer.

In some embodiments, the virtual MLD MAC of the first virtual AP MLD manages link assignment for an entire VBSS corresponding to the first virtual AP MLD.

In some embodiments, some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

In some embodiments, one affiliated STA of a non-AP MLD is allowed for setting up links with affiliated APs of multiple AP MLDs in the first virtual AP MLD.

In some embodiments, one affiliated STA of a non-AP MLD transmits the same PPDU on multiple links corresponding to the first virtual AP MLD, or one affiliated STA of the non-AP MLD transmits different PPDUs on multiple links corresponding to the first virtual AP MLD.

In some embodiments, the first non-AP MLD is an EHT non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

In some embodiments, the first AP MLD is a master AP MLD.

In some embodiments, the communication unit can be a communication interface or a transceiver, or can be an input/output interface of a communication chip or an SOC. The processing unit can be one or more processors.

It should be understood that, the AP MLD 1700 according to embodiments of the disclosure can correspond to the second AP MLD in the method embodiments of the disclosure, and the foregoing and other operations and/or functions of various units in the AP MLD 1700 are intended to implement the corresponding procedures of the second AP MLD in the method 500 illustrated in FIG. 35, which are not described herein again for the sake of brevity.

FIG. 55 is a schematic block diagram of an AP 1800 according to embodiments of the disclosure. The AP 1800 is a first AP. As illustrated in FIG. 55, the AP 1800 includes a communication unit 1810. The communication unit 1810 is configured to send or receive a multi-AP sounding announce frame. The multi-AP sounding announce frame indicates at least one of: a sequence in which multiple APs perform channel sounding, a time at which the multiple APs perform channel sounding, information of links used for the multiple APs to perform channel sounding, information of a frequency band used for the multiple APs to perform channel sounding, or information of a channel corresponding to the links and/or the frequency band used for the multiple APs to perform channel sounding. The first AP belongs to a second virtual AP MLD) multiple APs in the second virtual AP MLD are capable of multi-AP coordinated transmission, and the multiple APs are affiliated APs which are non-collocated in the second virtual AP MLD.

In some embodiments, a multi-AP sounding announce field of the multi-AP sounding announce frame includes at least one of: a VBSSID field, a candidate set ID field, a sounding method field, or a sounding configuration field, where the VBSSID field indicates a VBSSID of the second virtual AP MLD, the candidate set ID field indicates an ID of a multi-AP MLD candidate set corresponding to the second virtual AP MLD, the sounding method field indicates a method for performing channel sounding by the multiple APs, and the sounding configuration field indicates configuration information for performing channel sounding by the multiple APs.

In some embodiments, the sounding method field includes at least one of: a sequential or joint field, or an explicit or implicit field. if the sequential or joint field has a first value, the sequential or joint field indicates that the multiple APs are to perform channel sounding in sequence, and if the sequential or joint field has a second value, the sequential or joint field indicates that the multiple APs are to perform channel sounding synchronously at the same time. if the explicit or implicit field has a first value, the explicit or implicit field indicates that the multiple APs are to perform explicit channel sounding, and if the explicit or implicit field has a second value, the explicit or implicit field indicates that the multiple APs are to perform implicit channel sounding.

In some embodiments, if the sequential or joint field indicates that the multiple APs are to perform channel sounding in sequence, times at which the multiple APs perform channel sounding and/or a sequence in which the multiple APs perform channel sounding is indicated by the sounding configuration field. Alternatively, if the sequential or joint field indicates that the multiple APs are to perform channel sounding synchronously at the same time, a time at which the multiple APs are to perform channel sounding is indicated by the sounding configuration field.

In some embodiments, the sounding configuration field includes at least one of: an AP number field and multiple AP sounding configuration fields, where the AP number field indicates the number of APs participating in multi-AP channel sounding, and an *m*^{th} AP sounding configuration field in the multiple AP sounding configuration fields indicates configuration information for an *m*^{th} AP participating in multi-AP channel sounding.

In some embodiments, if the multiple APs are to perform channel sounding in sequence, an order of an AP sounding configuration field in the multiple AP sounding configuration fields indicates an order in which a corresponding AP performs multi-AP channel sounding.

In some embodiments, an AP sounding configuration field in the multiple AP sounding configuration fields includes at least one of: a BSSID field, an AP ID field, a start time field, or a basic multi-link element, where the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the basic multi-link element indicates information of a link used for the AP corresponding to the current AP sounding configuration field to perform multi-AP channel sounding.

In some embodiments, an AP sounding configuration field in the multiple AP sounding configuration fields includes at least one of: a BSSID field, an AP ID field, a start time field, or a link ID information field, where the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the link ID information field indicates information of a link used for the AP corresponding to the current AP sounding configuration field to perform multi-AP channel sounding.

In some embodiments, the link ID information field includes a link ID field and/or a link ID extension field. if the link ID information field includes only the link ID field, the link ID field indicates the ID of the link used for the AP corresponding to the current AP sounding configuration field to perform multi-AP channel sounding. Alternatively, if the link ID information field includes only the link ID extension field, the link ID extension field indicates the ID of the link used for the AP corresponding to the current AP sounding configuration field to perform multi-AP channel sounding. Alternatively, if the link ID information field includes both the link ID field and the link ID extension field, the link ID field and the link ID extension field jointly indicate the ID of the link used for the AP corresponding to the current AP sounding configuration field to perform multi-AP channel sounding.

In some embodiments, the multiple APs include the first AP and the multiple APs perform explicit channel sounding, and the communication unit 1810 is further configured to send an NDPA frame to a first non-AP MLD according to information indicated by the multi-AP sounding announce frame, where the NDPA frame indicates a parameter and configuration information of an NDP frame to be sent, and the first non-AP MLD is a non-AP MLD associated with the first AP in all non-AP MLDs participating in multi-AP channel sounding. The communication unit 1810 is further configured to send an NDP frame to the first non-AP MLD on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. if the non-AP MLD information list field includes only the link ID field, the link ID field indicates an ID of a link used for the first AP to perform multi-AP channel sounding. Alternatively, if the non-AP MLD information list field includes only the link ID extension field, the link ID extension field indicates the ID of the link used for the first AP to perform multi-AP channel sounding. Alternatively, if the non-AP MLD information list field includes both the link ID field and the link ID extension field, the link ID field and the link ID extension field jointly indicate the ID of the link used for the first AP to perform multi-AP channel sounding.

In some embodiments, the first AP sends the multi-AP sounding announce frame and an AP which is co-located with the first AP in the second virtual AP MLD covers all the non-AP MLDs participating in multi-AP channel sounding, and the communication unit 1810 is further configured to send a BFRP trigger frame to all the non-AP MLDs participating in multi-AP channel sounding on the channel for sending the NDPA frame, where the BFRP trigger frame is used for triggering or requesting all the non-AP MLDs participating in multi-AP channel sounding to feed back channel sounding results to APs associated with the non-AP MLDs. The communication unit 1810 is further configured to receive an NDP feedback frame sent by the first non-AP MLD, where the NDP feedback frame contains a channel sounding result for the first AP.

In some embodiments, the first AP sends the multi-AP sounding announce frame, and an AP which is co-located with the first AP in the second virtual AP MLD is unable to cover all the non-AP MLDs participating in multi-AP channel sounding, and the communication unit 1810 is further configured to send a BFRP trigger frame to the first non-AP MLD on the channel for sending the NDPA frame, where the BFRP trigger frame is used for triggering or requesting the first non-AP MLD to feed back a channel sounding result. The communication unit 1810 is further configured to receive an NDP feedback frame sent by the first non-AP MLD, where the NDP feedback frame contains a channel sounding result for the first AP.

In some embodiments, a user information field of the BFRP trigger frame includes a link ID field and/or a link ID extension field. if the user information field of the BFRP trigger frame includes only the link ID field, the link ID field indicates an ID of a link used for the first AP to perform multi-AP MLD channel sounding. Alternatively, if the user information field of the BFRP trigger frame includes only the link ID extension field, the link ID extension field indicates the ID of the link used for the first AP to perform multi-AP MLD channel sounding. Alternatively, if the user information field of the BFRP trigger frame includes both the link ID field and the link ID extension field, the link ID field and the link ID extension field jointly indicate the ID of the link used for the first AP to perform multi-AP MLD channel sounding.

In some embodiments, the NDP feedback frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP feedback frame corresponds to. Alternatively, the NDP feedback frame includes a multi-link element or a basic multi-link element, where a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

In some embodiments, if the multiple APs perform channel sounding in sequence, the multiple APs send the NDPA frames and/or the NDP frames in a sequence indicated by the multi-AP sounding announce frame. Alternatively, if the multiple APs perform channel sounding synchronously at the same time, the multiple APs send the NDPA frames and/or the NDP frames synchronously at a start time indicated by the multi-AP sounding announce frame.

In some embodiments, the multiple APs include the first AP and the multiple APs perform implicit channel sounding, and the communication unit 1810 is further configured to send a sounding trigger frame to a first non-AP MLD according to information indicated by the multi-AP sounding announcement frame, where the sounding trigger frame is used for triggering or requesting the first non-AP MLD to feed back a channel sounding result, and the first non-AP MLD is a non-AP MLD associated with the first AP in all non-AP MLDs participating in multi-AP channel sounding. The communication unit 1810 is further configured to receive an NDP frame sent by the first non-AP MLD, where the NDP frame contains a channel sounding result for the first AP.

In some embodiments, a user information field of the sounding trigger frame includes a link ID field and a link ID extension field, and the link ID field and the link ID extension field jointly indicate an ID of a link used for the first AP to perform multi-AP channel sounding.

In some embodiments, the NDP frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP frame corresponds to. Alternatively, the NDP frame includes a multi-link element or a basic multi-link element, where a link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

In some embodiments, if the multiple APs perform channel sounding in sequence, the multiple APs trigger, in a sequence indicated by the multi-AP sounding announce frame, all the non-AP MLDs participating in multi-AP channel sounding to send the NDP frames. Alternatively, if the multiple APs perform channel sounding synchronously at the same time, the multiple APs trigger, according to a start time indicated by the multi-AP sounding announce frame, all the non-AP MLDs participating in multi-AP channel sounding to send the NDP frames synchronously at the same time.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 1800 according to embodiments of the disclosure can correspond to the first AP in the method embodiments of the disclosure, and the foregoing and other operations and/or functions of various units in the AP 1800 are intended to implement corresponding procedures of the first AP in the method 600 illustrated in FIG. 39, which are not described herein again for the sake of brevity.

FIG. 56 is a schematic block diagram of a non-AP MLD 1900 according to embodiments of the disclosure. The non-AP MLD 1900 is a first non-AP MLD. As illustrated in FIG. 56, the non-AP MLD 1900 includes a communication unit 1910. The communication unit 1910 is configured to receive a second frame sent by a first AP. The second frame is sent by the first AP according to information indicated by a multi-AP sounding announce frame, the first non-AP MLD is a non-AP MLD associated with the first AP in all non-AP MLDs participating in multi-AP channel sounding, the first AP belongs to a second virtual AP MLD, multiple APs in the second virtual AP MLD are capable of multi-AP coordinated transmission, the multiple APs are affiliated APs non-collocated in the second virtual AP MLD, and the second frame is an NDPA frame or a sounding trigger frame. The multi-AP sounding announce frame indicates at least one of: a sequence in which plurality of APs perform channel sounding, a time at which the multiple APs perform channel sounding, information of links used for the multiple APs to perform channel sounding, information of a frequency band used for the multiple APs to perform channel sounding, or information of a channel corresponding to the links and/or the frequency band used for the multiple APs to perform channel sounding. If the second frame is an NDPA frame, the NDPA frame indicates a parameter and configuration information of an NDP frame to be sent. If the second frame is a sounding trigger frame, the sounding trigger frame is used for triggering or requesting the first non-AP MLD to feed back a sounding result.

In some embodiments, a multi-AP sounding announce field of the multi-AP sounding announce frame includes at least one of: a VBSSID field, a candidate set ID field, a sounding method field, or a sounding configuration field, where the VBSSID field indicates a VBSSID of the second virtual AP MLD, the candidate set ID field indicates an ID of a multi-AP MLD candidate set corresponding to the second virtual AP MLD, the sounding method field indicates a method for performing channel sounding by the multiple APs, and the sounding configuration field indicates configuration information for performing channel sounding by the multiple APs.

In some embodiments, the sounding method field includes at least one of: a sequential or joint field, or an explicit or implicit field. If the sequential or joint field has a first value, the sequential or joint field indicates that the multiple APs are to perform channel sounding in sequence, and if the sequential or joint field has a second value, the sequential or joint field indicates that the multiple APs are to perform channel sounding synchronously at the same time. If the explicit or implicit field has a first value, the explicit or implicit field indicates that the multiple APs are to perform explicit channel sounding, and if the explicit or implicit field has a second value, the explicit or implicit field indicates that the multiple APs are to perform implicit channel sounding.

In some embodiments, if the sequential or joint field indicates that the multiple APs are to perform channel sounding in sequence, times at which the multiple APs perform channel sounding and/or a sequence in which the multiple APs perform channel sounding is indicated by the sounding configuration field. Alternatively, if the sequential or joint field indicates that the multiple APs are to perform channel sounding synchronously at the same time, a time at which the multiple APs perform channel sounding is indicated by the sounding configuration field.

In some embodiments, the sounding configuration field includes at least one of: an AP number field and multiple AP sounding configuration fields, where the AP number field indicates the number of APs participating in multi-AP channel sounding, and an *m*^{th} AP sounding configuration field in the multiple AP sounding configuration fields indicates configuration information for an *m*^{th} AP participating in multi-AP channel sounding.

In some embodiments, if the multiple APs are to perform channel sounding in sequence, an order of an AP sounding configuration field in the multiple AP sounding configuration fields indicates an order in which a corresponding AP performs multi-AP channel sounding.

In some embodiments, an AP sounding configuration field in the multiple AP sounding configuration fields includes at least one of: a BSSID field, an AP ID field, a start time field, or a basic multi-link element, where the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the basic multi-link element indicates information of a link used for the AP corresponding to the current AP sounding configuration field to perform multi-AP channel sounding.

In some embodiments, an AP sounding configuration field in the multiple AP sounding configuration fields includes at least one of: a BSSID field, an AP ID field, a start time field, or a link ID information field, where the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the link ID information field indicates information of a link used for the AP corresponding to the current AP sounding configuration field to perform multi-AP channel sounding.

In some embodiments, the link ID information field includes a link ID field and/or a link ID extension field. if the link ID information field includes only the link ID field, the link ID field indicates the ID of the link used for the AP corresponding to the current AP sounding configuration field to perform multi-AP channel sounding. Alternatively, if the link ID information field includes only the link ID extension field, the link ID extension field indicates the ID of the link used for the AP corresponding to the current AP sounding configuration field to perform multi-AP channel sounding. Alternatively, if the link ID information field includes both the link ID field and the link ID extension field, the link ID field and the link ID extension field jointly indicate the ID of the link used for the AP corresponding to the current AP sounding configuration field to perform multi-AP channel sounding.

In some embodiments, the second frame is an NDPA frame and the multiple APs perform explicit channel sounding, and the communication unit 1910 is further configured to receive an NDP frame sent by the first AP on a channel for sending the NDPA frame, where a time interval between the NDP frame and the NDPA frame is not less than one SIFS.

In some embodiments, the NDPA frame includes a non-AP MLD information list field, and the non-AP MLD information list field includes a link ID field and/or a link ID extension field. if the non-AP MLD information list field includes only the link ID field, the link ID field indicates an ID of a link used for the first AP to perform multi-AP channel sounding. Alternatively, if the non-AP MLD information list field includes only the link ID extension field, the link ID extension field indicates the ID of the link used for the first AP to perform multi-AP channel sounding. Alternatively, if the non-AP MLD information list field includes both the link ID field and the link ID extension field, the link ID field and the link ID extension field jointly indicate the ID of the link used for the first AP to perform multi-AP channel sounding.

In some embodiments, the first AP sends the multi-AP sounding announce frame and an AP which is co-located with the first AP in the second virtual AP MLD covers all the non-AP MLDs participating in multi-AP channel sounding, and the communication unit 1910 is further configured to receive a BFRP trigger frame that is sent by the first AP on the channel for sending the NDPA frame, where the BFRP trigger frame is used for triggering or requesting all the non-AP MLDs participating in multi-AP channel sounding to feed back channel sounding results to APs associated with the non-AP MLDs. The communication unit 1910 is further configured to send an NDP feedback frame to the first AP, where the NDP feedback frame contains a channel sounding result for the first AP.

In some embodiments, the first AP sends the multi-AP sounding announce frame, and an AP which is co-located with the first AP in the second virtual AP MLD is unable to cover all the non-AP MLDs participating in multi-AP channel sounding, and the communication unit 1910 is further configured to receive a BFRP trigger frame that is sent by the first AP on the channel for sending the NDPA frame, where the BFRP trigger frame is used for triggering or requesting the first non-AP MLD to feed back a channel sounding result. The communication unit 1910 is further configured to send an NDP feedback frame to the first AP, where the NDP feedback frame contains a channel sounding result for the first AP.

In some embodiments, a user information field of the BFRP trigger frame includes a link ID field and/or a link ID extension field. if the user information field of the BFRP trigger frame includes only the link ID field, the link ID field indicates an ID of a link used for the first AP to perform multi-AP MLD channel sounding. Alternatively, if the user information field of the BFRP trigger frame includes only the link ID extension field, the link ID extension field indicates the ID of the link used for the first AP to perform multi-AP MLD channel sounding. Alternatively, if the user information field of the BFRP trigger frame includes both the link ID field and the link ID extension field, the link ID field and the link ID extension field jointly indicate the ID of the link used for the first AP to perform multi-AP MLD channel sounding.

In some embodiments, the NDP feedback frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP feedback frame corresponds to. Alternatively, the NDP feedback frame includes a multi-link element or a basic multi-link element, where a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

In some embodiments, if the multiple APs perform channel sounding in sequence, the multiple APs send the NDPA frames and/or the NDP frames in a sequence indicated by the multi-AP sounding announce frame. Alternatively, if the multiple APs perform channel sounding synchronously at the same time, the multiple APs send the NDPA frames and/or the NDP frames synchronously at a start time indicated by the multi-AP sounding announce frame.

In some embodiments, the second frame is a sounding trigger frame and the multiple APs perform implicit channel sounding, and the communication unit 1910 is further configured to send an NDP frame to the first AP, where the NDP frame contains a channel sounding result for the first AP.

In some embodiments, a user information field of the sounding trigger frame includes a link ID field and a link ID extension field, and the link ID field and the link ID extension field jointly indicate an ID of a link used for the first AP to perform multi-AP channel sounding.

In some embodiments, the NDP frame includes a link ID information field, and the link ID information field includes a link ID field and/or a link ID extension field, where if the link ID information field includes only the link ID field, the link ID field indicates an ID of a link that a channel sounding result carried in the NDP feedback frame corresponds to; or if the link ID information field includes only the link ID extension field, the link ID extension field indicates the ID of the link that the channel sounding result carried in the NDP feedback frame corresponds to; or if the link ID information field includes both the link ID field and the link ID extension field, the link ID field and the link ID extension field jointly indicate the ID of the link that the channel sounding result carried in the NDP frame corresponds to. Alternatively, the NDP frame includes a multi-link element or a basic multi-link element, where a link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

In some embodiments, if the multiple APs perform channel sounding in sequence, the multiple APs trigger, in a sequence indicated by the multi-AP sounding announce frame, all the non-AP MLDs participating in multi-AP channel sounding to send the NDP frames. Alternatively, if the multiple APs perform channel sounding synchronously at the same time, the multiple APs trigger, according to a start time indicated by the multi-AP sounding announce frame, all the non-AP MLDs participating in multi-AP channel sounding to send the NDP frames synchronously at the same time.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the non-AP MLD 1900 according to embodiments of the disclosure can correspond to the first non-AP MLD in the method embodiments of the disclosure, and the foregoing and other operations and/or functions of various units in the non-AP MLD 1900 are intended to implement corresponding procedures of the first non-AP MLD in the method 600 illustrated in FIG. 39, which are not described herein again for the sake of brevity.

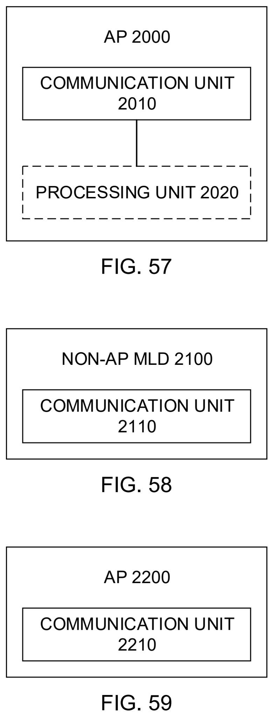

FIG. 57 is a schematic block diagram of an AP 2000 according to embodiments of the disclosure. The AP 2000 is a first AP. As illustrated in FIG. 57, the AP 2000 includes a communication unit 2010. The communication unit 2010 is configured to send first information to a first non-AP MLD. The first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, where s and w each are a positive integer.

In some embodiments, the s links are links that correspond to the first non-AP MLD and have outages, and the *w* links are links that correspond to the first non-AP MLD and do not have outages.

In some embodiments, the *w* links are links set up between the first non-AP MLD and an AP which is co-located with the first AP in the second virtual AP MLD, and the s links are links set up between the first non-AP MLD and an AP which is co-located with a second AP in the second virtual AP MLD. Alternatively, the s links are links set up between the first non-AP MLD and an AP which is co-located with the first AP in the second virtual AP MLD, and the *w* links are links set up between the first non-AP MLD and an AP which is co-located with a second AP in the second virtual AP MLD.

In some embodiments, the first information is a TID-to-link mapping element, where the TID-to-link mapping element includes a link mapping field of at least one TID, and a link mapping of TID n field in the link mapping field of the at least one TID indicates a link to which TID *n* is mapped, where n is a non-negative integer.

In some embodiments, a link mapping field of a TID in the link mapping field of the at least one TID occupies k bytes, where k is a positive integer and k>2.

In some embodiments, k = 32.

In some embodiments, the first information is carried in a beacon frame or a probe response frame.

In some embodiments, if the first information is carried in a beacon frame, the beacon frame further includes a reconfiguration multi-link element; or if the first information is carried in a probe response frame, the probe response frame further includes a reconfiguration multi-link element, where the reconfiguration multi-link element is used for announcing release or disconnection of connections with affiliated APs corresponding to the s links.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

In some embodiments, the communication unit 2010 is further configured to receive a TID-to-link mapping response frame sent by the first non-AP MLD. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

In some embodiments, the communication unit 2010 is further configured to send a beacon frame or a probe response frame to the first non-AP MLD. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, the link information field of the reconfiguration multi-link element includes at least one per-STA profile field, where a link ID field of a per-STA profile field in the at least one per-STA profile field indicates an ID of a link for a reported STA during multi-AP MLD coordination, or a link ID extension field of the per-STA profile field in the at least one per-STA profile field indicates the ID of the link for the reported STA during multi-AP MLD coordination, or the link ID field and the link ID extension field of the per-STA profile field in the at least one per-STA profile field jointly indicate the ID of the link for the reported STA during multi-AP coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer.

In some embodiments, the AP 2000 includes a processing unit 2020. The processing unit 2020 is configured to determine, according to link quality of the s links, that outage has occurred to the s links, or the processing unit 2020 is configured to determine, according to location information or displacement information of the first non-AP MLD, that outage has occurred to the s links. Additionally or alternatively, the communication unit 2010 is further configured to receive second information sent by the first non-AP MLD, where the second information indicates that outage has occurred to the s links. Additionally or alternatively, the communication unit 2010 is further configured to receive third information sent by another AP, where the third information indicates that outage has occurred to the s links.

In some embodiments, the second information or the third information includes at least one of: IDs of the s links, or MAC addresses of APs corresponding to the s links.

In some embodiments, the second information is carried in an outage frame.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a physical (PHY) layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 2000 according to embodiments of the disclosure can correspond to the first AP in the method embodiments of the disclosure, and the foregoing and other operations and/or functions of various units in the AP 2000 are intended to implement corresponding procedures of the first AP in the method 700 illustrated in FIG. 44, which are not described herein again for the sake of brevity.

FIG. 58 is a schematic block diagram of a non-AP MLD 2100 according to embodiments of the disclosure. The non-AP MLD 2100 is a first non-AP MLD. As illustrated in FIG. 58, the non-AP MLD 2100 includes a communication unit 2110. The communication unit 2110 is configured to receive first information sent by a first AP. The first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, where *s* and *w* each are a positive integer.

In some embodiments, the s links are links that correspond to the first non-AP MLD and have outages, and the *w* links are links that correspond to the first non-AP MLD and do not have outages.

In some embodiments, the *w* links are links set up between the first non-AP MLD and an AP which is co-located with the first AP in the second virtual AP MLD, and the s links are links set up between the first non-AP MLD and an AP which is co-located with a second AP in the second virtual AP MLD. Alternatively, the s links are links set up between the first non-AP MLD and an AP which is co-located with the first AP in the second virtual AP MLD, and the *w* links are links set up between the first non-AP MLD and an AP which is co-located with a second AP in the second virtual AP MLD.

In some embodiments, the first information is a TID-to-link mapping element, where the TID-to-link mapping element includes a link mapping field of at least one TID, and a link mapping of TID n field in the link mapping field of the at least one TID indicates a link to which TID *n* is mapped, where n is a non-negative integer.

In some embodiments, a link mapping field of a TID in the link mapping field of the at least one TID occupies k bytes, where k is a positive integer and k>2.

In some embodiments, k = 32.

In some embodiments, the first information is carried in a beacon frame or a probe response frame.

In some embodiments, if the first information is carried in a beacon frame, the beacon frame further includes a reconfiguration multi-link element; or if the first information is carried in a probe response frame, the probe response frame further includes a reconfiguration multi-link element, where the reconfiguration multi-link element is used for announcing release or disconnection of connections with affiliated APs corresponding to the s links.

In some embodiments, the first information is carried in a TID-to-link mapping request frame. An action field of the TID-to-link mapping request frame includes a TID-to-link mapping element. The first information is the TID-to-link mapping element, the TID-to-link mapping element includes a link mapping field of at least one TID, and a link mapping of TID n field in the link mapping field of the at least one TID indicates a link to which TID *n* is mapped.

In some embodiments, the communication unit 2110 is further configured to send a TID-to-link mapping response frame to the first AP. An action field of the TID-to-link mapping response frame includes a TID-to-link mapping element. The TID-to-link mapping element includes a link mapping field of at least one TID, and a link mapping of TID n field in the link mapping field of the at least one TID indicates a link to which TID *n* is mapped.

In some embodiments, the communication unit 2110 is further configured to receive a beacon frame or a probe response frame sent by the first AP. The beacon frame includes a reconfiguration multi-link element, or the probe response frame includes a reconfiguration multi-link element, where the reconfiguration multi-link element is used for announcing release or disconnection of connections with affiliated APs corresponding to the s links.

In some embodiments, the link information field of the reconfiguration multi-link element includes at least one per-STA profile field, where a link ID field of a per-STA profile field in the at least one per-STA profile field indicates an ID of a link for a reported STA during multi-AP MLD coordination; or a link ID extension field of the per-STA profile field in the at least one per-STA profile field indicates the ID of the link for the reported STA during multi-AP MLD coordination; or the link ID field and the link ID extension field of the per-STA profile field in the at least one per-STA profile field jointly indicate the ID of the link for the reported STA during multi-AP coordination.

In some embodiments, the link ID field occupies the first *Q*₁ bits in the per-STA profile field, and the link ID extension field occupies the last *Q*₂ bits in the per-STA profile field, where *Q*₁ and *Q*₂ each are a positive integer.

In some embodiments, that outage has occurred to the s links is determined by the first AP according to link quality of the s links, or determined by the first AP according to location information or displacement information of the first non-AP MLD. Additionally or alternatively, that outage has occurred to the s links is indicated by second information sent by the first non-AP MLD. Additionally or alternatively, that outage has occurred to the s links is indicated by third information sent by another AP.

In some embodiments, the second information or the third information includes at least one of: IDs of the s links, or MAC addresses of APs corresponding to the s links.

In some embodiments, the second information is carried in an outage frame.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that the non-AP MLD 2100 according to embodiments of the disclosure can correspond to the first non-AP MLD in the method embodiments of the disclosure. The foregoing and other operations and/or functions of various units in the non-AP MLD 2100 are intended to implement corresponding procedures of the first non-AP MLD in the method 700 illustrated in FIG. 44, which are not described herein again for the sake of brevity.

FIG. 59 is a schematic block diagram of an AP 2200 according to embodiments of the disclosure. The AP 2200 is a first AP. As illustrated in FIG. 59, the AP 2200 includes a communication unit 2210. The communication unit 2210 is configured to send a data sharing announce frame to at least one AP, where the first AP and the at least one AP belong to a second virtual AP MLD, multiple APs in the second virtual AP MLD are capable of multi-AP coordinated transmission, the multiple APs are affiliated APs non-collocated in the second virtual AP MLD, and the data sharing announce frame indicates information of a link for transmitting shared data and a non-AP MLD that the shared data belongs to. The communication unit 2210 is further configured to send the shared data on the link indicated by the data sharing announce frame.

In some embodiments, a data sharing announcement field of the data sharing announce frame includes a link ID information field and an MLD MAC address field, where the link information field indicates the information of the link for transmitting the shared data, and the MLD MAC address field indicates a MAC address of the non-AP MLD that the shared data belongs to.

In some embodiments, the communication unit 2210 is further configured to receive an ACK frame fed back by some or all APs in the at least one AP MLD, where the ACK frame indicates that a corresponding AP has successfully received the shared data.

In some embodiments, the first AP shares data of at least one non-AP MLD with the at least one AP over a backhaul link.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 2200 according to embodiments of the disclosure can correspond to the first AP in the method embodiments of the disclosure, and the foregoing and other operations and/or functions of various units in the AP 2200 are intended to implement corresponding procedures of the first AP in the method 800 illustrated in FIG. 45, which are not described herein again for the sake of brevity.

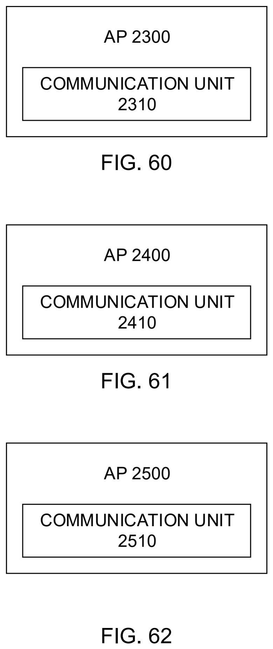

FIG. 60 is a schematic block diagram of an AP 2300 according to embodiments of the disclosure. The AP 2300 is a second AP. As illustrated in FIG. 60, the AP 2300 includes a communication unit 2310. The communication unit 2310 is configured to receive a data sharing announce frame sent by a first AP, where the first AP and the second AP belong to a second virtual AP MLD, multiple APs in the second virtual AP MLD are capable of multi-AP coordinated transmission, the multiple APs are affiliated APs non-collocated in the second virtual AP MLD, and the data sharing announce frame indicates information of a link for transmitting shared data and a non-AP MLD that the shared data belongs to. The communication unit 3210 is further configured to receive the shared data that is sent by the first AP on the link indicated by the data sharing announce frame.

In some embodiments, a data sharing announcement field of the data sharing announce frame includes a link ID information field and an MLD MAC address field, where the link information field indicates the information of the link for transmitting the shared data, and the MLD MAC address field indicates a MAC address of the non-AP MLD that the shared data belongs to.

In some embodiments, the communication unit 3210 is further configured to feed back an ACK frame to the first AP, where the ACK frame indicates that the second AP has successfully received the shared data.

In some embodiments, the first AP shares data of at least one non-AP MLD with the second AP over a backhaul link.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 2300 according to embodiments of the disclosure can correspond to the second AP in the method embodiments of the disclosure, and the foregoing and other operations and/or functions of various units in the AP 2300 are intended to implement corresponding procedures of the second AP in the method 800 illustrated in FIG. 45, which are not further described herein for the sake of brevity.

FIG. 61 is a schematic block diagram of an AP 2400 according to embodiments of the disclosure. The AP 2400 is a first AP. As illustrated in FIG. 61, the AP 2400 includes a communication unit 2410. The communication unit 2410 is configured to send a multi-AP TX trigger frame to at least one AP, where the first AP and the at least one AP belong to a second virtual AP MLD, multiple APs in the second virtual AP MLD are capable of multi-AP coordinated transmission, the multiple APs are affiliated APs non-collocated in the second virtual AP MLD, the at least one AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

In some embodiments, a user information field of the multi-AP TX trigger frame includes an AID field, and a link ID field and/or a link ID extension field, where the AID field indicates an address of an AP participating in multi-AP coordinated transmission for the first non-AP MLD, and the link ID field indicates an ID of a link used by the AP indicated by the AID field, or the link ID extension field indicates the ID of the link used by the AP indicated by the AID field, or the link ID field and the link ID extension field jointly indicate the ID of the link used by the AP indicated by the AID field. Alternatively, a user information field of the multi-AP TX trigger frame includes an AID field and a trigger dependent user information field, where the trigger dependent user information field includes a multi-link field or a basic multi-link field, and the AID field indicates an address of an AP participating in multi-AP coordinated transmission for the first non-AP MLD, where the multi-link field indicates an ID of a link used by the AP indicated by the AID field, or the basic multi-link field indicates the ID of the link used by the AP indicated by the AID field.

In some embodiments, the communication unit 2410 is further configured to send a data frame to the first non-AP MLD according to information indicated by the multi-AP TX trigger frame.

In some embodiments, the communication unit 2410 is further configured to receive an ACK frame sent by the first non-AP MLD, where the ACK frame indicates that the first non-AP MLD has successfully received the data frame sent by the first AP.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 2400 according to embodiments of the disclosure can correspond to the first AP in the method embodiments of the disclosure, and the foregoing and other operations and/or functions of various units in the AP 2400 are intended to implement corresponding procedures of the first AP in the method 900 illustrated in FIG. 46, which are not repeatedly described herein for the sake of brevity.

FIG. 62 illustrates a schematic block diagram of an AP 2500 according to embodiments of the disclosure. The AP 2500 is a second AP. As illustrated in FIG. 62, the AP 2500 includes a communication unit 2510. The communication unit 2510 is configured to receive a multi-AP TX trigger frame sent by a first AP, where the first AP and the second AP belong to a second virtual AP MLD, multiple APs in the second virtual AP MLD are capable of multi-AP coordinated transmission, the multiple APs are affiliated APs non-collocated in the second virtual AP MLD, the second AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

In some embodiments, a user information field of the multi-AP TX trigger frame includes an AID field, and a link ID field and/or a link ID extension field, where the AID field indicates an address of an AP participating in multi-AP coordinated transmission for the first non-AP MLD, and the link ID field indicates an ID of a link used by the AP indicated by the AID field, or the link ID extension field indicates the ID of the link used by the AP indicated by the AID field, or the link ID field and the link ID extension field jointly indicate the ID of the link used by the AP indicated by the AID field. Alternatively, a user information field of the multi-AP TX trigger frame includes an AID field and a trigger dependent user information field, where the trigger dependent user information field includes a multi-link field or a basic multi-link field, and the AID field indicates an address of an AP participating in multi-AP coordinated transmission for the first non-AP MLD, where the multi-link field indicates an ID of a link used by the AP indicated by the AID field, or the basic multi-link field indicates the ID of the link used by the AP indicated by the AID field.

In some embodiments, the communication unit 2510 is further configured to send a data frame to the first non-AP MLD according to information indicated by the multi-AP TX trigger frame.

In some embodiments, the communication unit 2510 is further configured to receive an ACK frame sent by the first non-AP MLD, where the ACK frame indicates that the first non-AP MLD has successfully received the data frame sent by the second AP.

In some embodiments, the second virtual AP MLD has a virtual MLD upper MAC, where the virtual MLD upper MAC is connected to MLD lower MACs of all affiliated APs in the second virtual AP MLD, and the virtual MLD upper MAC manages and controls all the affiliated APs in the second virtual AP MLD.

In some embodiments, the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

In some embodiments, an affiliated AP in the second virtual AP MLD has a non-MLD upper MAC, an MLD lower MAC, and a PHY layer.

In some embodiments, multiple affiliated APs co-located in the second virtual AP MLD share one MLD upper MAC.

In some embodiments, the virtual MLD upper MAC of the second virtual AP MLD manages link assignment for an entire VBSS corresponding to the second virtual AP MLD.

In some embodiments, some of links set up between one non-AP MLD and multiple affiliated APs co-located in the second virtual AP MLD are used only for transmitting control plane information, and the rest of the links set up between the non-AP MLD and the multiple affiliated APs co-located in the second virtual AP MLD are used only for transmitting data plane information; or some or all of links set up between the non-AP MLD and the multiple affiliated APs co-located in the second virtual AP MLD are used for transmitting control plane information and data plane information.

In some embodiments, one affiliated STA of a non-AP MLD is allowed for setting up links with multiple affiliated APs non-collocated in the second virtual AP MLD.

In some embodiments, one affiliated STA of a non-AP MLD transmits the same PPDU on multiple links corresponding to the second virtual AP MLD, or one affiliated STA of the non-AP MLD transmits different PPDUs on the multiple links corresponding to the second virtual AP MLD.

In some embodiments, if the first non-AP MLD is an EHT non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

In some embodiments, the first AP is a master AP.

In some embodiments, the communication unit can be a communication interface or a transceiver, or can be an input/output interface of a communication chip or an SOC. The processing unit can be one or more processors.

It should be understood that, the AP 2500 according to embodiments of the disclosure can correspond to the second AP in the method embodiments of the disclosure, and the foregoing and other operations and/or functions of various units in the AP 2500 are intended to implement corresponding procedures of the second AP in the method 900 illustrated in FIG. 46, which are not described herein again for the sake of brevity.

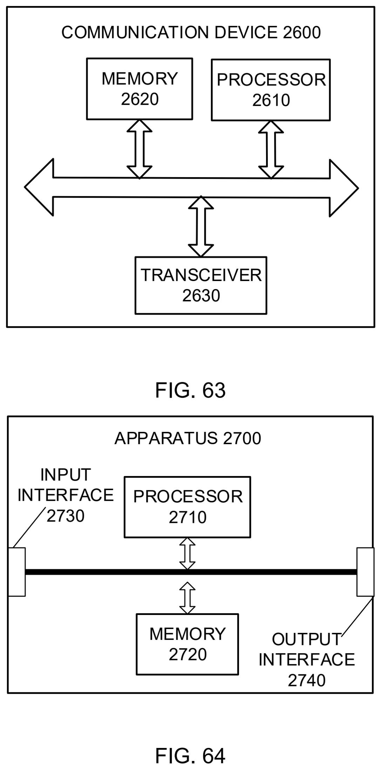

FIG. 63 is a schematic structural diagram of a communication device 2600 provided in embodiments of the disclosure. The communication device 2600 illustrated in FIG. 63 includes a processor 2610. The processor 2610 can invoke and execute computer programs stored in a memory, to implement the method in embodiments of the disclosure.

In some embodiments, as illustrated in FIG. 63, the communication device 2600 can further include a memory 2620. The processor 2610 can invoke and execute computer programs from the memory 2620, so as to implement the method in embodiments of the disclosure.

The memory 2620 can be a separate component independent of the processor 2610, or can be integrated into the processor 2610.

In some embodiments, as illustrated in FIG. 63, the communication device 2600 can further include a transceiver 2630. The processor 2610 can control the transceiver 2630 to communicate with other devices, and specifically, can send information or data to the other devices or receive information or data sent by the other devices.

The transceiver 2630 can include a transmitter and a receiver. The transceiver 2630 can further include an antenna, where one or more antennas can be provided.

In some embodiments, the processor 2610 can implement functions of a processing unit in an AP MLD, or the processor 2610 can implement functions of a processing unit in a non-AP MLD, or the processor 2610 can implement functions of a processing unit in an AP, which are not described herein again for the sake of brevity.

In some embodiments, the transceiver 2630 can implement functions of a communication unit in an AP MLD or an AP, which are not described herein again for the sake of brevity.

In some embodiments, the transceiver 2630 can implement functions of a communication unit in a non-AP MLD, which is not described herein for the sake of brevity.

In some embodiments, the communication device 2600 can specifically be an AP MLD or an AP in embodiments of the disclosure, and the communication device 2600 can implement corresponding procedures implemented by the AP MLD or the AP in various methods in embodiments of the disclosure, which will not be described again herein for the sake of brevity.

In some embodiments, the communication device 2600 can specifically be a non-AP MLD in embodiments of the disclosure, and the communication device 2600 can implement corresponding procedures implemented by the non-AP MLD in various methods in embodiments of the disclosure, which will not be described again herein for the sake of brevity.

FIG. 64 is a schematic structural diagram of an apparatus according to embodiments of the disclosure. The apparatus 2700 illustrated in FIG. 64 includes a processor 2710. The processor 2710 can invoke and execute computer programs from a memory, so as to implement the method in embodiments of the disclosure.

In some embodiments, as illustrated in FIG. 64, the apparatus 2700 can further include a memory 2720. The processor 2710 can invoke and execute computer programs from the memory 2720 to implement the method in embodiments of the disclosure.

The memory 2720 can be a separate component independent of the processor 2710, or can be integrated into the processor 2710.

In some embodiments, the processor 2710 can implement functions of a processing unit in an AP MLD or the AP, or the processor 2710 can implement functions of a processing unit in a non-AP MLD, which are not described herein again for the sake of brevity.

In some embodiments, the apparatus 2700 can further include an input interface 2730. The processor 2710 can control the input interface 2730 to communicate with another device or chip, and specifically, can acquire information or data sent by another device or chip. Optionally, the processor 2710 can be located within a chip or outside the chip.

In some embodiments, the input interface 2730 can implement functions of a communication unit in an AP MLD or AP, or the input interface 2730 can implement functions of a communication unit in a non-AP MLD.

In some embodiments, the apparatus 2700 can further include an output interface 2740. The processor 2710 can control the output interface 2740 to communicate with another device or chip, and specifically, can output information or data to another device or chip. Optionally, the processor 2710 can be located within a chip or outside the chip.

In some embodiments, the output interface 2740 can implement functions of a communication unit in an AP MLD or AP, or the output interface 2740 can implement functions of a communication unit in a non-AP MLD.

In some embodiments, the apparatus can be applied to a non-AP MLD in embodiments of the disclosure, and the apparatus can implement corresponding procedures implemented by the non-AP MLD in various methods in embodiments of the disclosure, which are not described herein again for the sake of brevity.

In some embodiments, the apparatus can be applied to an AP MLD or an AP in embodiments of the disclosure, and the apparatus can implement corresponding procedures implemented by the AP MLD or the AP in various methods in embodiments of the disclosure, which are not described herein again for the sake of brevity.

In some embodiments, the apparatus described in embodiments of the disclosure can also be a chip, for example, an SOC, or the like.

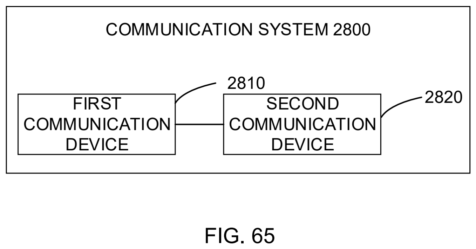

FIG. 65 is a schematic block diagram of a communication system 2800 provided in embodiments of the disclosure. As illustrated in FIG. 65, the communication system 2800 includes a first communication device 2810 and a second communication device 2820.

In some embodiments, the first communication device 2810 can be configured to implement corresponding functions implemented by the first AP MLD in the foregoing method, and the second communication device 2820 can be configured to implement corresponding functions implemented by the first non-AP MLD in the foregoing method, which are not described herein again for the sake of brevity.

In some embodiments, the first communication device 2810 can be configured to implement corresponding functions implemented by the first AP MLD in the foregoing method, and the second communication device 2820 can be configured to implement corresponding functions implemented by the second AP MLD in the foregoing method, which are not described herein again for the sake of brevity.

In some embodiments, the first communication device 2810 can be configured to implement corresponding functions implemented by the first AP in the foregoing method, and the second communication device 2820 can be configured to implement corresponding functions implemented by the first non-AP MLD in the foregoing method, which are not described herein again for the sake of brevity.

In some embodiments, the first communication device 2810 can be configured to implement corresponding functions implemented by the first AP in the foregoing method, and the second communication device 2820 can be configured to implement corresponding functions implemented by the second AP in the foregoing method, which are not described herein again for the sake of brevity.

It should be understood that, the processor in embodiments of the disclosure can be an integrated circuit chip with signal processing capabilities. During implementation, each step of the foregoing method embodiments can be completed by an integrated logic circuit of hardware in the processor or an instruction in the form of software. The processor can be a general-purpose processor, a digital signal processor (DSP), an ASIC, a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor can be a microprocessor, or the processor can be any conventional processor or the like. The steps of the method disclosed in embodiments of the disclosure can be directly implemented by a hardware decoding processor, or can be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the disclosure can be a volatile memory or a non-volatile memory, or can include both the volatile memory and the non-volatile memory. The non-volatile memory can be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in embodiments of the disclosure can also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

In some embodiments, the computer-readable storage medium can be applied to an AP MLD in embodiments of the disclosure, and the computer programs are operable with a computer to implement corresponding procedures implemented by the first AP MLD and/or the second AP MLD in various methods in embodiments of the disclosure, which will not be described again herein for the sake of brevity.

In some embodiments, the computer-readable storage medium can be applied to an AP in embodiments of the disclosure, and the computer programs are operable with a computer to implement corresponding procedures implemented by the first AP and/or the second AP in various methods in embodiments of the disclosure, which are not described herein again for the sake of brevity.

In some embodiments, the computer-readable storage medium can be applied to a non-AP MLD in embodiments of the disclosure, and the computer programs are operable with a computer to implement corresponding procedures implemented by the first non-AP MLD in various methods in embodiments of the disclosure, which will not be described again herein for the sake of brevity.

Embodiments of the disclosure further provide a computer program product. The computer program product includes computer program instructions.

In some embodiments, the computer program product can be applied to an AP MLD in embodiments of the disclosure, and the computer program instructions are operable with a computer to implement corresponding procedures implemented by the AP MLD in various methods in embodiments of the disclosure, which will not be described again herein for the sake of brevity.

In some embodiments, the computer program product can be applied to a non-AP MLD in embodiments of the disclosure, and the computer program instructions are operable with a computer to implement corresponding procedures implemented by the first non-AP MLD in various methods in embodiments of the disclosure, which will not be described again herein for the sake of brevity.

Embodiments of the disclosure further provide a computer program.

In some embodiments, the computer program can be applied to an AP MLD in embodiments of the disclosure. The computer program, when executed by a computer, is operable with the computer to implement corresponding procedures implemented by the AP MLD in various methods in embodiments of the disclosure, which will not be described again herein for the sake of brevity.

In some embodiments, the computer program can be applied to a non-AP MLD in embodiments of the disclosure. The computer program, when executed by a computer, is operable with the computer to implement corresponding procedures implemented by the first non-AP MLD in various methods in embodiments of the disclosure, which will not be described again herein for the sake of brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art can use different methods with regard to each particular application to implement the described functionality, but such methods should not be regarded as lying beyond the scope of the disclosure.

It will be evident to those skilled in the art that, for the sake of convenience and brevity, in terms of the specific working procedures of the foregoing systems, apparatuses, and units, reference can be made to the corresponding procedures in the foregoing method embodiments, which will not be repeated herein.

It will be appreciated that the systems, apparatuses, and methods disclosed in embodiments of the disclosure can also be implemented in various other manners. For example, the above apparatus embodiments are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated may or may not be physically separated. Components displayed as units may or may not be physical units, and can reside at one location or can be distributed to multiple networked units. Some or all of the units can be selectively adopted according to practical needs to achieve desired objectives of the disclosure.

In addition, various functional units described in various embodiments of the disclosure can be integrated into one processing unit or can be present as a number of physically separated units, and two or more units can be integrated into one.

If the functions are implemented as software functional units and sold or used as standalone products, they can be stored in a computer-readable storage medium. Based on such an understanding, the essential technical solution, or the portion that contributes to the related art, or part of the technical solution of the disclosure can be embodied as software products. The computer software products can be stored in a storage medium and can include multiple instructions that, when executed, can cause a computer device, e.g., a personal computer, a server, a network device, etc., to execute some or all operations of the methods described in various embodiments of the disclosure. The above storage medium can include various kinds of media that can store program codes, such as a universal serial bus (USB) flash disk, a mobile hard drive, a ROM, a RAM, a magnetic disk, or an optical disk.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
sending or receiving, by a first access point multi-link device (AP MLD), a multi-AP MLD sounding announce frame, wherein
the multi-AP MLD sounding announce frame indicates at least one of: a sequence in which a plurality of AP MLDs perform channel sounding, a time at which the plurality of AP MLDs perform channel sounding, information of links used for the plurality of AP MLDs to perform channel sounding, information of a frequency band used for the plurality of AP MLDs to perform channel sounding, or information of a channel corresponding to the links and/or the frequency band used for the plurality of AP MLDs to perform channel sounding; and wherein
the first AP MLD belongs to a first virtual AP MLD, and a plurality of AP MLDs in the first virtual AP MLD are capable of multi-AP MLD coordinated transmission.

2. The method of claim 1, wherein a multi-AP MLD sounding announce field of the multi-AP MLD sounding announce frame comprises at least one of: a virtual basic service set identifier (VBSSID) field, a candidate set ID field, a sounding method field, or a sounding configuration field, wherein
the VBSSID field indicates a VBSSID of the first virtual AP MLD, the candidate set ID field indicates an ID of a multi-AP MLD candidate set corresponding to the first virtual AP MLD, the sounding method field indicates a method for performing channel sounding by the plurality of AP MLDs, and the sounding configuration field indicates configuration information for performing channel sounding by the plurality of AP MLDs.

3. The method of claim 2, wherein the sounding method field comprises at least one of: a sequential or joint field, or an explicit or implicit field, wherein
when the sequential or joint field has a first value, the sequential or joint field indicates that the plurality of AP MLDs are to perform channel sounding in sequence, and when the sequential or joint field has a second value, the sequential or joint field indicates that the plurality of AP MLDs are to perform channel sounding synchronously at the same time;
when the explicit or implicit field has a first value, the explicit or implicit field indicates that the plurality of AP MLDs are to perform explicit channel sounding, and when the explicit or implicit field has a second value, the explicit or implicit field indicates that the plurality of AP MLDs are to perform implicit channel sounding.

4. The method of claim 3, wherein
when the sequential or joint field indicates that the plurality of AP MLDs are to perform channel sounding in sequence, times at which the plurality of AP MLDs perform channel sounding and/or a sequence in which the plurality of AP MLDs perform channel sounding is indicated by the sounding configuration field; or
when the sequential or joint field indicates that the plurality of AP MLDs are to perform channel sounding synchronously at the same time, a time at which the plurality of AP MLDs perform channel sounding is indicated by the sounding configuration field.

5. The method of claim 2, wherein the sounding configuration field comprises at least one of: AP MLD number field or a plurality of AP MLD sounding configuration fields, wherein
the AP MLD number field indicates the number of AP MLDs participating in multi-AP MLD channel sounding, and an *m*^{th} AP MLD sounding configuration field in the plurality of AP MLD sounding configuration fields indicates configuration information for an *m*^{th} AP MLD participating in multi-AP MLD channel sounding.

6. The method of claim 5, wherein
when the plurality of AP MLDs are to perform channel sounding in sequence, an order of an AP MLD sounding configuration field in the plurality of AP MLD sounding configuration fields indicates an order in which a corresponding AP MLD performs multi-AP MLD channel sounding.

7. The method of claim 5 or 6, wherein an AP MLD sounding configuration field in the plurality of AP MLD sounding configuration fields comprises at least one of: a BSSID field, an AP MLD ID field, a start time field, or a basic multi-link element, wherein
the BSSID field indicates a BSSID of an AP MLD corresponding to a current AP MLD sounding configuration field, the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the basic multi-link element indicates information of a link used for the AP MLD corresponding to the current AP MLD sounding configuration field to perform multi-AP MLD channel sounding.

8. The method of claim 5 or 6, wherein an AP MLD sounding configuration field in the plurality of AP MLD sounding configuration fields comprises at least one of: a BSSID field, an AP MLD ID field, a start time field, or a link ID information field, wherein
the BSSID field indicates a BSSID of an AP MLD corresponding to a current AP MLD sounding configuration field, the AP MLD ID field indicates an ID of the AP MLD corresponding to the current AP MLD sounding configuration field, the start time field indicates a start time at which the AP MLD corresponding to the current AP MLD sounding configuration field performs multi-AP MLD channel sounding, the link ID information field indicates information of a link used for the AP MLD corresponding to the current AP MLD sounding configuration field to perform multi-AP MLD channel sounding.

9. The method of claim 8, wherein the link ID information field comprises a link ID field and/or a link ID extension field, wherein
when the link ID information field comprises only the link ID field, the link ID field indicates the ID of the link used for the AP MLD corresponding to the current AP MLD sounding configuration field to perform multi-AP MLD channel sounding; or
when the link ID information field comprises only the link ID extension field, the link ID extension field indicates the ID of the link used for the AP MLD corresponding to the current AP MLD sounding configuration field to perform multi-AP MLD channel sounding; or
when the link ID information field comprises both the link ID field and the link ID extension field, the link ID field and the link ID extension field jointly indicate the ID of the link used for the AP MLD corresponding to the current AP MLD sounding configuration field to perform multi-AP MLD channel sounding.

10. The method of any of claims 1 to 9, wherein when the plurality of AP MLDs comprise the first AP MLD and the plurality of AP MLDs perform explicit channel sounding, the method further comprises:
sending, by the first AP MLD, a null data physical layer protocol data unit (PPDU) announcement (null data PPDU announcement, NDPA) frame to a first non-AP MLD according to information indicated by the multi-AP MLD sounding announce frame, wherein the NDPA frame indicates a parameter and configuration information of an NDP frame to be sent, and the first non-AP MLD is a non-AP MLD associated with the first AP MLD in all non-AP MLDs participating in multi-AP MLD channel sounding; and
sending, by the first AP MLD, an NDP frame to the first non-AP MLD on a channel for sending the NDPA frame, wherein a time interval between the NDP frame and the NDPA frame is not less than one short interframe space (SIFS).

11. The method of claim 10, wherein
the NDPA frame comprises a non-AP MLD information list field, and the non-AP MLD information list field comprises a link ID field and/or a link ID extension field, wherein
when the non-AP MLD information list field comprises only the link ID field, the link ID field indicates an ID of a link used for the first AP MLD to perform multi-AP MLD channel sounding; or
when the non-AP MLD information list field comprises only the link ID extension field, the link ID extension field indicates the ID of the link used for the first AP MLD to perform multi-AP MLD channel sounding; or
when the non-AP MLD information list field comprises both the link ID field and the link ID extension field, the link ID field and the link ID extension field jointly indicate the ID of the link used for the first AP MLD to perform multi-AP MLD channel sounding.

12. The method of claim 10 or 11, wherein when the first AP MLD sends the multi-AP MLD sounding announce frame and the first AP MLD covers all the non-AP MLDs participating in multi-AP MLD channel sounding, the method further comprises:
sending, by the first AP MLD, a beamforming report poll (BFRP) trigger frame to all the non-AP MLDs participating in multi-AP MLD channel sounding on the channel for sending the NDPA frame, wherein the BFRP trigger frame is used for triggering or requesting all the non-AP MLDs participating in multi-AP MLD channel sounding to feed back channel sounding results to AP MLDs associated with the non-AP MLDs; and
receiving, by the first AP MLD, an NDP feedback frame sent by the first non-AP MLD, wherein the NDP feedback frame contains a channel sounding result for the first AP MLD.

13. The method of claim 10 or 11, wherein when the first AP MLD sends the multi-AP MLD sounding announce frame but the first AP MLD is unable to cover all the non-AP MLDs participating in multi-AP MLD channel sounding, the method further comprises:
sending, by the first AP MLD, a BFRP trigger frame to the first non-AP MLD on the channel for sending the NDPA frame, wherein the BFRP trigger frame is used for triggering or requesting the first non-AP MLD to feed back a channel sounding result; and
receiving, by the first AP MLD, an NDP feedback frame sent by the first non-AP MLD, wherein the NDP feedback frame contains a channel sounding result for the first AP MLD.

14. The method of claim 12 or 13, wherein a user information field of the BFRP trigger frame comprises a link ID field and/or a link ID extension field, wherein
when the user information field of the BFRP trigger frame comprises only the link ID field, the link ID field indicates an ID of a link used for the first AP MLD to perform multi-AP MLD channel sounding; or
when the user information field of the BFRP trigger frame comprises only the link ID extension field, the link ID extension field indicates the ID of the link used for the first AP MLD to perform multi-AP MLD channel sounding; or
when the user information field of the BFRP trigger frame comprises both the link ID field and the link ID extension field, the link ID field and the link ID extension field jointly indicate the ID of the link used for the first AP MLD to perform multi-AP MLD channel sounding.

15. The method of claim 12 or 13, wherein
the NDP feedback frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP feedback frame corresponds to; or
the NDP feedback frame comprises a multi-link element or a basic multi-link element, wherein
a link ID information field of the multi-link element indicates the ID of the link that the channel sounding result carried in the NDP feedback frame corresponds to; or a link ID information field of the basic multi-link element indicates the ID of the link that the channel sounding result carried in the NDP feedback frame corresponds to.

16. The method of any of claims 10 to 15, wherein
when the plurality of AP MLDs perform channel sounding in sequence, the plurality of AP MLDs send NDPA frames and/or NDP frames in a sequence indicated by the multi-AP MLD sounding announce frame; or
when the plurality of AP MLDs perform channel sounding synchronously at the same time, the plurality of AP MLDs send the NDPA frames and/or the NDP frames synchronously at a start time indicated by the multi-AP MLD sounding announce frame.

17. The method of any of claims 1 to 9, wherein when the plurality of AP MLDs comprise the first AP MLD and the plurality of AP MLDs perform implicit channel sounding, the method further includes:
sending, by the first AP MLD, a sounding trigger frame to a first non-AP MLD according to information indicated by the multi-AP MLD sounding announce frame, wherein the sounding trigger frame is used for triggering or requesting the first non-AP MLD to feed back a sounding result, and the first non-AP MLD is a non-AP MLD associated with the first AP MLD in all non-AP MLDs participating in multi-AP MLD channel sounding; and
receiving, by the first AP MLD, an NDP frame sent by the first non-AP MLD, wherein the NDP frame contains a channel sounding result for the first AP MLD.

18. The method of claim 17, wherein a user information field of the sounding trigger frame comprises a link ID field and a link ID extension field, and the link ID field and the link ID extension field jointly indicate an ID of a link used for the first AP MLD to perform multi-AP MLD channel sounding.

19. The method of claim 17, wherein
the NDP frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP frame corresponds to; or the NDP frame comprises a multi-link element or a basic multi-link element, wherein
a link ID information field of the multi-link element indicates the ID of the link that the channel sounding result carried in the NDP frame corresponds to, or a link ID information field of the basic multi-link element indicates the ID of the link that the channel sounding result carried in the NDP frame corresponds to.

20. The method of any of claims 17 to 19, wherein
when the plurality of AP MLDs perform channel sounding in sequence, the plurality of AP MLDs trigger, in a sequence indicated by the multi-AP MLD sounding announce frame, all the non-AP MLDs participating in multi-AP MLD channel sounding to send the NDP frames; or
when the plurality of AP MLDs perform channel sounding synchronously at the same time, the plurality of AP MLDs trigger, according to a start time indicated by the multi-AP MLD sounding announce frame, all the non-AP MLDs participating in multi-AP MLD channel sounding to send the NDP frames synchronously at the same time.

21. The method of any of claims 1 to 20, wherein the first AP MLD and one or more AP MLDs form the first virtual AP MLD.

22. The method of claim 21, wherein the first virtual AP MLD has a virtual MLD medium access control (MAC), wherein
the virtual MLD MAC is connected to MLD upper MACs of all AP MLDs in the first virtual AP MLD, and the virtual MLD MAC manages and controls all the AP MLDs in the first virtual AP MLD.

23. The method of claim 22, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

24. The method of any of claims 21 to 23, wherein an AP MLD in the first virtual AP MLD has an MLD upper MAC, a non-MLD upper MAC, an MLD lower MAC, and a physical (PHY) layer.

25. The method of any of claims 21 to 24, wherein the virtual MLD MAC of the first virtual AP MLD manages link assignment for an entire VBSS corresponding to the first virtual AP MLD.

26. The method of any of claims 21 to 25, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

27. The method of any of claims 21 to 26, wherein one affiliated station (STA) of a non-AP MLD is allowed for setting up links with affiliated APs of a plurality of AP MLDs in the first virtual AP MLD.

28. The method of any of claims 21 to 27, wherein one affiliated STA of a non-AP MLD transmits the same PPDU on a plurality of links corresponding to the first virtual AP MLD, or one affiliated STA of the non-AP MLD transmits different PPDUs on a plurality of links corresponding to the first virtual AP MLD.

29. The method of any of claims 21 to 26, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

30. The method of any of claims 1 to 29, wherein the first AP MLD is a master AP MLD.

31. A wireless communication method, comprising:
receiving, by a first non-access point multi-link device (non-AP MLD), a first frame sent by a first AP MLD, wherein
the first frame is sent by the first AP MLD according to information indicated by a multi-AP MLD sounding announce frame, the first non-AP MLD is a non-AP MLD associated with the first AP MLD in all non-AP MLDs that participate in the multi-AP MLD channel sounding, the first AP MLD belongs to a first virtual AP MLD, a plurality of AP MLDs in the first virtual AP MLD are capable of multi-AP MLD coordinated transmission, and the first frame is a null data physical layer protocol data unit announcement (null data PPDU announcement, NDPA) frame or a sounding trigger frame, wherein
the multi-AP MLD sounding announce frame indicates at least one of: a sequence in which a plurality of AP MLDs perform channel sounding, a time at which the plurality of AP MLDs perform channel sounding, information of links used for the plurality of AP MLDs to perform channel sounding, information of a frequency band used for the plurality of AP MLDs to perform channel sounding, or information of a channel corresponding to the links and/or the frequency band used for the plurality of AP MLDs to perform channel sounding; and
when the first frame is an NDPA frame, the NDPA frame indicates a parameter and configuration information of an NDP frame to be sent;
when the first frame is a sounding trigger frame, the sounding trigger frame is used for triggering or requesting the first non-AP MLD to feed back a sounding result.

32. The method of claim 31, wherein a multi-AP MLD sounding announce field of the multi-AP MLD sounding announce frame comprises at least one of: a virtual basic service set identifier (VBSSID) field, a candidate set ID field, a sounding method field, or a sounding configuration field, wherein
the VBSSID field indicates a VBSSID of the first virtual AP MLD, the candidate set ID field indicates an ID of a multi-AP MLD candidate set corresponding to the first virtual AP MLD, the sounding method field indicates a method for performing channel sounding by the plurality of AP MLDs, and the sounding configuration field indicates configuration information for performing channel sounding by the plurality of AP MLDs.

33. The method of claim 32, wherein the sounding method field comprises at least one of: a sequential or joint field, or an explicit or implicit field, wherein
when the sequential or joint field has a first value, the sequential or joint field indicates that the plurality of AP MLDs are to perform channel sounding in sequence, and when the sequential or joint field has a second value, the sequential or joint field indicates that the plurality of AP MLDs are to perform channel sounding synchronously at the same time;
when the explicit or implicit field has a first value, the explicit or implicit field indicates that the plurality of AP MLDs are to perform explicit channel sounding, and when the explicit or implicit field has a second value, the explicit or implicit field indicates that the plurality of AP MLDs are to perform implicit channel sounding.

34. The method of claim 33, wherein
when the sequential or joint field indicates that the plurality of AP MLDs are to perform channel sounding in sequence, times at which the plurality of AP MLDs perform channel sounding and/or a sequence in which the plurality of AP MLDs perform channel sounding is indicated by the sounding configuration field; or
when the sequential or joint field indicates that the plurality of AP MLDs are to perform channel sounding synchronously at the same time, a time at which the plurality of AP MLDs perform channel sounding is indicated by the sounding configuration field.

35. The method of claim 32, wherein the sounding configuration field comprises at least one of: AP MLD number field or a plurality of AP-MLD sounding configuration fields, wherein
the AP MLD number field indicates the number of AP MLDs participating in multi-AP MLD channel sounding, and an *m*^{th} AP-MLD sounding configuration field in the plurality of AP-MLD sounding configuration fields indicates configuration information for an *m*^{th} AP MLD participating in multi-AP MLD channel sounding.

36. The method of claim 35, wherein
when the plurality of AP MLDs are to perform channel sounding in sequence, an order of an AP-MLD sounding configuration field in the plurality of AP-MLD sounding configuration fields indicates an order in which a corresponding AP MLD performs multi-AP MLD channel sounding.

37. The method of claim 35 or 36, wherein an AP-MLD sounding configuration field in the plurality of AP-MLD sounding configuration fields comprises at least one of: a BSSID field, an AP MLD ID field, a start time field, or a basic multi-link element, wherein
the BSSID field indicates a BSSID of an AP MLD corresponding to a current AP-MLD sounding configuration field, the AP MLD ID field indicates an ID of the AP MLD corresponding to the current AP-MLD sounding configuration field, the start time field indicates a start time at which the AP MLD corresponding to the current AP-MLD sounding configuration field performs multi-AP MLD channel sounding, the basic multi-link element indicates information of a link used for the AP MLD corresponding to the current AP-MLD sounding configuration field to perform multi-AP MLD channel sounding.

38. The method of claim 35 or 36, wherein an AP-MLD sounding configuration field in the plurality of AP-MLD sounding configuration fields comprises at least one of: a BSSID field, an AP MLD ID field, a start time field, or a link ID information field, wherein
the BSSID field indicates a BSSID of an AP MLD corresponding to a current AP-MLD sounding configuration field, the AP MLD ID field indicates an ID of the AP MLD corresponding to the current AP-MLD sounding configuration field, the start time field indicates a start time at which the AP MLD corresponding to the current AP-MLD sounding configuration field performs multi-AP MLD channel sounding, the link ID information field indicates information of a link used for the AP MLD corresponding to the current AP-MLD sounding configuration field to perform multi-AP MLD channel sounding.

39. The method of claim 38, wherein the link ID information field comprises a link ID field and/or a link ID extension field, wherein
when the link ID information field comprises only the link ID field, the link ID field indicates the ID of the link used for the AP MLD corresponding to the current AP-MLD sounding configuration field to perform multi-AP MLD channel sounding; or
when the link ID information field comprises only the link ID extension field, the link ID extension field indicates the ID of the link used for the AP MLD corresponding to the current AP-MLD sounding configuration field to perform multi-AP MLD channel sounding; or
when the link ID information field comprises both the link ID field and the link ID extension field, the link ID field and the link ID extension field jointly indicate the ID of the link used for the AP MLD corresponding to the current AP-MLD sounding configuration field to perform multi-AP MLD channel sounding.

40. The method of any of claims 31 to 39, wherein when the first frame is an NDPA frame and the plurality of AP MLDs perform explicit channel sounding, the method further comprises:
receiving, by the first non-AP MLD, an NDP frame that is sent by the first AP MLD on a channel for sending the NDPA frame, wherein a time interval between the NDP frame and the NDPA frame is not less than one short interframe space (SIFS).

41. The method of claim 40, wherein
the NDPA frame comprises a non-AP MLD information list field, and the non-AP MLD information list field comprises a link ID field and/or a link ID extension field, wherein
when the non-AP MLD information list field comprises only the link ID field, the link ID field indicates an ID of a link used for the first AP MLD to perform multi-AP MLD channel sounding; or
when the non-AP MLD information list field comprises only the link ID extension field, the link ID extension field indicates the ID of the link used for the first AP MLD to perform multi-AP MLD channel sounding; or
when the non-AP MLD information list field comprises both the link ID field and the link ID extension field, the link ID field and the link ID extension field jointly indicate the ID of the link used for the first AP MLD to perform multi-AP MLD channel sounding.

42. The method of claim 40 or 41, wherein when the first AP MLD sends the multi-AP MLD sounding announce frame and the first AP MLD covers all the non-AP MLDs participating in multi-AP MLD channel sounding, the method further comprises:
receiving, by the first non-AP MLD, a beam forming report poll (BFRP) trigger frame that is sent by the first AP MLD on the channel for sending the NDPA frame, wherein the BFRP trigger frame is used for triggering or requesting all the non-AP MLDs participating in multi-AP MLD channel sounding to feed back channel sounding results to AP MLDs associated with the non-AP MLDs; and
sending, by first non-AP MLD, an NDP feedback frame to the first AP MLD, wherein the NDP feedback frame contains a channel sounding result for the first AP MLD.

43. The method of claim 40 or 41, wherein when the first AP MLD sends the multi-AP MLD sounding announce frame and the first AP MLD is unable to cover all the non-AP MLDs participating in multi-AP MLD channel sounding, the method further comprises:
receiving, by the first non-AP MLD, a BFRP trigger frame sent by the first AP MLD on the channel for sending the NDPA frame, wherein the BFRP trigger frame is used for triggering or requesting the first non-AP MLD to feed back a channel sounding result; and
sending, by the first non-AP MLD, an NDP feedback frame to the first AP MLD, wherein the NDP feedback frame contains a channel sounding result for the first AP MLD.

44. The method of claim 42 or 43, wherein a user information field of the BFRP trigger frame comprises a link ID field and/or a link ID extension field, wherein
when the user information field of the BFRP trigger frame comprises only the link ID field, the link ID field indicates an ID of a link used for the first AP MLD to perform multi-AP MLD channel sounding; or
when the user information field of the BFRP trigger frame comprises only the link ID extension field, the link ID extension field indicates the ID of the link used for the first AP MLD to perform multi-AP MLD channel sounding; or
when the user information field of the BFRP trigger frame comprises both the link ID field and the link ID extension field, the link ID field and the link ID extension field jointly indicate the ID of the link used for the first AP MLD to perform multi-AP MLD channel sounding.

45. The method of claim 42 or 43, wherein
the NDP feedback frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP feedback frame corresponds to; or
the NDP feedback frame comprises a multi-link element or a basic multi-link element, wherein
a link ID information field of the multi-link element indicates the ID of the link that the channel sounding result carried in the NDP feedback frame corresponds to; or a link ID information field of the basic multi-link element indicates the ID of the link that the channel sounding result carried in the NDP feedback frame corresponds to.

46. The method of any of claims 40 to 45,
when the plurality of AP MLDs perform channel sounding in sequence, the plurality of AP MLDs send NDPA frames and/or NDP frames in a sequence indicated by the multi-AP MLD sounding announce frame; or
when the plurality of AP MLDs perform channel sounding synchronously at the same time, the plurality of AP MLDs send the NDPA frames and/or the NDP frames synchronously at a start time indicated by the multi-AP MLD sounding announce frame.

47. The method of any of claims 31 to 39, wherein when the first frame is a sounding trigger frame and the plurality of AP MLDs perform implicit channel sounding, the method further comprises:
sending, by the first non-AP MLD, an NDP frame to the first AP MLD, wherein the NDP frame contains a channel sounding result for the first AP MLD.

48. The method of claim 47, wherein a user information field of the sounding trigger frame comprises a link ID field and a link ID extension field, and the link ID field and the link ID extension field jointly indicate an ID of a link used for the first AP MLD to perform multi-AP MLD channel sounding.

49. The method of claim 47, wherein
the NDP frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP frame corresponds to; or the NDP frame comprises a multi-link element or a basic multi-link element, wherein
a link ID information field of the multi-link element indicates the ID of the link that the channel sounding result carried in the NDP frame corresponds to, or a link ID information field of the basic multi-link element indicates the ID of the link that the channel sounding result carried in the NDP frame corresponds to.

50. The method of any of claims 47 to 49, wherein
when the plurality of AP MLDs perform channel sounding in sequence, the plurality of AP MLDs trigger, in a sequence indicated by the multi-AP MLD sounding announce frame, all the non-AP MLDs participating in multi-AP MLD channel sounding to send the NDP frames; or
when the plurality of AP MLDs perform channel sounding synchronously at the same time, the plurality of AP MLDs trigger, according to a start time indicated by the multi-AP MLD sounding announce frame, all the non-AP MLDs participating in multi-AP MLD channel sounding to send the NDP frames synchronously at the same time.

51. The method of any of claims 31 to 50, wherein the first AP MLD and one or more AP MLDs form the first virtual AP MLD.

52. The method of claim 51, wherein the first virtual AP MLD has a virtual MLD medium access control (MAC), wherein
the virtual MLD MAC is connected to MLD upper MACs of all AP MLDs in the first virtual AP MLD, and the virtual MLD MAC manages and controls all the AP MLDs in the first virtual AP MLD.

53. The method of claim 52, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

54. The method of any of claims 51 to 53, wherein an AP MLD in the first virtual AP MLD has an MLD upper MAC, a non-MLD upper MAC, an MLD lower MAC, and a physical (PHY) layer.

55. The method of any of claims 51 to 54, wherein the virtual MLD MAC of the first virtual AP MLD manages link assignment for an entire VBSS corresponding to the first virtual AP MLD.

56. The method of any of claims 51 to 55, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

57. The method of any of claims 51 to 56, wherein one affiliated station (STA) of a non-AP MLD is allowed for setting up links with affiliated APs of a plurality of AP MLDs in the first virtual AP MLD.

58. The method of any of claims 51 to 57, wherein one affiliated STA of a non-AP MLD transmits the same PPDU on a plurality of links corresponding to the first virtual AP MLD, or one affiliated STA of the non-AP MLD transmits different PPDUs on a plurality of links corresponding to the first virtual AP MLD.

59. The method of any of claims 51 to 56, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

60. The method of any of claims 31 to 59, wherein the first AP MLD is a master AP MLD.

61. A wireless communication method, comprising:
sending, by a first access point multi-link device (AP MLD), first information to a first non-AP MLD, wherein
the first AP MLD belongs to a first virtual AP MLD, a plurality of AP MLDs in the first virtual AP MLD are capable of multi-AP MLD coordinated transmission, and the first information is used for requesting or indicating the first non-AP MLD to re-map data on s links to *w* links, wherein s and *w* each are a positive integer.

62. The method of claim 61, wherein the s links are links that correspond to the first non-AP MLD and have outages, and the *w* links are links that correspond to the first non-AP MLD and do not have outages.

63. The method of claim 61 or 62, wherein
the *w* links are links set up between the first non-AP MLD and the first AP MLD, and the s links are links set up between the first non-AP MLD and a second AP MLD in the first virtual AP MLD; or
the s links are links set up between the first non-AP MLD and the first AP MLD, and the *w* links are links set up between the first non-AP MLD and the second AP MLD in the first virtual AP MLD.

64. The method of any of claims 61 to 63, wherein the first information is a traffic identifier (TID)-to-link mapping element, wherein
the TID-to-link mapping element comprises a link mapping field of at least one TID, and a link mapping of TID *n* field in the link mapping field of the at least one TID indicates a link to which TID *n* is mapped, wherein *n* is a non-negative integer.

65. The method of claim 64, wherein a link mapping field of a TID in the link mapping field of the at least one TID occupies k bytes, wherein k is a positive integer and *k>2.*

66. The method of claim 65, wherein *k*=32.

67. The method of any of claims 61 to 66, wherein the first information is carried in a beacon frame or a probe response frame.

68. The method of claim 67, wherein
when the first information is carried in a beacon frame, the beacon frame further comprises a reconfiguration multi-link element; or
when the first information is carried in a probe response frame, the probe response frame further comprises a reconfiguration multi-link element, wherein
the reconfiguration multi-link element is used for announcing release or disconnection of connections with affiliated APs corresponding to the s links.

69. The method of any of claims 61 to 66, wherein the first information is carried in a TID-to-link mapping request frame, wherein
an action field of the TID-to-link mapping request frame comprises a TID-to-link mapping element, wherein
the first information is the TID-to-link mapping element, the TID-to-link mapping element comprises a link mapping field of at least one TID, and a link mapping of TID *n* field in the link mapping field of the at least one TID indicates a link to which TID *n* is mapped.

70. The method of claim 69, further comprising:
receiving, by the first AP MLD, a TID-to-link mapping response frame sent by the first non-AP MLD, wherein
an action field of the TID-to-link mapping response frame comprises a TID-to-link mapping element, wherein
the TID-to-link mapping element comprises a link mapping field of at least one TID, and a link mapping of TID *n* field in the link mapping field of the at least one TID indicates a link to which TID *n* is mapped.

71. The method of claim 69 or 70, further comprising:
sending, by the first AP MLD, a beacon frame or a probe response frame to the first non-AP MLD, wherein
the beacon frame comprises a reconfiguration multi-link element, or the probe response frame comprises a reconfiguration multi-link element, wherein
the reconfiguration multi-link element is used for announcing release or disconnection of connections with affiliated APs corresponding to the s links.

72. The method of claim 68 or 71, wherein a link information field of the reconfiguration multi-link element comprises at least one per-station (STA) profile field, wherein
a link ID field of a per-STA profile field in the at least one per-STA profile field indicates an ID of a link for a reported STA during multi-AP MLD coordination; or
a link ID extension field of the per-STA profile field in the at least one per-STA profile field indicates the ID of the link for the reported STA during multi-AP MLD coordination; or
the link ID field and the link ID extension field of the per-STA profile field in the at least one per-STA profile field jointly indicate the ID of the link for the reported STA during multi-AP MLD coordination.

73. The method of claim 72, wherein the link ID field occupies the first *Q*₁ bits in the per-STA profile field, and the link ID extension field occupies the last *Q*₂ bits in the per-STA profile field, wherein *Q*₁ and *Q*₂ each are a positive integer.

74. The method of any of claims 61 to 73, further comprising:
determining, by the first AP MLD according to link quality of the *s* links, that outage has occurred to the s links, or determining, by the first AP MLD according to location information or displacement information of the first non-AP MLD, that outage has occurred to the s links; and/or
receiving, by the first AP MLD, second information sent by the first non-AP MLD, wherein the second information indicates that outage has occurred to the *s* links; and/or
receiving, by the first AP MLD, third information sent by another AP MLD, wherein the third information indicates that outage has occurred to the s links.

75. The method of claim 74, wherein the second information or the third information comprises at least one of: IDs of the s links, medium access control (MAC) addresses of AP MLDs corresponding to the s links, or MAC addresses of APs corresponding to the s links.

76. The method of claim 74 or 75, wherein the second information is carried in an outage frame.

77. The method of any of claims 61 to 76, wherein the first AP MLD and one or more AP MLDs form the first virtual AP MLD.

78. The method of claim 77, wherein the first virtual AP MLD has a virtual MLD MAC, wherein
the virtual MLD MAC is connected to MLD upper MACs of all AP MLDs in the first virtual AP MLD, and the virtual MLD MAC manages and controls all the AP MLDs in the first virtual AP MLD.

79. The method of claim 78, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

80. The method of any of claims 77 to 79, wherein an AP MLD in the first virtual AP MLD has an MLD upper MAC, a non-MLD upper MAC, an MLD lower MAC, and a physical (PHY) layer.

81. The method of any of claims 77 to 80, wherein the virtual MLD MAC of the first virtual AP MLD manages link assignment for an entire virtual basic service set (VBSS) corresponding to the first virtual AP MLD.

82. The method of any of claims 77 to 81, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

83. The method of any of claims 77 to 82, wherein one affiliated STA of a non-AP MLD is allowed for setting up links with affiliated APs of a plurality of AP MLDs in the first virtual AP MLD.

84. The method of any of claims 77 to 83, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

85. The method of any of claims 77 to 82, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

86. The method of any of claims 61 to 85, wherein the first AP MLD is a master AP MLD.

87. A wireless communication method, comprising:
receiving, by a first non-access point multi-link device non-AP MLD, first information sent by a first AP MLD, wherein
the first AP MLD belongs to a first virtual AP MLD, a plurality of AP MLDs in the first virtual AP MLD are capable of multi-AP MLD coordinated transmission, and the first information is used for requesting or indicating the first non-AP MLD to re-map data on s links to *w* links, wherein *s* and *w* each are a positive integer.

88. The method of claim 87, wherein the s links are links that correspond to the first non-AP MLD and have outages, and the *w* links are links that correspond to the first non-AP MLD and do not have outages.

89. The method of claim 87 or 88, wherein
the *w* links are links set up between the first non-AP MLD and the first AP MLD, and the s links are links set up between the first non-AP MLD and a second AP MLD in the first virtual AP MLD; or
the s links are links set up between the first non-AP MLD and the first AP MLD, and the *w* links are links set up between the first non-AP MLD and the second AP MLD in the first virtual AP MLD.

90. The method of any of claims 87 to 89, wherein the first information is a traffic identifier (TID)-to-link mapping element, wherein
the TID-to-link mapping element comprises a link mapping field of at least one TID, and a link mapping of TID *n* field in the link mapping field of the at least one TID indicates a link to which TID *n* is mapped, wherein *n* is a non-negative integer.

91. The method of claim 90, wherein a link mapping field of a TID in the link mapping field of the at least one TID occupies *k* bytes, wherein *k* is a positive integer and *k>2.*

92. The method of claim 91, wherein k=32.

93. The method of any of claims 87 to 92, wherein the first information is carried in a beacon frame or a probe response frame.

94. The method of claim 93, wherein
when the first information is carried in a beacon frame, the beacon frame further comprises a reconfiguration multi-link element; or
when the first information is carried in a probe response frame, the probe response frame further comprises a reconfiguration multi-link element, wherein
the reconfiguration multi-link element is used for announcing release or disconnection of connections with affiliated APs corresponding to the s links.

95. The method of any of claims 87 to 92, wherein the first information is carried in a TID-to-link mapping request frame, wherein
an action field of the TID-to-link mapping request frame comprises a TID-to-link mapping element, wherein
the first information is the TID-to-link mapping element, the TID-to-link mapping element comprises a link mapping field of at least one TID, and a link mapping of TID *n* field in the link mapping field of the at least one TID indicates a link to which TID *n* is mapped.

96. The method of claim 95, further comprising:
sending, by the first non-AP MLD, a TID-to-link mapping response frame to the first AP MLD, wherein
an action field of the TID-to-link mapping response frame comprises a TID-to-link mapping element, wherein
the TID-to-link mapping element comprises a link mapping field of at least one TID, and a link mapping of TID n field in the link mapping field of the at least one TID indicates a link to which TID *n* is mapped.

97. The method of claim 95 or 96, further comprising:
receiving, by the first non-AP MLD, a beacon frame or a probe response frame sent by the first AP MLD, wherein
the beacon frame comprises a reconfiguration multi-link element, or the probe response frame comprises a reconfiguration multi-link element, wherein
the reconfiguration multi-link element is used for announcing release or disconnection of connections with affiliated APs corresponding to the s links.

98. The method of claim 94 or 97, wherein a link information field of the reconfiguration multi-link element comprises at least one per-station (STA) profile field, wherein
a link ID field of a per-STA profile field in the at least one per-STA profile field indicates an ID of a link for a reported STA during multi-AP MLD coordination; or
a link ID extension field of the per-STA profile field in the at least one per-STA profile field indicates the ID of the link for the reported STA during multi-AP MLD coordination; or
the link ID field and the link ID extension field of the per-STA profile field in the at least one per-STA profile field jointly indicate the ID of the link for the reported STA during multi-AP MLD coordination.

99. The method of claim 98, wherein the link ID field occupies the first *Q*₁ bits in the per-STA profile field, and the link ID extension field occupies the last *Q*₂ bits in the per-STA profile field, wherein *Q*₁ and *Q*₂ each are a positive integer.

100. The method of any of claims 87 to 99, wherein
that outage has occurred to the s links is determined by the first AP MLD according to link quality of the *s* links, or determined by the first AP MLD according to location information or displacement information of the first non-AP MLD; and/or
that outage has occurred to the s links is indicated by second information sent by the first non-AP MLD; and/or
that outage has occurred to the s links is indicated by third information sent by another AP MLD.

101. The method of claim 100, wherein the second information or the third information comprises at least one of: IDs of the s links, medium access control (MAC) addresses of AP MLDs corresponding to the s links, or MAC addresses of APs corresponding to the s links.

102. The method of claim 100 or 101, wherein the second information is carried in an outage frame.

103. The method of any of claims 87 to 102, wherein the first AP MLD and one or more AP MLDs form the first virtual AP MLD.

104. The method of claim 103, wherein the first virtual AP MLD has a virtual MLD MAC, wherein
the virtual MLD MAC is connected to MLD upper MACs of all AP MLDs in the first virtual AP MLD, and the virtual MLD MAC manages and controls all the AP MLDs in the first virtual AP MLD.

105. The method of claim 104, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

106. The method of any of claims 103 to 105, wherein an AP MLD in the first virtual AP MLD has an MLD upper MAC, a non-MLD upper MAC, an MLD lower MAC, and a physical (PHY) layer.

107. The method of any of claims 103 to 106, wherein the virtual MLD MAC of the first virtual AP MLD manages link assignment for an entire virtual basic service set (VBSS) corresponding to the first virtual AP MLD.

108. The method of any of claims 103 to 107, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

109. The method of any of claims 103 to 108, wherein one affiliated STA of a non-AP MLD is allowed for setting up links with affiliated APs of a plurality of AP MLDs in the first virtual AP MLD.

110. The method of any of claims 103 to 109, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

111. The method of any of claims 103 to 108, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

112. The method of any of claims 87 to 111, wherein the first AP MLD is a master AP MLD.

113. A wireless communication method, comprising:
sending, by a first access point multi-link device (AP MLD), a data sharing announce frame to at least one AP MLD, wherein the first AP MLD and the at least one AP MLD belong to a first virtual AP MLD, a plurality of AP MLDs in the first virtual AP MLD are capable of multi-AP MLD coordinated transmission, and the data sharing announce frame indicates information of a link for transmitting shared data and a non-AP MLD that the shared data belongs to; and
sending, by the first AP MLD, the shared data on the link indicated by the data sharing announce frame.

114. The method of claim 113, wherein a data sharing announcement field of the data sharing announce frame comprises a link identifier (ID) information field and an MLD medium access control (MAC) address field, wherein
the link information field indicates the information of the link for transmitting the shared data, and the MLD MAC address field indicates a MAC address of the non-AP MLD that the shared data belongs to.

115. The method of claim 113 or 114, further comprising:
receiving, by the first AP MLD, an acknowledgement (ACK) frame fed back by some or all of the at least one AP MLD, wherein the ACK frame indicates that a corresponding AP MLD has successfully received the shared data.

116. The method of any of claims 113 to 115, wherein the first AP MLD shares data of at least one non-AP MLD with the at least one AP MLD over a backhaul link.

117. The method of any of claims 113 to 116, wherein the first AP MLD and one or more AP MLDs form the first virtual AP MLD.

118. The method of claim 117, wherein the first virtual AP MLD has a virtual MLD MAC, wherein
the virtual MLD MAC is connected to MLD upper MACs of all AP MLDs in the first virtual AP MLD, and the virtual MLD MAC manages and controls all the AP MLDs in the first virtual AP MLD.

119. The method of claim 118, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

120. The method of any of claims 117 to 119, wherein an AP MLD in the first virtual AP MLD has an MLD upper MAC, a non-MLD upper MAC, an MLD lower MAC, and a physical (PHY) layer.

121. The method of any of claims 117 to 120, wherein the virtual MLD MAC of the first virtual AP MLD manages link assignment for an entire virtual basic service set (VBSS) corresponding to the first virtual AP MLD.

122. The method of any of claims 117 to 121, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

123. The method of any of claims 117 to 122, wherein one affiliated station (STA) of a non-AP MLD is allowed for setting up links with affiliated APs of a plurality of AP MLDs in the first virtual AP MLD.

124. The method of any of claims 117 to 123, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

125. The method of any of claims 117 to 122, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

126. The method of any of claims 113 to 125, wherein the first AP MLD is a master AP MLD.

127. A wireless communication method, comprising:
receiving, by a second access-point multi-link device (AP MLD), a data sharing announce frame sent by a first AP MLD, wherein the first AP MLD and the second AP MLD belong to a first virtual AP MLD, a plurality of AP MLDs in the first virtual AP MLD are capable of multi-AP MLD coordinated transmission, and the data sharing announce frame indicates information of a link for transmitting shared data and a non-AP MLD that the shared data belongs to; and
receiving, by the second AP MLD, the shared data that is sent by the first AP MLD on the link indicated by the data sharing announce frame.

128. The method of claim 127, wherein a data sharing announcement field of the data sharing announce frame comprises a link identifier (ID) information field and an MLD medium access control (MAC) address field, wherein
the link information field indicates the information of the link for transmitting the shared data, and the MLD MAC address field indicates a MAC address of the non-AP MLD that the shared data belongs to.

129. The method of claim 127 or 128, further comprising:
feeding back, by the second AP MLD, an acknowledgement (ACK) frame to the first AP MLD, wherein the ACK frame indicates that the second AP MLD has successfully received the shared data.

130. The method of any of claims 127 to 129, wherein the first AP MLD shares data of at least one non-AP MLD with the second AP MLD over a backhaul link.

131. The method of any of claims 127 to 130, wherein the first AP MLD and one or more AP MLDs form the first virtual AP MLD.

132. The method of claim 131, wherein the first virtual AP MLD has a virtual MLD MAC, wherein
the virtual MLD MAC is connected to MLD upper MACs of all AP MLDs in the first virtual AP MLD, and the virtual MLD MAC manages and controls all the AP MLDs in the first virtual AP MLD.

133. The method of claim 132, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

134. The method of any of claims 131 to 133, wherein an AP MLD in the first virtual AP MLD has an MLD upper MAC, a non-MLD upper MAC, an MLD lower MAC, and a physical (PHY) layer.

135. The method of any of claims 131 to 134, wherein the virtual MLD MAC of the first virtual AP MLD manages link assignment for an entire virtual basic service set (VBSS) corresponding to the first virtual AP MLD.

136. The method of any of claims 131 to 135, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

137. The method of any of claims 131 to 136, wherein one affiliated station (STA) of a non-AP MLD is allowed for setting up links with affiliated APs of a plurality of AP MLDs in the first virtual AP MLD.

138. The method of any of claims 131 to 137, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

139. The method of any of claims 131 to 136, when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

140. The method of any of claims 127 to 139, wherein the first AP MLD is a master AP MLD.

141. A wireless communication method, comprising:
sending, by a first access point multi-link device (AP MLD), a multi-AP MLD transmit (TX) trigger frame to at least one AP MLD, wherein
the first AP MLD and the at least one AP MLD belong to a first virtual AP MLD, a plurality of AP MLDs in the first virtual AP MLD are capable of multi-AP MLD coordinated transmission, the at least one AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

142. The method of claim 141, wherein
a user information field of the multi-AP MLD TX trigger frame comprises an association identifier (AID) field, and a link ID field and/or a link ID extension field, wherein
the AID field indicates an address of an AP MLD participating in multi-AP MLD coordinated transmission for the first non-AP MLD, and the link ID field indicates an ID of a link used by the AP MLD indicated by the AID field, or the link ID extension field indicates the ID of the link used by the AP MLD indicated by the AID field, or the link ID field and the link ID extension field jointly indicate the ID of the link used by the AP MLD indicated by the AID field; or
the user information field of the multi-AP MLD TX trigger frame comprises an AID field and a trigger dependent user information field, and the trigger dependent user information field comprises a multi-link field or a basic multi-link field, wherein
the AID field indicates an address of an AP MLD participating in multi-AP MLD coordinated transmission for the first non-AP MLD, and the multi-link field indicates an ID of a link used by the AP MLD indicated by the AID field, or the basic multi-link field indicates the ID of the link used by the AP MLD indicated by the AID field.

143. The method of claim 141 or 142, further comprising:
sending, by the first AP MLD, a data frame to the first non-AP MLD according to information indicated by the multi-AP MLD TX trigger frame.

144. The method of claim 143, further comprising:
receiving, by the first AP MLD, an acknowledgement (ACK) frame sent by the first non-AP MLD, wherein the ACK frame indicates that the first non-AP MLD has successfully received the data frame sent by the first AP MLD.

145. The method of any of claims 141 to 144, wherein the first AP MLD and one or more AP MLDs form the first virtual AP MLD.

146. The method of claim 145, wherein the first virtual AP MLD has a virtual MLD medium access control (MAC), wherein
the virtual MLD MAC is connected to MLD upper MACs of all AP MLDs in the first virtual AP MLD, and the virtual MLD MAC manages and controls all the AP MLDs in the first virtual AP MLD.

147. The method of claim 146, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

148. The method of any of claims 145 to 147, wherein an AP MLD in the first virtual AP MLD has an MLD upper MAC, a non-MLD upper MAC, an MLD lower MAC, and a physical (PHY) layer.

149. The method of any of claims 145 to 148, wherein the virtual MLD MAC of the first virtual AP MLD manages link assignment for an entire virtual basic service set (VBSS) corresponding to the first virtual AP MLD.

150. The method of any of claims 145 to 149, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

151. The method of any of claims 145 to 150, wherein one affiliated station (STA) of a non-AP MLD is allowed for setting up links with affiliated APs of a plurality of AP MLDs in the first virtual AP MLD.

152. The method of any of claims 145 to 151, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

153. The method of any of claims 145 to 150, wherein when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

154. The method of any of claims 141 to 153, wherein the first AP MLD is a master AP MLD.

155. A wireless communication method, comprising:
receiving, by a second access-point multi-link device (AP MLD), a multi-AP MLD transmit (TX) trigger frame sent by a first AP MLD, wherein
the first AP MLD and the second AP MLD belong to a first virtual AP MLD, a plurality of AP MLDs in the first virtual AP MLD are capable of multi-AP MLD coordinated transmission, the second AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

156. The method of claim 155, wherein
a user information field of the multi-AP MLD TX trigger frame comprises an association identifier (AID) field, and a link ID field and/or a link ID extension field, wherein
the AID field indicates an address of an AP MLD participating in multi-AP MLD coordinated transmission for the first non-AP MLD, and the link ID field indicates an ID of a link used by the AP MLD indicated by the AID field, or the link ID extension field indicates the ID of the link used by the AP MLD indicated by the AID field, or the link ID field and the link ID extension field jointly indicate the ID of the link used by the AP MLD indicated by the AID field; or
the user information field of the multi-AP MLD TX trigger frame comprises an AID field and a trigger dependent user information field, and the trigger dependent user information field comprises a multi-link field or a basic multi-link field, wherein
the AID field indicates an address of an AP MLD participating in multi-AP MLD coordinated transmission for the first non-AP MLD, and the multi-link field indicates an ID of a link used by the AP MLD indicated by the AID field, or the basic multi-link field indicates the ID of the link used by the AP MLD indicated by the AID field.

157. The method of claim 155 or 156, further comprising:
sending, by the second AP MLD, a data frame to the first non-AP MLD according to information indicated by the multi-AP MLD TX trigger frame.

158. The method of claim 157, further comprising:
receiving, by the second AP MLD, an acknowledgement (ACK) frame sent by the first non-AP MLD, wherein the ACK frame indicates that the first non-AP MLD has successfully received the data frame sent by the second AP MLD.

159. The method of any of claims 155 to 158, wherein the first AP MLD and one or more AP MLDs form the first virtual AP MLD.

160. The method of claim 159, wherein the first virtual AP MLD has a virtual MLD medium access control (MAC), wherein
the virtual MLD MAC is connected to MLD upper MACs of all AP MLDs in the first virtual AP MLD, and the virtual MLD MAC manages and controls all the AP MLDs in the first virtual AP MLD.

161. The method of claim 160, wherein the virtual MLD MAC is located in any one AP MLD in all the AP MLDs in the first virtual AP MLD, or the virtual MLD MAC is located in a master AP MLD in all the AP MLDs in the first virtual AP MLD, or the virtual MLD MAC is located in an independent controller device.

162. The method of any of claims 159 to 161, wherein an AP MLD in the first virtual AP MLD has an MLD upper MAC, a non-MLD upper MAC, an MLD lower MAC, and a physical (PHY) layer.

163. The method of any of claims 159 to 162, wherein the virtual MLD MAC of the first virtual AP MLD manages link assignment for an entire virtual basic service set (VBSS) corresponding to the first virtual AP MLD.

164. The method of any of claims 159 to 163, wherein some of links set up between the first AP MLD and one non-AP MLD are used only for transmitting control plane information and the rest of the links set up between the first AP MLD and the non-AP MLD are used only for transmitting data plane information, or some or all of the links set up between the first AP MLD and the non-AP MLD are used for transmitting control plane information and data plane information.

165. The method of any of claims 159 to 164, wherein one affiliated station (STA) of a non-AP MLD is allowed for setting up links with affiliated APs of a plurality of AP MLDs in the first virtual AP MLD.

166. The method of any of claims 159 to 165, wherein one affiliated STA of a non-AP MLD transmits the same physical layer protocol data unit (PPDU) on a plurality of links corresponding to the first virtual AP MLD, or one affiliated STA of the non-AP MLD transmits different PPDUs on a plurality of links corresponding to the first virtual AP MLD.

167. The method of any of claims 159 to 164, when the first non-AP MLD is an extremely high throughput (EHT) non-AP MLD, the first non-AP MLD only supports association and multi-link setup with one AP MLD in the first virtual AP MLD, and a link ID corresponding to the first non-AP MLD is assigned by the virtual MLD MAC of the first virtual AP MLD.

168. The method of any of claims 159 to 167, wherein the first AP MLD is a master AP MLD.

169. A wireless communication method, comprising:
sending or receiving, by a first access point (AP), a multi-AP sounding announce frame, wherein the multi-AP sounding announce frame indicates at least one of: a sequence in which a plurality of APs perform channel sounding, a time at which the plurality of APs perform channel sounding, information of links used for the plurality of APs to perform channel sounding, information of a frequency band used for the plurality of APs to perform channel sounding, or information of a channel corresponding to the links and/or the frequency band used for the plurality of APs to perform channel sounding; and wherein
the first AP belongs to a second virtual AP multi-link device (AP MLD), a plurality of APs in the second virtual AP MLD are capable of multi-AP coordinated transmission, and the plurality of APs are affiliated APs which are non-collocated in the second virtual AP MLD.

170. The method of claim 169, wherein a multi-AP sounding announce field of the multi-AP sounding announce frame comprises at least one of: a virtual basic service set identifier (VBSSID) field, a candidate set ID field, a sounding method field, or a sounding configuration field, wherein
the VBSSID field indicates a VBSSID of the second virtual AP MLD, the candidate set ID field indicates an ID of a multi-AP MLD candidate set corresponding to the second virtual AP MLD, the sounding method field indicates a method for performing channel sounding by the plurality of APs, and the sounding configuration field indicates configuration information for performing channel sounding by the plurality of APs.

171. The method of claim 170, wherein the sounding method field comprises at least one of: a sequential or joint field, or an explicit or implicit field, wherein
when the sequential or joint field has a first value, the sequential or joint field indicates that the plurality of APs are to perform channel sounding in sequence, and when the sequential or joint field has a second value, the sequential or joint field indicates that the plurality of APs are to perform channel sounding synchronously at the same time;
when the explicit or implicit field has a first value, the explicit or implicit field indicates that the plurality of APs are to perform explicit channel sounding, and when the explicit or implicit field has a second value, the explicit or implicit field indicates that the plurality of APs are to perform implicit channel sounding.

172. The method of claim 171, wherein
when the sequential or joint field indicates that the plurality of APs are to perform channel sounding in sequence, times at which the plurality of APs perform channel sounding and/or a sequence in which the plurality of APs perform channel sounding is indicated by the sounding configuration field; or
when the sequential or joint field indicates that the plurality of APs are to perform channel sounding synchronously at the same time, a time at which the plurality of APs are to perform channel sounding is indicated by the sounding configuration field.

173. The method of claim 170, wherein the sounding configuration field comprises at least one of: an AP number field and a plurality of AP sounding configuration fields, wherein
the AP number field indicates the number of APs participating in multi-AP channel sounding, and an *m*^{th} AP sounding configuration field in the plurality of AP sounding configuration fields indicates configuration information for an *m*^{th} AP participating in multi-AP channel sounding.

174. The method of claim 173, wherein when the plurality of APs are to perform channel sounding in sequence, an order of an AP sounding configuration field in the plurality of AP sounding configuration fields indicates an order in which a corresponding AP performs multi-AP channel sounding.

175. The method of claim 173 or 174, wherein an AP sounding configuration field in the plurality of AP sounding configuration fields comprises at least one of: a BSSID field, an AP ID field, a start time field, or a basic multi-link element, wherein
the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the basic multi-link element indicates information of a link used for the AP corresponding to the current AP sounding configuration field to perform multi-AP channel sounding.

176. The method of claim 173 or 174, wherein an AP sounding configuration field in the plurality of AP sounding configuration fields comprises at least one of: a BSSID field, an AP ID field, a start time field, or a link ID information field, wherein
the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the link ID information field indicates information of a link used for the AP corresponding to the current AP sounding configuration field to perform multi-AP channel sounding.

177. The method of claim 176, wherein the link ID information field comprises a link ID field and/or a link ID extension field, wherein
when the link ID information field comprises only the link ID field, the link ID field indicates the ID of the link used for the AP corresponding to the current AP sounding configuration field to perform multi-AP channel sounding; or
when the link ID information field comprises only the link ID extension field, the link ID extension field indicates the ID of the link used for the AP corresponding to the current AP sounding configuration field to perform multi-AP channel sounding; or
when the link ID information field comprises both the link ID field and the link ID extension field, the link ID field and the link ID extension field jointly indicate the ID of the link used for the AP corresponding to the current AP sounding configuration field to perform multi-AP channel sounding.

178. The method of any of claims 169 to 177, wherein when the plurality of APs comprises the first AP and the plurality of APs perform explicit channel sounding, the method further comprises:
sending, by the first AP, a null data physical layer protocol data unit announcement (null data PPDU announcement, NDPA) frame to a first non-AP MLD according to information indicated by the multi-AP sounding announce frame, wherein the NDPA frame indicates a parameter and configuration information of an NDP frame to be sent, and the first non-AP MLD is a non-AP MLD associated with the first AP in all non-AP MLDs participating in multi-AP channel sounding; and
sending, by the first AP, an NDP frame to the first non-AP MLD on a channel for sending the NDPA frame, wherein a time interval between the NDP frame and the NDPA frame is not less than one short inter-frame space (SIFS).

179. The method of claim 178, wherein the NDPA frame comprises a non-AP MLD information list field, and the non-AP MLD information list field comprises a link ID field and/or a link ID extension field, wherein
when the non-AP MLD information list field comprises only the link ID field, the link ID field indicates an ID of a link used for the first AP to perform multi-AP channel sounding; or
when the non-AP MLD information list field comprises only the link ID extension field, the link ID extension field indicates the ID of the link used for the first AP to perform multi-AP channel sounding; or
when the non-AP MLD information list field comprises both the link ID field and the link ID extension field, the link ID field and the link ID extension field jointly indicate the ID of the link used for the first AP to perform multi-AP channel sounding.

180. The method of claim 178 or 179, wherein when the first AP sends the multi-AP sounding announce frame and an AP which is co-located with the first AP in the second virtual AP MLD covers all the non-AP MLDs participating in multi-AP channel sounding, the method further comprises:
sending, by the first AP, a beam forming report poll (BFRP) trigger frame to all the non-AP MLDs participating in multi-AP channel sounding on the channel for sending the NDPA frame, wherein the BFRP trigger frame is used for triggering or requesting all the non-AP MLDs participating in multi-AP channel sounding to feed back channel sounding results to APs associated with the non-AP MLDs; and
receiving, by the first AP, an NDP feedback frame sent by the first non-AP MLD, wherein the NDP feedback frame contains a channel sounding result for the first AP.

181. The method of claim 178 or 179, wherein when the first AP sends the multi-AP sounding announce frame, and an AP which is co-located with the first AP in the second virtual AP MLD is unable to cover all the non-AP MLDs participating in multi-AP channel sounding, the method further comprises:
sending, by the first AP, a BFRP trigger frame to the first non-AP MLD on the channel for sending the NDPA frame, wherein the BFRP trigger frame is used for triggering or requesting the first non-AP MLD to feed back a channel sounding result; and
receiving, by the first AP, an NDP feedback frame sent by the first non-AP MLD, wherein the NDP feedback frame contains a channel sounding result for the first AP.

182. The method of claim 180 or 181, wherein a user information field of the BFRP trigger frame comprises a link ID field and/or a link ID extension field, wherein
when the user information field of the BFRP trigger frame comprises only the link ID field, the link ID field indicates an ID of a link used for the first AP to perform multi-AP MLD channel sounding; or
when the user information field of the BFRP trigger frame comprises only the link ID extension field, the link ID extension field indicates the ID of the link used for the first AP to perform multi-AP MLD channel sounding; or
when the user information field of the BFRP trigger frame comprises both the link ID field and the link ID extension field, the link ID field and the link ID extension field jointly indicate the ID of the link used for the first AP to perform multi-AP MLD channel sounding.

183. The method of claim 180 or 181, wherein
the NDP feedback frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP feedback frame corresponds to; or
the NDP feedback frame comprises a multi-link element or a basic multi-link element, wherein
a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

184. The method of any of claims 178 to 183, wherein
when the plurality of APs perform channel sounding in sequence, the plurality of APs send the NDPA frames and/or the NDP frames in a sequence indicated by the multi-AP sounding announce frame; or
when the plurality of APs perform channel sounding synchronously at the same time, the plurality of APs send the NDPA frames and/or the NDP frames synchronously at a start time indicated by the multi-AP sounding announce frame.

185. The method of any of claims 169 to 177, wherein when the plurality of APs comprise the first AP and the plurality of APs perform implicit channel sounding, the method further comprises:
sending, by the first AP, a sounding trigger frame to a first non-AP MLD according to information indicated by the multi-AP sounding announcement frame, wherein the sounding trigger frame is used for triggering or requesting the first non-AP MLD to feed back a channel sounding result, and the first non-AP MLD is a non-AP MLD associated with the first AP in all non-AP MLDs participating in multi-AP channel sounding; and
receiving, by the first AP, an NDP frame sent by the first non-AP MLD, wherein the NDP frame contains a channel sounding result for the first AP.

186. The method of claim 185, wherein a user information field of the sounding trigger frame comprises a link ID field and a link ID extension field, and the link ID field and the link ID extension field jointly indicate an ID of a link used for the first AP to perform multi-AP channel sounding.

187. The method of claim 185, wherein
the NDP frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field includes only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP frame corresponds to; or
the NDP frame comprises a multi-link element or a basic multi-link element, wherein
a link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

188. The method of any of claims 185 to 187, wherein
when the plurality of APs perform channel sounding in sequence, the plurality of APs trigger, in a sequence indicated by the multi-AP sounding announce frame, all the non-AP MLDs participating in multi-AP channel sounding to send the NDP frames; or
when the plurality of APs perform channel sounding synchronously at the same time, the plurality of APs trigger, according to a start time indicated by the multi-AP sounding announce frame, all the non-AP MLDs participating in multi-AP channel sounding to send the NDP frames synchronously at the same time.

189. The method of any of claims 169 to 188, wherein the second virtual AP MLD has a virtual MLD upper medium access control (MAC), wherein
the virtual MLD upper MAC is connected to MLD lower MACs of all affiliated APs in the second virtual AP MLD, and the virtual MLD upper MAC manages and controls all the affiliated APs in the second virtual AP MLD.

190. The method of claim 189, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

191. The method of claim 189 or 190, wherein an affiliated AP in the second virtual AP MLD has a non-MLD upper MAC, an MLD lower MAC, and a physical (PHY) layer.

192. The method of claim 191, wherein a plurality of affiliated APs co-located in the second virtual AP MLD share one MLD upper MAC.

193. The method of any of claims 189 to 192, wherein the virtual MLD upper MAC of the second virtual AP MLD manages link assignment for an entire VBSS corresponding to the second virtual AP MLD.

194. The method of any of claims 189 to 193, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

195. The method of any of claims 189 to 194, wherein one affiliated STA of a non-AP MLD is allowed for setting up links with a plurality of affiliated APs non-collocated in the second virtual AP MLD.

196. The method of any of claims 189 to 195, wherein one affiliated STA of a non-AP MLD transmits the same PPDU on a plurality of links corresponding to the second virtual AP MLD, or one affiliated STA of the non-AP MLD transmits different PPDUs on the plurality of links corresponding to the second virtual AP MLD.

197. The method of any of claims 189 to 194, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

198. The method of any of claims 169 to 197, wherein the first AP is a master AP.

199. A wireless communication method, comprising:
receiving, by a first non-access point multi-link device (non-AP MLD), a second frame sent by a first AP, wherein
the second frame is sent by the first AP according to information indicated by a multi-AP sounding announce frame, the first non-AP MLD is a non-AP MLD associated with the first AP in all non-AP MLDs participating in multi-AP channel sounding, the first AP belongs to a second virtual AP MLD, a plurality of APs in the second virtual AP MLD are capable of multi-AP coordinated transmission, the plurality of APs are affiliated APs non-collocated in the second virtual AP MLD, and the second frame is a null data physical layer protocol data unit announcement (null data PPDU announcement, NDPA) frame or a sounding trigger frame, wherein
the multi-AP sounding announce frame indicates at least one of: a sequence in which plurality of APs perform channel sounding, a time at which the plurality of APs perform channel sounding, information of links used for the plurality of APs to perform channel sounding, information of a frequency band used for the plurality of APs to perform channel sounding, or information of a channel corresponding to the links and/or the frequency band used for the plurality of APs to perform channel sounding; and
when the second frame is an NDPA frame, the NDPA frame indicates a parameter and configuration information of an NDP frame to be sent;
when the second frame is a sounding trigger frame, the sounding trigger frame is used for triggering or requesting the first non-AP MLD to feed back a sounding result.

200. The method of claim 199, wherein a multi-AP sounding announce field of the multi-AP sounding announce frame comprises at least one of: a virtual basic service set identifier (VBSSID) field, a candidate set ID field, a sounding method field, or a sounding configuration field, wherein
the VBSSID field indicates a VBSSID of the second virtual AP MLD, the candidate set ID field indicates an ID of a multi-AP MLD candidate set corresponding to the second virtual AP MLD, the sounding method field indicates a method for performing channel sounding by the plurality of APs, and the sounding configuration field indicates configuration information for performing channel sounding by the plurality of APs.

201. The method of claim 200, wherein the sounding method field comprises at least one of: a sequential or joint field, or an explicit or implicit field, wherein
when the sequential or joint field has a first value, the sequential or joint field indicates that the plurality of APs are to perform channel sounding in sequence, and when the sequential or joint field has a second value, the sequential or joint field indicates that the plurality of APs are to perform channel sounding synchronously at the same time;
when the explicit or implicit field has a first value, the explicit or implicit field indicates that the plurality of APs are to perform explicit channel sounding, and when the explicit or implicit field has a second value, the explicit or implicit field indicates that the plurality of APs are to perform implicit channel sounding.

202. The method of claim 201, wherein
when the sequential or joint field indicates that the plurality of APs are to perform channel sounding in sequence, times at which the plurality of APs perform channel sounding and/or a sequence in which the plurality of APs perform channel sounding is indicated by the sounding configuration field; or
when the sequential or joint field indicates that the plurality of APs are to perform channel sounding synchronously at the same time, a time at which the plurality of APs perform channel sounding is indicated by the sounding configuration field.

203. The method of claim 200, wherein the sounding configuration field comprises at least one of: an AP number field and a plurality of AP sounding configuration fields, wherein
the AP number field indicates the number of APs participating in multi-AP channel sounding, and an *m*^{th} AP sounding configuration field in the plurality of AP sounding configuration fields indicates configuration information for an *m*^{th} AP participating in multi-AP channel sounding.

204. The method of claim 203, wherein when the plurality of APs are to perform channel sounding in sequence, an order of an AP sounding configuration field in the plurality of AP sounding configuration fields indicates an order in which a corresponding AP performs multi-AP channel sounding.

205. The method of claim 203 or 204, wherein an AP sounding configuration field in the plurality of AP sounding configuration fields comprises at least one of: a BSSID field, an AP ID field, a start time field, or a basic multi-link element, wherein
the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the basic multi-link element indicates information of a link used for the AP corresponding to the current AP sounding configuration field to perform multi-AP channel sounding.

206. The method of claim 203 or 204, wherein an AP sounding configuration field in the plurality of AP sounding configuration fields comprises at least one of: a BSSID field, an AP ID field, a start time field, or a link ID information field, wherein
the BSSID field indicates a BSSID of an AP corresponding to a current AP sounding configuration field, the AP ID field indicates an ID of the AP corresponding to the current AP sounding configuration field, the start time field indicates a start time at which the AP corresponding to the current AP sounding configuration field performs multi-AP channel sounding, the link ID information field indicates information of a link used for the AP corresponding to the current AP sounding configuration field to perform multi-AP channel sounding.

207. The method of claim 206, wherein the link ID information field comprises a link ID field and/or a link ID extension field, wherein
when the link ID information field comprises only the link ID field, the link ID field indicates the ID of the link used for the AP corresponding to the current AP sounding configuration field to perform multi-AP channel sounding; or
when the link ID information field comprises only the link ID extension field, the link ID extension field indicates the ID of the link used for the AP corresponding to the current AP sounding configuration field to perform multi-AP channel sounding; or
when the link ID information field comprises both the link ID field and the link ID extension field, the link ID field and the link ID extension field jointly indicate the ID of the link used for the AP corresponding to the current AP sounding configuration field to perform multi-AP channel sounding.

208. The method of any of claims 199 to 207, wherein when the second frame is an NDPA frame and the plurality of APs perform explicit channel sounding, the method further comprises:
receiving, by the first non-AP MLD, an NDP frame sent by the first AP on a channel for sending the NDPA frame, wherein a time interval between the NDP frame and the NDPA frame is not less than one short inter-frame space (SIFS).

209. The method of claim 208, wherein the NDPA frame comprises a non-AP MLD information list field, and the non-AP MLD information list field comprises a link ID field and/or a link ID extension field, wherein
when the non-AP MLD information list field comprises only the link ID field, the link ID field indicates an ID of a link used for the first AP to perform multi-AP channel sounding; or
when the non-AP MLD information list field comprises only the link ID extension field, the link ID extension field indicates the ID of the link used for the first AP to perform multi-AP channel sounding; or
when the non-AP MLD information list field comprises both the link ID field and the link ID extension field, the link ID field and the link ID extension field jointly indicate the ID of the link used for the first AP to perform multi-AP channel sounding.

210. The method of claim 208 or 209, wherein when the first AP sends the multi-AP sounding announce frame and an AP which is co-located with the first AP in the second virtual AP MLD covers all the non-AP MLDs participating in multi-AP channel sounding, the method further comprises:
receiving, by the first non-AP MLD, a beam forming report poll (BFRP) trigger frame that is sent by the first AP on the channel for sending the NDPA frame, wherein the BFRP trigger frame is used for triggering or requesting all the non-AP MLDs participating in multi-AP channel sounding to feed back channel sounding results to APs associated with the non-AP MLDs; and
sending, by the first non-AP MLD sends, NDP feedback frame to the first AP, wherein the NDP feedback frame contains a channel sounding result for the first AP.

211. The method of claim 208 or 209, wherein when the first AP sends the multi-AP sounding announce frame, and an AP which is co-located with the first AP in the second virtual AP MLD is unable to cover all the non-AP MLDs participating in multi-AP channel sounding, the method further comprises:
receiving, by the first non-AP MLD, a BFRP trigger frame that is sent by the first AP on the channel for sending the NDPA frame, wherein the BFRP trigger frame is used for triggering or requesting the first non-AP MLD to feed back a channel sounding result; and
sending, by the first non-AP MLD, an NDP feedback frame to the first AP, wherein the NDP feedback frame contains a channel sounding result for the first AP.

212. The method of claim 210 or 211, wherein a user information field of the BFRP trigger frame comprises a link ID field and/or a link ID extension field, wherein
when the user information field of the BFRP trigger frame comprises only the link ID field, the link ID field indicates an ID of a link used for the first AP to perform multi-AP MLD channel sounding; or
when the user information field of the BFRP trigger frame comprises only the link ID extension field, the link ID extension field indicates the ID of the link used for the first AP to perform multi-AP MLD channel sounding; or
when the user information field of the BFRP trigger frame comprises both the link ID field and the link ID extension field, the link ID field and the link ID extension field jointly indicate the ID of the link used for the first AP to perform multi-AP MLD channel sounding.

213. The method of claim 210 or 211, wherein
the NDP feedback frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field comprises only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP feedback frame corresponds to; or
the NDP feedback frame comprises a multi-link element or a basic multi-link element, wherein
a link ID information field of the multi-link element indicates an ID of a link that the channel sounding result carried in the NDP feedback frame corresponds to, or a link ID information field of the basic multi-link element indicates the ID of the link that the channel sounding result carried in the NDP feedback frame corresponds to.

214. The method of any of claims 208 to 213, wherein
when the plurality of APs perform channel sounding in sequence, the plurality of APs send the NDPA frames and/or the NDP frames in a sequence indicated by the multi-AP sounding announce frame; or
when the plurality of APs perform channel sounding synchronously at the same time, the plurality of APs send the NDPA frames and/or the NDP frames synchronously at a start time indicated by the multi-AP sounding announce frame.

215. The method of any of claims 199 to 207, wherein when the second frame is a sounding trigger frame and the plurality of APs perform implicit channel sounding, the method further comprises:
sending, by the first non-AP MLD, an NDP frame to the first AP, wherein the NDP frame contains a channel sounding result for the first AP.

216. The method of claim 215, wherein a user information field of the sounding trigger frame comprises a link ID field and a link ID extension field, and the link ID field and the link ID extension field jointly indicate an ID of a link used for the first AP to perform multi-AP channel sounding.

217. The method of claim 215, wherein
the NDP frame comprises a link ID information field, and the link ID information field comprises a link ID field and/or a link ID extension field, wherein
when the link ID information field comprises only the link ID field, the link ID field indicates an ID of a link that a channel sounding result carried in the NDP feedback frame corresponds to; or when the link ID information field includes only the link ID extension field, the link ID extension field indicates the ID of the link that the channel sounding result carried in the NDP feedback frame corresponds to; or when the link ID information field comprises both the link ID field and the link ID extension field, the link ID field and the link ID extension field jointly indicate the ID of the link that the channel sounding result carried in the NDP frame corresponds to; or
the NDP frame comprises a multi-link element or a basic multi-link element, wherein
a link ID information field of the multi-link element indicates an ID of a link that the channel sounding result carried in the NDP frame corresponds to, or a link ID information field of the basic multi-link element indicates the ID of the link that the channel sounding result carried in the NDP frame corresponds to.

218. The method of any of claims 215 to 217, wherein
when the plurality of APs perform channel sounding in sequence, the plurality of APs trigger, in a sequence indicated by the multi-AP sounding announce frame, all the non-AP MLDs participating in multi-AP channel sounding to send the NDP frames; or
when the plurality of APs perform channel sounding synchronously at the same time, the plurality of APs trigger, according to a start time indicated by the multi-AP sounding announce frame, all the non-AP MLDs participating in multi-AP channel sounding to send the NDP frames synchronously at the same time.

219. The method of any of claims 199 to 218, wherein the second virtual AP MLD has a virtual MLD upper medium access control (MAC), wherein
the virtual MLD upper MAC is connected to MLD lower MACs of all affiliated APs in the second virtual AP MLD, and the virtual MLD upper MAC manages and controls all the affiliated APs in the second virtual AP MLD.

220. The method of claim 219, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

221. The method of claim 219 or 220, wherein an affiliated AP in the second virtual AP MLD has a non-MLD upper MAC, an MLD lower MAC, and a physical (PHY) layer.

222. The method of claim 221, wherein a plurality of affiliated APs co-located in the second virtual AP MLD share one MLD upper MAC.

223. The method of any of claims 219 to 222, wherein the virtual MLD upper MAC of the second virtual AP MLD manages link assignment for an entire VBSS corresponding to the second virtual AP MLD.

224. The method of any of claims 219 to 223, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

225. The method of any of claims 219 to 224, wherein one affiliated STA of a non-AP MLD is allowed for setting up links with a plurality of affiliated APs non-collocated in the second virtual AP MLD.

226. The method of any of claims 219 to 225, wherein one affiliated STA of a non-AP MLD transmits the same PPDU on a plurality of links corresponding to the second virtual AP MLD, or one affiliated STA of the non-AP MLD transmits different PPDUs on the plurality of links corresponding to the second virtual AP MLD.

227. The method of any of claims 219 to 224, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

228. The method of any of claims 199 to 227, wherein the first AP is a master AP.

229. A wireless communication method, comprising:
sending, by a first access point (AP), first information to a first non-AP multi-link device (non-AP MLD), wherein
the first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, wherein s and *w* each are a positive integer.

230. The method of claim 229, wherein
the s links are links that correspond to the first non-AP MLD and have outages, and the *w* links are links that correspond to the first non-AP MLD and do not have outages.

231. The method of claim 229 or 230, wherein
the *w* links are links set up between the first non-AP MLD and an AP which is co-located with the first AP in the second virtual AP MLD, and the s links are links set up between the first non-AP MLD and an AP which is co-located with a second AP in the second virtual AP MLD; or
the s links are links set up between the first non-AP MLD and an AP which is co-located with the first AP in the second virtual AP MLD, and the *w* links are links set up between the first non-AP MLD and an AP which is co-located with a second AP in the second virtual AP MLD.

232. The method of any of claims 229 to 231, wherein the first information is a traffic identifier (TID)-to-link mapping element, wherein
the TID-to-link mapping element comprises a link mapping field of at least one TID, and a link mapping of TID *n* field in the link mapping field of the at least one TID indicates a link to which TID *n* is mapped, wherein *n* is a non-negative integer.

233. The method of claim 232, wherein a link mapping field of a TID in the link mapping field of the at least one TID occupies *k* bytes, wherein *k* is a positive integer and *k>2.*

234. The method of claim 233, wherein *k* = 32.

235. The method of any of claims 229 to 234, wherein the first information is carried in a beacon frame or a probe response frame.

236. The method of claim 235, wherein
when the first information is carried in a beacon frame, the beacon frame further comprises a reconfiguration multi-link element; or
when the first information is carried in a probe response frame, the probe response frame further comprises a reconfiguration multi-link element, wherein
the reconfiguration multi-link element is used for announcing release or disconnection of connections with affiliated APs corresponding to the s links.

237. The method of any of claims 229 to 234, wherein the first information is carried in a TID-to-link mapping request frame, wherein
an action field of the TID-to-link mapping request frame comprises a TID-to-link mapping element, wherein
the first information is the TID-to-link mapping element, the TID-to-link mapping element comprises a link mapping field of at least one TID, and a link mapping of TID *n* field in the link mapping field of the at least one TID indicates a link to which TID *n* is mapped.

238. The method of claim 237, further comprising:
receiving, by the first AP, a TID-to-link mapping response frame sent by the first non-AP MLD, wherein
an action field of the TID-to-link mapping response frame comprises a TID-to-link mapping element, wherein
the TID-to-link mapping element comprises a link mapping field of at least one TID, and a link mapping of TID *n* field in the link mapping field of the at least one TID indicates a link to which TID *n* is mapped.

239. The method of claim 237 or 238, further comprising:
sending, by the first AP, a beacon frame or a probe response frame to the first non-AP MLD, wherein
the beacon frame comprises a reconfiguration multi-link element, or the probe response frame comprises a reconfiguration multi-link element, wherein
the reconfiguration multi-link element is used for announcing release or disconnection of connections with affiliated APs corresponding to the s links.

240. The method of claim 236 or 239, wherein the link information field of the reconfiguration multi-link element comprises at least one per-station (STA) profile field, wherein
a link ID field of a per-STA profile field in the at least one per-STA profile field indicates an ID of a link for a reported STA during multi-AP MLD coordination; or
a link ID extension field of the per-STA profile field in the at least one per-STA profile field indicates the ID of the link for the reported STA during multi-AP MLD coordination; or
the link ID field and the link ID extension field of the per-STA profile field in the at least one per-STA profile field jointly indicate the ID of the link for the reported STA during multi-AP coordination.

241. The method of claim 240, wherein the link ID field occupies the first *Q*₁ bits in the per-STA profile field, and the link ID extension field occupies the last *Q*₂ bits in the per-STA profile field, wherein *Q*₁ and *Q*₂ each are a positive integer.

242. The method of any of claims 229 to 241, further comprising:
determining, by the first AP according to link quality of the s links, that outage has occurred to the s links, or determining, by the first AP according to location information or displacement information of the first non-AP MLD, that outage has occurred to the s links; and/or
receiving, by the first AP, second information sent by the first non-AP MLD, wherein the second information indicates that outage has occurred to the s links; and/or
receiving, by the first AP, third information sent by another AP, wherein the third information indicates that outage has occurred to the s links.

243. The method of claim 242, wherein the second information or the third information comprises at least one of: IDs of the s links, or medium access control (MAC) addresses of APs corresponding to the s links.

244. The method of claim 242 or 243, wherein the second information is carried in an outage frame.

245. The method of any of claims 229 to 244, wherein the second virtual AP MLD has a virtual MLD upper MAC, wherein
the virtual MLD upper MAC is connected to MLD lower MACs of all affiliated APs in the second virtual AP MLD, and the virtual MLD upper MAC manages and controls all the affiliated APs in the second virtual AP MLD.

246. The method of claim 245, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

247. The method of claim 245 or 246, wherein an affiliated AP in the second virtual AP MLD has a non-MLD upper MAC, an MLD lower MAC, and a physical (PHY) layer.

248. The method of claim 247, wherein a plurality of affiliated APs co-located in the second virtual AP MLD share one MLD upper MAC.

249. The method of any of claims 245 to 248, wherein the virtual MLD upper MAC of the second virtual AP MLD manages link assignment for an entire virtual basic service set (VBSS) corresponding to the second virtual AP MLD.

250. The method of any of claims 245 to 249, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

251. The method of any of claims 245 to 250, wherein one affiliated STA of a non-AP MLD is allowed for setting up links with a plurality of affiliated APs non-collocated in the second virtual AP MLD.

252. The method of any of claims 245 to 251, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

253. The method of any of claims 245 to 250, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

254. The method of any of claims 229 to 253, wherein the first AP is a master AP.

255. A wireless communication method, comprising:
receiving, by a first non-access point multi-link device (non-AP MLD), first information sent by a first AP, wherein
the first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, wherein s and *w* each are a positive integer.

256. The method of claim 255, wherein
the s links are links that correspond to the first non-AP MLD and have outages, and the *w* links are links that correspond to the first non-AP MLD and do not have outages.

257. The method of claim 255 or 256, wherein
the *w* links are links set up between the first non-AP MLD and an AP which is co-located with the first AP in the second virtual AP MLD, and the *s* links are links set up between the first non-AP MLD and an AP which is co-located with a second AP in the second virtual AP MLD; or
the *s* links are links set up between the first non-AP MLD and an AP which is co-located with the first AP in the second virtual AP MLD, and the *w* links are links set up between the first non-AP MLD and an AP which is co-located with a second AP in the second virtual AP MLD.

258. The method of any of claims 255 to 257, wherein the first information is a traffic identifier (TID)-to-link mapping element, wherein
the TID-to-link mapping element comprises a link mapping field of at least one TID, and a link mapping of TID *n* field in the link mapping field of the at least one TID indicates a link to which TID *n* is mapped, wherein *n* is a non-negative integer.

259. The method of claim 258, wherein a link mapping field of a TID in the link mapping field of the at least one TID occupies *k* bytes, wherein *k* is a positive integer and *k>2.*

260. The method of claim 259, wherein *k* = 32.

261. The method of any of claims 255 to 260, wherein the first information is carried in a beacon frame or a probe response frame.

262. The method of claim 261, wherein
when the first information is carried in a beacon frame, the beacon frame further comprises a reconfiguration multi-link element; or
when the first information is carried in a probe response frame, the probe response frame further comprises a reconfiguration multi-link element, wherein
the reconfiguration multi-link element is used for announcing release or disconnection of connections with affiliated APs corresponding to the s links.

263. The method of any of claims 255 to 260, wherein the first information is carried in a TID-to-link mapping request frame, wherein
an action field of the TID-to-link mapping request frame comprises a TID-to-link mapping element, wherein
the first information is the TID-to-link mapping element, the TID-to-link mapping element comprises a link mapping field of at least one TID, and a link mapping of TID *n* field in the link mapping field of the at least one TID indicates a link to which TID *n* is mapped.

264. The method of claim 263, further comprising:
sending, by the first non-AP MLD, a TID-to-link mapping response frame to the first AP, wherein
an action field of the TID-to-link mapping response frame comprises a TID-to-link mapping element, wherein
the TID-to-link mapping element comprises a link mapping field of at least one TID, and a link mapping of TID *n* field in the link mapping field of the at least one TID indicates a link to which TID *n* is mapped.

265. The method of claim 263 or 264, further comprising:
receiving, by the first non-AP MLD, a beacon frame or a probe response frame sent by the first AP, wherein
the beacon frame comprises a reconfiguration multi-link element, or the probe response frame comprises a reconfiguration multi-link element, wherein
the reconfiguration multi-link element is used for announcing release or disconnection of connections with affiliated APs corresponding to the s links.

266. The method of claim 262 or 265, wherein the link information field of the reconfiguration multi-link element comprises at least one per-station (STA) profile field, wherein
a link ID field of a per-STA profile field in the at least one per-STA profile field indicates an ID of a link for a reported STA during multi-AP MLD coordination; or
a link ID extension field of the per-STA profile field in the at least one per-STA profile field indicates the ID of the link for the reported STA during multi-AP MLD coordination; or
the link ID field and the link ID extension field of the per-STA profile field in the at least one per-STA profile field jointly indicate the ID of the link for the reported STA during multi-AP coordination.

267. The method of claim 266, wherein the link ID field occupies the first *Q*₁ bits in the per-STA profile field, and the link ID extension field occupies the last *Q*₂ bits in the per-STA profile field, wherein *Q*₁ and *Q*₂ each are a positive integer.

268. The method of any of claims 255 to 267, wherein
that outage has occurred to the s links is determined by the first AP according to link quality of the s links, or determined by the first AP according to location information or displacement information of the first non-AP MLD; and/or
that outage has occurred to the s links is indicated by second information sent by the first non-AP MLD; and/or
that outage has occurred to the s links is indicated by third information sent by another AP.

269. The method of claim 268, wherein the second information or the third information comprises at least one of: IDs of the s links, or medium access control (MAC) addresses of APs corresponding to the *s* links.

270. The method of claim 268 or 269, wherein the second information is carried in an outage frame.

271. The method of any of claims 255 to 270, wherein the second virtual AP MLD has a virtual MLD upper MAC, wherein
the virtual MLD upper MAC is connected to MLD lower MACs of all affiliated APs in the second virtual AP MLD, and the virtual MLD upper MAC manages and controls all the affiliated APs in the second virtual AP MLD.

272. The method of claim 271, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

273. The method of claim 271 or 272, wherein an affiliated AP in the second virtual AP MLD has a non-MLD upper MAC, an MLD lower MAC, and a physical (PHY) layer.

274. The method of claim 273, wherein a plurality of affiliated APs co-located in the second virtual AP MLD share one MLD upper MAC.

275. The method of any of claims 271 to 274, wherein the virtual MLD upper MAC of the second virtual AP MLD manages link assignment for an entire virtual basic service set (VBSS) corresponding to the second virtual AP MLD.

276. The method of any of claims 271 to 275, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

277. The method of any of claims 271 to 276, wherein one affiliated STA of a non-AP MLD is allowed for setting up links with a plurality of affiliated APs non-collocated in the second virtual AP MLD.

278. The method of any of claims 271 to 277, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

279. The method of any of claims 271 to 276, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

280. The method of any of claims 255 to 279, wherein the first AP is a master AP.

281. A wireless communication method, comprising:
sending, by a first access point (AP), a data sharing announce frame to at least one AP, wherein the first AP and the at least one AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, and the data sharing announce frame indicates information of a link for transmitting shared data and a non-AP MLD that the shared data belongs to; and
sending, by the first AP, the shared data on the link indicated by the data sharing announce frame.

282. The method of claim 281, wherein a data sharing announcement field of the data sharing announce frame includes a link ID information field and an MLD medium access control (MAC) address field, wherein
the link information field indicates the information of the link for transmitting the shared data, and the MLD MAC address field indicates a MAC address of the non-AP MLD that the shared data belongs to.

283. The method of claim 281 or 282, further comprising:
receiving, by the first AP, an acknowledgement (ACK) frame fed back by some or all APs in the at least one AP MLD, wherein the ACK frame indicates that a corresponding AP has successfully received the shared data.

284. The method of any of claims 281 to 283, wherein the first AP shares data of at least one non-AP MLD with the at least one AP over a backhaul link.

285. The method of any of claims 281 to 284, wherein the second virtual AP MLD has a virtual MLD upper MAC, wherein
the virtual MLD upper MAC is connected to MLD lower MACs of all affiliated APs in the second virtual AP MLD, and the virtual MLD upper MAC manages and controls all the affiliated APs in the second virtual AP MLD.

286. The method of claim 285, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

287. The method of claim 285 or 286, wherein an affiliated AP in the second virtual AP MLD has a non-MLD upper MAC, an MLD lower MAC, and a physical (PHY) layer.

288. The method of claim 287, wherein a plurality of affiliated APs co-located in the second virtual AP MLD share one MLD upper MAC.

289. The method of any of claims 285 to 288, wherein the virtual MLD upper MAC of the second virtual AP MLD manages link assignment for an entire virtual basic service set (VBSS) corresponding to the second virtual AP MLD.

290. The method of any of claims 285 to 289, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

291. The method of any of claims 285 to 290, wherein one affiliated STA of a non-AP MLD is allowed for setting up links with a plurality of affiliated APs non-collocated in the second virtual AP MLD.

292. The method of any of claims 285 to 291, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

293. The method of any of claims 285 to 290, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

294. The method of any of claims 281 to 293, wherein the first AP is a master AP.

295. A wireless communication method, comprising:
receiving, by a second access point (AP), a data sharing announce frame sent by a first AP, wherein the first AP and the second AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, and the data sharing announce frame indicates information of a link for transmitting shared data and a non-AP MLD that the shared data belongs to; and
receiving, by the second AP, the shared data that is sent by the first AP on the link indicated by the data sharing announce frame.

296. The method of claim 295, wherein a data sharing announcement field of the data sharing announce frame includes a link ID information field and an MLD medium access control (MAC) address field, wherein
the link information field indicates the information of the link for transmitting the shared data, and the MLD MAC address field indicates a MAC address of the non-AP MLD that the shared data belongs to.

297. The method of claim 295 or 296, further comprising:
feeding back, by the second AP, an acknowledgement (ACK) frame to the first AP, wherein the ACK frame indicates that the second AP has successfully received the shared data.

298. The method of any of claims 295 to 297, wherein the first AP shares data of at least one non-AP MLD with the second AP over a backhaul link.

299. The method of any of claims 295 to 298, wherein the second virtual AP MLD has a virtual MLD upper MAC, wherein
the virtual MLD upper MAC is connected to MLD lower MACs of all affiliated APs in the second virtual AP MLD, and the virtual MLD upper MAC manages and controls all the affiliated APs in the second virtual AP MLD.

300. The method of claim 299, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

301. The method of claim 299 or 300, wherein an affiliated AP in the second virtual AP MLD has a non-MLD upper MAC, an MLD lower MAC, and a physical (PHY) layer.

302. The method of claim 301, wherein a plurality of affiliated APs co-located in the second virtual AP MLD share one MLD upper MAC.

303. The method of any of claims 299 to 302, wherein the virtual MLD upper MAC of the second virtual AP MLD manages link assignment for an entire virtual basic service set (VBSS) corresponding to the second virtual AP MLD.

304. The method of any of claims 299 to 303, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

305. The method of any of claims 299 to 304, wherein one affiliated STA of a non-AP MLD is allowed for setting up links with a plurality of affiliated APs non-collocated in the second virtual AP MLD.

306. The method of any of claims 299 to 305, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

307. The method of any of claims 299 to 304, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

308. The method of any of claims 295 to 307, wherein the first AP is a master AP.

309. A wireless communication method, comprising:
sending, by a first access point (AP), a multi-AP transmit (TX) trigger frame to at least one AP, wherein
the first AP and the at least one AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, the at least one AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

310. The method of claim 309, wherein
a user information field of the multi-AP TX trigger frame comprises an AID field, and a link ID field and/or a link ID extension field, wherein
the AID field indicates an address of an AP participating in multi-AP coordinated transmission for the first non-AP MLD, and the link ID field indicates an ID of a link used by the AP indicated by the AID field, or the link ID extension field indicates the ID of the link used by the AP indicated by the AID field, or the link ID field and the link ID extension field jointly indicate the ID of the link used by the AP indicated by the AID field; or
a user information field of the multi-AP TX trigger frame comprises an AID field and a trigger dependent user information field, wherein
the trigger dependent user information field comprises a multi-link field or a basic multi-link field, and the AID field indicates an address of an AP participating in multi-AP coordinated transmission for the first non-AP MLD, wherein the multi-link field indicates an ID of a link used by the AP indicated by the AID field, or the basic multi-link field indicates the ID of the link used by the AP indicated by the AID field.

311. The method of claim 309 or 310, further comprising:
sending, by the first AP, a data frame to the first non-AP MLD according to information indicated by the multi-AP TX trigger frame.

312. The method of claim 311, further comprising:
receiving, by the first AP, an acknowledgement (ACK) frame sent by the first non-AP MLD, wherein the ACK frame indicates that the first non-AP MLD has successfully received the data frame sent by the first AP.

313. The method of any of claims 309 to 312, wherein the second virtual AP MLD has a virtual MLD upper medium access control (MAC), wherein
the virtual MLD upper MAC is connected to MLD lower MACs of all affiliated APs in the second virtual AP MLD, and the virtual MLD upper MAC manages and controls all the affiliated APs in the second virtual AP MLD.

314. The method of claim 313, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

315. The method of claim 313 or 314, wherein an affiliated AP in the second virtual AP MLD has a non-MLD upper MAC, an MLD lower MAC, and a physical (PHY) layer.

316. The method of claim 315, wherein a plurality of affiliated APs co-located in the second virtual AP MLD share one MLD upper MAC.

317. The method of any of claims 313 to 316, wherein the virtual MLD upper MAC of the second virtual AP MLD manages link assignment for an entire virtual basic service set (VBSS) corresponding to the second virtual AP MLD.

318. The method of any of claims 313 to 317, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

319. The method of any of claims 313 to 318, wherein one affiliated STA of a non-AP MLD is allowed for setting up links with a plurality of affiliated APs non-collocated in the second virtual AP MLD.

320. The method of any of claims 313 to 319, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

321. The method of any of claims 313 to 318, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

322. The method of any of claims 309 to 321, wherein the first AP is a master AP.

323. A wireless communication method, comprising:
receiving, by a second access point (AP), a multi-AP transmit (TX) trigger frame sent by a first AP, wherein
the first AP and the second AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, the second AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

324. The method of claim 323, wherein
a user information field of the multi-AP TX trigger frame comprises an AID field, and a link ID field and/or a link ID extension field, wherein
the AID field indicates an address of an AP participating in multi-AP coordinated transmission for the first non-AP MLD, and the link ID field indicates an ID of a link used by the AP indicated by the AID field, or the link ID extension field indicates the ID of the link used by the AP indicated by the AID field, or the link ID field and the link ID extension field jointly indicate the ID of the link used by the AP indicated by the AID field; or
a user information field of the multi-AP TX trigger frame comprises an AID field and a trigger dependent user information field, wherein
the trigger dependent user information field comprises a multi-link field or a basic multi-link field, and the AID field indicates an address of an AP participating in multi-AP coordinated transmission for the first non-AP MLD, wherein the multi-link field indicates an ID of a link used by the AP indicated by the AID field, or the basic multi-link field indicates the ID of the link used by the AP indicated by the AID field.

325. The method of claim 323 or 324, further comprising:
sending, by the second AP, a data frame to the first non-AP MLD according to information indicated by the multi-AP TX trigger frame.

326. The method of claim 325, further comprising:
receiving, by the second AP, an acknowledgement (ACK) frame sent by the first non-AP MLD, wherein the ACK frame indicates that the first non-AP MLD has successfully received the data frame sent by the second AP.

327. The method of any of claims 323 to 326, wherein the second virtual AP MLD has a virtual MLD upper medium access control (MAC), wherein
the virtual MLD upper MAC is connected to MLD lower MACs of all affiliated APs in the second virtual AP MLD, and the virtual MLD upper MAC manages and controls all the affiliated APs in the second virtual AP MLD.

328. The method of claim 327, wherein the virtual MLD upper MAC is located in any one affiliated AP in all the affiliated APs in the second virtual AP MLD, or the virtual MLD upper MAC is located in a master AP in all the affiliated APs in the second virtual AP MLD, or the virtual MLD upper MAC is located in an independent controller device.

329. The method of claim 327 or 328, wherein an affiliated AP in the second virtual AP MLD has a non-MLD upper MAC, an MLD lower MAC, and a physical (PHY) layer.

330. The method of claim 329, wherein a plurality of affiliated APs co-located in the second virtual AP MLD share one MLD upper MAC.

331. The method of any of claims 327 to 330, wherein the virtual MLD upper MAC of the second virtual AP MLD manages link assignment for an entire virtual basic service set (VBSS) corresponding to the second virtual AP MLD.

332. The method of any of claims 327 to 331, wherein some of links set up between one non-AP MLD and a plurality of affiliated APs co-located in the second virtual AP MLD are used only for transmitting control plane information, and the rest of the links set up between the non-AP MLD and the plurality of affiliated APs co-located in the second virtual AP MLD are used only for transmitting data plane information; or some or all of links set up between the non-AP MLD and the plurality of affiliated APs co-located in the second virtual AP MLD are used for transmitting control plane information and data plane information.

333. The method of any of claims 327 to 332, wherein one affiliated STA of a non-AP MLD is allowed for setting up links with a plurality of affiliated APs non-collocated in the second virtual AP MLD.

334. The method of any of claims 327 to 333, wherein one affiliated STA of a non-AP MLD transmits the same physical layer protocol data unit (PPDU) on a plurality of links corresponding to the second virtual AP MLD, or one affiliated STA of the non-AP MLD transmits different PPDUs on the plurality of links corresponding to the second virtual AP MLD.

335. The method of any of claims 327 to 332, wherein when the first non-AP MLD is an extremely high throughput (EHT) non-AP MLD, the first non-AP MLD only supports association and multi-link setup with one group of affiliated APs co-located in the second virtual AP MLD, and a link ID corresponding to the first non-AP MLD is assigned by the virtual MLD MAC of the second virtual AP MLD.

336. The method of any of claims 232 to 335, wherein the first AP is a master AP.

337. An access-point multi-link device (AP MLD), being a first AP MLD and comprising:
a communication unit configured to send or receive a multi-AP MLD sounding announce frame, wherein
the multi-AP MLD sounding announce frame indicates at least one of: a sequence in which a plurality of AP MLDs perform channel sounding, a time at which the plurality of AP MLDs perform channel sounding, information of links used for the plurality of AP MLDs to perform channel sounding, information of a frequency band used for the plurality of AP MLDs to perform channel sounding, or information of a channel corresponding to the links and/or the frequency band used for the plurality of AP MLDs to perform channel sounding; and wherein
the first AP MLD belongs to a first virtual AP MLD, and a plurality of AP MLDs in the first virtual AP MLD are capable of multi-AP MLD coordinated transmission.

338. A non-access point multi-link device (non-AP MLD), being a first non-AP MLD and comprising:
a communication unit configured to receive a first frame sent by a first AP MLD, wherein
the first frame is sent by the first AP MLD according to information indicated by a multi-AP MLD sounding announce frame, the first non-AP MLD is a non-AP MLD associated with the first AP MLD in all non-AP MLDs that participate in the multi-AP MLD channel sounding, the first AP MLD belongs to a first virtual AP MLD, a plurality of AP MLDs in the first virtual AP MLD are capable of multi-AP MLD coordinated transmission, and the first frame is a null data physical layer protocol data unit announcement (null data PPDU announcement, NDPA) frame or a sounding trigger frame, wherein
the multi-AP MLD sounding announce frame indicates at least one of: a sequence in which a plurality of AP MLDs perform channel sounding, a time at which the plurality of AP MLDs perform channel sounding, information of links used for the plurality of AP MLDs to perform channel sounding, information of a frequency band used for the plurality of AP MLDs to perform channel sounding, or information of a channel corresponding to the links and/or the frequency band used for the plurality of AP MLDs to perform channel sounding; and
when the first frame is an NDPA frame, the NDPA frame indicates a parameter and configuration information of an NDP frame to be sent;
when the first frame is a sounding trigger frame, the sounding trigger frame is used for triggering or requesting the first non-AP MLD to feed back a sounding result.

339. An access-point multi-link device (AP MLD), being a first AP MLD and comprising:
a communication unit configured to send first information to a first non-AP MLD, wherein
the first AP MLD belongs to a first virtual AP MLD, a plurality of AP MLDs in the first virtual AP MLD are capable of multi-AP MLD coordinated transmission, and the first information is used for requesting or indicating the first non-AP MLD to re-map data on s links to *w* links, wherein *s* and *w* each are a positive integer.

340. A non-access point multi-link device (non-AP MLD), being a first non-AP MLD and comprising:
a communication unit configured to receive first information sent by a first AP MLD, wherein
the first AP MLD belongs to a first virtual AP MLD, a plurality of AP MLDs in the first virtual AP MLD are capable of multi-AP MLD coordinated transmission, and the first information is used for requesting or indicating the first non-AP MLD to re-map data on s links to *w* links, wherein s and *w* each are a positive integer.

341. An access-point multi-link device (AP MLD), being a first AP MLD and the AP MLD comprising:
a communication unit configured to send a data sharing announce frame to at least one AP MLD, wherein the first AP MLD and the at least one AP MLD belong to a first virtual AP MLD, a plurality of AP MLDs in the first virtual AP MLD are capable of multi-AP MLD coordinated transmission, and the data sharing announce frame indicates information of a link for transmitting shared data and a non-AP MLD that the shared data belongs to; and
the communication unit being further configured to send the shared data on the link indicated by the data sharing announce frame.

342. An access-point multi-link device (AP MLD), being a second AP MLD and the comprising:
a communication unit configured to receive a data sharing announce frame sent by a first AP MLD, wherein the first AP MLD and the second AP MLD belong to a first virtual AP MLD, a plurality of AP MLDs in the first virtual AP MLD are capable of multi-AP MLD coordinated transmission, and the data sharing announce frame indicates information of a link for transmitting shared data and a non-AP MLD that the shared data belongs to; and
the communication unit being further configured to receive the shared data sent by the first AP MLD on the link indicated by the data sharing announce frame.

343. An access-point multi-link device AP MLD, being a first AP MLD and comprising:
a communication unit configured to send a multi AP MLD transmit (TX) trigger frame to at least one AP MLD, wherein
the first AP MLD and the at least one AP MLD belong to a first virtual AP MLD, a plurality of AP MLDs in the first virtual AP MLD are capable of multi-AP MLD coordinated transmission, the at least one AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

344. An access-point multi-link device (AP MLD), being a second AP MLD and comprising:
a communication unit configured to receive a multi-AP MLD transmit (TX) trigger frame sent by a first AP MLD, wherein
the first AP MLD and the second AP MLD belong to a first virtual AP MLD, a plurality of AP MLDs in the first virtual AP MLD are capable of multi-AP MLD coordinated transmission, the second AP MLD and the first AP MLD jointly participate in multi-AP MLD coordinated transmission for a first non-AP MLD, and the multi-AP MLD TX trigger frame indicates a link, a coordination mode, and a transmission parameter used by each AP MLD participating in multi-AP MLD coordinated transmission for the first non-AP MLD.

345. An access point (AP), being a first AP and comprising:
a communication unit configured to send or receive a multi-AP sounding announce frame, wherein the multi-AP sounding announce frame indicates at least one of: a sequence in which a plurality of APs perform channel sounding, a time at which the plurality of APs perform channel sounding, information of links used for the plurality of APs to perform channel sounding, information of a frequency band used for the plurality of APs to perform channel sounding, or information of a channel corresponding to the links and/or the frequency band used for the plurality of APs to perform channel sounding; and wherein
the first AP belongs to a second virtual AP multi-link device (AP MLD), a plurality of APs in the second virtual AP MLD are capable of multi-AP coordinated transmission, and the plurality of APs are affiliated APs which are non-collocated in the second virtual AP MLD.

346. A non-access point multi-link device (non-AP MLD), being a first non-AP MLD and comprising:
a communication unit configured to receive a second frame sent by a first AP, wherein
the second frame is sent by the first AP according to information indicated by a multi-AP sounding announce frame, the first non-AP MLD is a non-AP MLD associated with the first AP in all non-AP MLDs participating in multi-AP channel sounding, the first AP belongs to a second virtual AP MLD, a plurality of APs in the second virtual AP MLD are capable of multi-AP coordinated transmission, the plurality of APs are affiliated APs non-collocated in the second virtual AP MLD, and the second frame is a null data physical layer protocol data unit announcement (null data PPDU announcement, NDPA) frame or a sounding trigger frame, wherein
the multi-AP sounding announce frame indicates at least one of: a sequence in which plurality of APs perform channel sounding, a time at which the plurality of APs perform channel sounding, information of links used for the plurality of APs to perform channel sounding, information of a frequency band used for the plurality of APs to perform channel sounding, or information of a channel corresponding to the links and/or the frequency band used for the plurality of APs to perform channel sounding; and
when the second frame is an NDPA frame, the NDPA frame indicates a parameter and configuration information of an NDP frame to be sent;
when the second frame is a sounding trigger frame, the sounding trigger frame is used for triggering or requesting the first non-AP MLD to feed back a sounding result.

347. An access point (AP), being a first AP and comprising:
a communication unit configured to send first information to a first non-AP multi-link device (non-AP MLD), wherein
the first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, wherein s and *w* each are a positive integer.

348. A non-access point multi-link device (non-AP MLD), being a first non-AP MLD and comprising:
a communication unit configured to receive first information sent by a first AP, wherein
the first information is used for requesting or indicating the first non-AP MLD to re-map data on s links to *w* links, the first AP belongs to a second virtual AP MLD, and multiple APs in the second virtual AP MLD are capable of multi-AP coordinated transmission, and the multiple APs are affiliated APs non-collocated in the second virtual AP MLD, wherein s and *w* each are a positive integer.

349. An access point (AP), being a first AP and comprising:
a communication unit configured to sending a data sharing announce frame to at least one AP, wherein the first AP and the at least one AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, and the data sharing announce frame indicates information of a link for transmitting shared data and a non-AP MLD that the shared data belongs to; and
the communication unit being further configured to send the shared data on the link indicated by the data sharing announce frame.

350. An access point (AP), being a second AP and comprising:
a communication unit configured to receive a data sharing announce frame sent by a first AP, wherein the first AP and the second AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, and the data sharing announce frame indicates information of a link for transmitting shared data and a non-AP MLD that the shared data belongs to; and
the communication unit being further configured to receive the shared data that is sent by the first AP on the link indicated by the data sharing announce frame.

351. An access point (AP), being a first AP and comprising:
a communication unit configured to send a multi-AP transmit (TX) trigger frame to at least one AP, wherein
the first AP and the at least one AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, the at least one AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

352. An access point AP, being a second AP and comprising:
a communication unit configured to receive a multi-AP transmit (TX) trigger frame sent by a first AP, wherein
the first AP and the second AP belong to a second virtual AP multi-link device (AP MLD), a plurality of APs in the second virtual AP MLD are capable of multi-AP coordinated transmission, the plurality of APs are affiliated APs non-collocated in the second virtual AP MLD, the second AP and the first AP jointly participate in multi-AP coordinated transmission for a first non-AP MLD, and the multi-AP TX trigger frame indicates a link, a coordination mode, and a transmission parameter used by each AP participating in multi-AP coordinated transmission for the first non-AP MLD.

353. An access-point multi-link device (AP MLD), comprising:
a memory configured to store computer programs; and
a processor configured to invoke and execute the computer programs stored in the memory, to cause the AP MLD to perform the method of any of claims 1 to 30, or cause the AP MLD to perform the method of any of claims 61 to 86, or cause the AP MLD to perform the method of any of claims 113 to 168.

354. An access point (AP), comprising:
a memory configured to store computer programs; and
a processor configured to invoke and execute the computer programs stored in the memory, to cause the AP to perform the method of any of claims 169 to 198, or cause the AP to perform the method of any of claims 229 to 254, or cause the AP to perform the method of any of claims 281 to 336.

355. A non-access point multi-link device (non-AP MLD), comprising:
a memory configured to store computer programs; and
a processor configured to invoke and execute the computer programs stored in the memory, to cause the non-AP MLD to perform the method of any of claims 31 to 60, or cause the non-AP MLD to perform the method of any of claims 87 to 112, or cause the non-AP MLD to perform the method of any of claims 199 to 228, or cause the non-AP MLD to perform the method of any of claims 255 to 280.

356. A chip, comprising:
a processor, configured to invoke and execute computer programs from a memory, to cause a device equipped with the chip to perform the method of any of claims 1 to 30, or cause the device equipped with the chip to perform the method of any of claims 31 to 60, or cause the device equipped with the chip to perform the method of any of claims 61 to 86, or cause the device equipped with the chip to perform the method of any of claims 87 to 112, or cause the device equipped with the chip to perform the method of any of claims 113 to 126, or cause the device equipped with the chip to perform the method of any of claims 127 to 140, or cause the device equipped with the chip to perform the method of any of claims 141 to 154, or cause the device equipped with the chip to perform the method of any of the claims 155 to 168, or cause the device equipped with the chip to perform the method of any of claims 169 to 198, or cause the device equipped with the chip to perform the method of any of claims 199 to 228, or cause the device equipped with the chip to perform the method of any of claims 229 to 254, or cause the device equipped with the chip to perform the method of any of claims 255 to 280, or cause the device equipped with the chip to perform the method of any of claims 281 to 294, or cause the device equipped with the chip to perform the method of any of claims 295 to 308, or cause the device equipped with the chip to perform the method of any of claims 309 to 322, or cause the device equipped with the chip to perform the method of any of claims 323 to 336.

357. A computer-readable storage medium, configured to store computer programs which, when executed, are operable to perform the method of any of claims 1 to 30, or perform the method of any of claims 31 to 60, or perform the method of any of claims 61 to 86, or perform the method of any of claims 87 to 112, or perform the method of any of claims 113 to 126, or perform the method of any of claims 127 to 140, or perform the method of any of claims 141 to 154, or perform the method of any of claims 155 to 168, or the method of any of claims 169 to 198, or perform the method of any of claims 199 to 228, or perform the method of any of claims 229 to 254, or perform the method of any of claims 255 to 280, or perform the method of any of claims 281 to 294, or perform the method of any of claims 295 to 308, or perform the method of any of claims 309 to 322, or perform the method of any of claims 323 to 336.

358. A computer program product, comprising computer program instructions which, when executed, are operable to perform the method of any of claims 1 to 30, or perform the method of any of claims 31 to 60, or perform the method of any of claims 61 to 86, or perform the method of any of claims 87 to 112, or perform the method of any of claims 113 to 126, or perform the method of any of claims 127 to 140, or perform the method of any of claims 141 to 154, or perform the method of any of claims 155 to 168, or perform the method of any of claims 169 to 198, or perform the method of any of claims 199 to 228, or perform the method of any of claims 229 to 254, or perform the method of any of claims 255 to 280, or perform the method of any of claims 281 to 294, or perform the method of any of claims 295 to 308, or perform the method of any of claims 309 to 322, or perform the method of any of claims 323 to 336.

359. A computer program, when executed, being operable to perform the method of any of claims 1 to 30, or perform the method of any of claims 31 to 60, or perform the method of any of claims 61 to 86, or perform the method of any of claims 87 to 112, or perform the method of any of claims 113 to 126, or perform the method of any of claims 127 to 140, or perform the method of any of claims 141 to 154, or perform the method of any of claims 155 to 168, or perform the method of any of claims 169 to 198, or the method of any of claims 199 to 228, or the method of any of claims 229 to 254, or perform the method of any of claims 255 to 280, or perform the method of any of claims 281 to 294, or perform the method of any of claims 295 to 308, or perform the method of any of claims 309 to 322, or perform the method of any of claims 323 to 336.
